# EUROPEAN PATENT APPLICATION

(11) **EP 4 847 551 A1**
(43) Date of publication of application: **02.12.2026**
(21) Application number: 25752285.4
(22) Date of filing: 07.02.2025
(51) Int. Cl.: C08G 77/04, C07F 7/18, C08L 83/04, C09K 3/18, G02B 1/14, G02B 1/18

(54) **COMPOSITION CONTAINING SILANE COMPOUND**

(30) Priority: 09.02.2024 JP 2024018824; 13.12.2024 JP 2024218824
(71) Applicant: DAIKIN INDUSTRIES, LTD., Osaka-shi, Osaka 530-0001 (JP)
(72) Inventor: TAKANO, Shinya, Osaka-Shi, Osaka 530-0001 (JP); HARA, Manami, Osaka-Shi, Osaka 530-0001 (JP); NOMURA, Takashi, Osaka-Shi, Osaka 530-0001 (JP)
(74) Representative: Hoffmann Eitle
(86) International application number: PCT/JP2025/004196
(87) International publication number: WO 2025/170062

(57) **Abstract**

An object of the present disclosure is to provide a composition capable of realizing a surface-treating layer with good friction durability and fingerprint removability by wiping.

A compound comprising:
a silane compound represented by the following formula (1):

R^{A}_{α}-_{X}¹-_{R}^{Si1}_{β} (1)

wherein
R^{A} is R¹ₙₐR²₃₋ₙₐSi-(O)ₚₐ-
R¹ is each independently a group represented by -(R⁴-SiR³₂)ₘₐ-R³,
R⁴ is each independently an oxygen atom or a C₁₋₆ alkylene group,
R³ is each independently a hydrocarbon group or R^{1'},
R^{1'} has the same meaning as R¹,
ma is each independently an integer of 1 to 5,
provided that the number of R^{1'} in R¹ is 20 or less,
R² is each independently a hydrocarbon group,
na is an integer of 1 to 3,
pa is 0 or 1,

X¹ is a di- to decavalent group,
R^{Si1} is a monovalent group comprising a Si atom to which a hydroxyl group or a hydrolyzable group is bonded,
α is an integer of 1 to 9, and
β is an integer of 1 to 9; and
a silane compound represented by the following formula (2):

R⁷⁰-CH-CH-X²-R⁷¹ (2)

wherein
X² is a divalent group,
R⁷⁰ is a hydrogen atom or a methyl group,
R⁷¹ is R^{Si2} or R^{A}, and
R^{Si2} is a monovalent group comprising a Si atom to which a hydroxyl group or a hydrolyzable group is bonded.

## Description

### Technical Field

The present disclosure relates to a composition comprising a silane compound.

### Background Art

Certain types of silane compounds are known to be capable of providing excellent water- and oil-repellency when used in surface treatment of a substrate (Patent Literature 1).

### Citation List

### Patent Literature

Patent Literature 1: WO2015/087903

### Summary of Invention

### Technical Problem

An object of the present disclosure is to provide a composition capable of realizing a surface-treating layer with good friction durability and fingerprint removability by wiping.

### Solution to Problem

The present disclosure encompasses the following embodiments.
[1] A compound comprising:
   a silane compound represented by the following formula (1):

      R^{A}_{α}-X¹-R^{Si1}β (1)

      wherein
   R^{A} is R¹ₙₐR²3-ₙₐSi-(O)pₐ-
      R¹ is each independently a group represented by -(R⁴-SiR³₂)ₘₐ-R³,
      R⁴ is each independently an oxygen atom or a C₁₋₆ alkylene group,
      R³ is each independently a hydrocarbon group or R^{1'},
      R^{1'} has the same meaning as R¹,
      ma is each independently an integer of 1 to 5,
      provided that the number of R^{1'} in R¹ is 20 or less,
      R² is each independently a hydrocarbon group,
      na is an integer of 1 to 3,
      pa is 0 or 1,
   X¹ is a di- to decavalent group,
   R^{Si1} is a monovalent group comprising a Si atom to which a hydroxyl group or a hydrolyzable group is bonded,
   α is an integer of 1 to 9, and
   β is an integer of 1 to 9; and
   a silane compound represented by the following formula (2):

      R⁷⁰-CH=CH-X²-R⁷¹ (2)

      wherein
   X² is a divalent group,
   R⁷⁰ is a hydrogen atom or a methyl group,
   R⁷¹ is R^{Si2} or R^{A}, and
   R^{Si2} is a monovalent group comprising a Si atom to which a hydroxyl group or a hydrolyzable group is bonded.
[2] The composition according to [1],
   wherein X¹ is a di- to decavalent group comprising -CO-, -COO-, -OCO-, - NR⁴¹-, -CONR⁴¹-, -NR⁴¹CO-, -OCONR⁴¹-, -NR⁴¹COO-, NR⁴¹-CO-NR⁴¹-, -O-, -S-, - CON=, or R^{S},
   R⁴¹ is a hydrogen atom, an oxyalkylene-containing group, or a C₁₋₆ alkyl group,
   R^{S} is a group represented by the following formula: 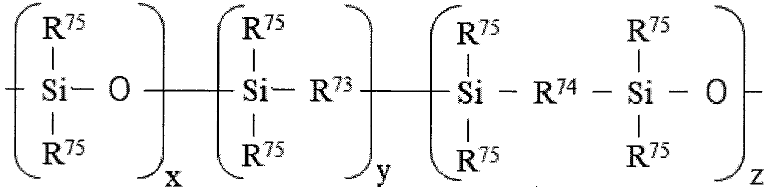 wherein
   R⁷³ is each independently a single bond, a C₁₋₁₂ alkylene group, -R⁷⁶-O-R⁷⁶-, - R⁷⁸-R⁷⁷-R⁷⁸- , -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
   R⁷⁴ is each independently a C₁₋₁₂ alkylene group, -R⁷⁶-O-R⁷⁶-, -R⁷⁸-R⁷⁷-R⁷⁸-, - R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
      R⁷⁶ is each independently a C₁₋₆ alkylene group,
      R⁷⁷ is each independently an optionally substituted arylene group,
      R⁷⁸ is each independently a single bond or a C₁₋₆ alkylene group,
      R⁷⁹ is each independently a single bond or an oxygen atom,
   R⁷⁵ is each independently a hydrocarbon group,
   x is an integer of 0 to 500,
   y is an integer of 0 to 500,
   z is an integer of 0 to 500,
   x + y + z is 1 or more, and
   the occurrence order of the respective repeating units enclosed in parentheses provided with x, y, or z is not limited in the formula.
[3] The composition according to [1] or [2],
   wherein X² is a divalent group comprising -CO-, -COO-, -OCO-, -NR⁴¹-, - CONR⁴¹-, -NR⁴¹CO-, -OCONR⁴¹-, -NR⁴¹COO-, -NR⁴¹-CO-NR⁴¹-, -O-, -S-, -CON=, or R^{S},
   R⁴¹ is a hydrogen atom, an oxyalkylene-containing group, or a C₁₋₆ alkyl group,
   R^{S} is a group represented by the following formula: 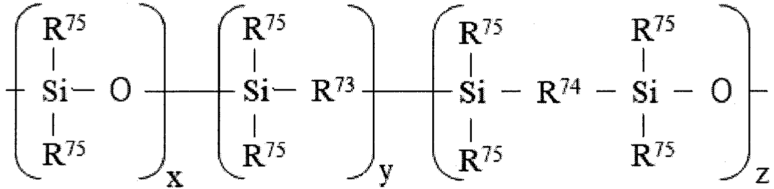
   wherein
   R⁷³ is each independently a single bond, a C₁₋₁₂ alkylene group, -R⁷⁶-O-R⁷⁶-, - R⁷⁸-R⁷⁷-R⁷⁸- , -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
   R⁷⁴ is each independently a C₁₋₁₂ alkylene group, -R⁷⁶-O-R⁷⁶-, -R⁷⁸-R⁷⁷-R⁷⁸-, - R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
      R⁷⁶ is each independently a C₁₋₆ alkylene group,
      R⁷⁷ is each independently an optionally substituted arylene group,
      R⁷⁸ is each independently a single bond, or a C₁₋₆ alkylene group,
      R⁷⁹ is each independently a single bond, or an oxygen atom,
   R⁷⁵ is each independently a hydrocarbon group,
   x is an integer of 0 to 500,
   y is an integer of 0 to 500,
   z is an integer of 0 to 500,
   x + y + z is 1 or more, and
   the occurrence order of the respective repeating units enclosed in parentheses provided with x, y, or z is not limited in the formula.
[4] The composition according to any one of [1] to [3], wherein in the formula (1), R^{Si1} is each independently a group represented by the following formula (S1), (S2), (S3), (S4), or (S5):

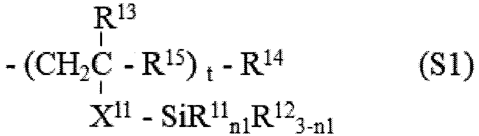

   - SiR¹¹ₙ₁R¹²₃₋ₙ₁ (S2)

   - SiR^{a1}ₖ₁R¹ₗ₁R^{ei}ₘ₁ (S3)

   - CR^{d1}ₖ₂R^{e1}ₗ₂R^{f1}ₘ₂ (S4)

   - NR^{g1}R^{h1} (S5)

   wherein
   R¹¹ is each independently a hydroxyl group or a hydrolyzable group,
   R¹² is each independently a monovalent organic group,
   n1 is each independently an integer of 0 to 3 for each (SiR¹¹ₙ₁R¹²₃₋ₙ₁) unit,
   X¹¹ is each independently a single bond or a divalent organic group,
   R¹³ is each independently a hydrogen atom or a monovalent organic group,
   t is each independently an integer of 2 or more,
   R¹⁴ is each independently a hydrogen atom, a halogen atom, or -X¹¹-SiR¹¹ₙ₁R¹²₃₋ₙ₁,
   R¹⁵ is each independently a single bond, an oxygen atom, an alkylene group having 1 to 6 carbon atoms, or an alkyleneoxy group having 1 to 6 carbon atoms,
   R^{a1} is each independently -Z¹-S₁R²¹ₚ₁R²²_{q1}R²³ᵣ₁,
   Z¹ is each independently a divalent organic group,
   R²¹ is each independently -Z^{1'}-SiW^{21'}_{p1'}R^{22'}_{q1'}R^{23'}_{r1'},
   R²² is each independently a hydroxyl group or a hydrolyzable group,
   R²³ is each independently a monovalent organic group,
   p1 is each independently an integer of 0 to 3,
   q1 is each independently an integer of 0 to 3,
   r1 is each independently an integer of 0 to 3,
   Z^{1'} is each independently a divalent organic group,
   R^{21'} is each independently -Z^{1"}-SiR^{22"}_{q1"}R^{23"}_{r1"},
   R^{22'} is each independently a hydroxyl group or a hydrolyzable group,
   R^{23'} is each independently a monovalent organic group,
   p1' is each independently an integer of 0 to 3,
   q1' is each independently an integer of 0 to 3,
   r1' is each independently an integer of 0 to 3,
   Z^{1"} is each independently a divalent organic group,
   R^{22"} is each independently a hydroxyl group or a hydrolyzable group,
   R^{23"} is each independently a monovalent organic group,
   q1" is each independently an integer of 0 to 3,
   r1" is each independently an integer of 0 to 3,
   R^{b1} is each independently a hydroxyl group or a hydrolyzable group,
   R^{c1} is each independently a monovalent organic group,
   k1 is each independently an integer of 0 to 3,
   11 is each independently an integer of 0 to 3,
   m1 is each independently an integer of 0 to 3,
   provided that, in the formula (S3), at least two Si atoms to which a hydroxyl group or a hydrolyzable group is bonded are present,
   R^{d1} is each independently -Z²-CR³¹ₚ₂R³²_{q2}R³³ᵣ₂,
   Z² is each independently a single bond, an oxygen atom, or a divalent organic group,
   R³¹ is each independently -Z^{2'}-CR^{32'}_{q2'}R^{33'}_{r2'},
   R³² is each independently -Z³-SiR³⁴ₙ₂R³⁵₃₋ₙ₂,
   R³³ is each independently a hydrogen atom, a hydroxyl group, or a monovalent organic group,
   p2 is each independently an integer of 0 to 3,
   q2 is each independently an integer of 0 to 3,
   r2 is each independently an integer of 0 to 3,
   Z^{2'} is each independently a single bond, an oxygen atom, or a divalent organic group,
   R^{32'} is each independently -Z³-SiR³⁴ₙ₂R³⁵₃₋ₙ₂,
   R^{33'} is each independently a hydrogen atom, a hydroxyl group, or a monovalent organic group,
   q2' is each independently an integer of 0 to 3,
   r2' is each independently an integer of 0 to 3,
   Z³ is each independently a single bond, an oxygen atom, or a divalent organic group,
   R³⁴ is each independently a hydroxyl group or a hydrolyzable group,
   R³⁵ is each independently a monovalent organic group,
   n2 is each independently an integer of 0 to 3,
   R^{e1} is each independently -Z³-SiR³⁴ₙ₂R³⁵₃₋ₙ₂,
   R^{f1} is each independently a hydrogen atom, a hydroxyl group, or a monovalent organic group,
   k2 is each independently an integer of 0 to 3,
   l2 is each independently an integer of 0 to 3,
   m2 is each independently an integer of 0 to 3,
   provided that, in the formula (S4), at least two Si atoms to which a hydroxyl group or a hydrolyzable group is bonded are present,
   R^{g1} and R^{h1} are each independently -Z⁴-SiR¹¹ₙ₁R¹²₃₋ₙ₁, -Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂, and
   Z⁴ is each independently a single bond, an oxygen atom, or a divalent organic group,
   provided that, in the formula (S5), at least two Si atoms to which a hydroxyl group or a hydrolyzable group is bonded are present.
[5] The composition according to any one of [1] to [4],
   wherein in the formula (2), R^{Si2} is each independently a group represented by the following formula (S1), (S2), (S3), (S4), or (S5):

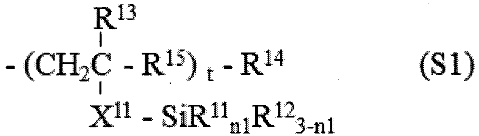

      - SiR¹¹ₙ₁R¹²₃₋ₙ₁ (S2)

      - SiR^{a1}ₖ₁R^{b1}ₗ₁R^{c1}ₘ₁ (S3)

      - CR^{d1}ₖ₂R^{e1}ₗ₂R^{fl1}ₘ₂ (S4)

      - NR^{g1}R^{h1} (S5)

      wherein
   R¹¹ is each independently a hydroxyl group or a hydrolyzable group,
   R¹² is each independently a monovalent organic group,
   n1 is each independently an integer of 0 to 3 for each (SiR¹¹ₙ₁R¹²₃₋ₙ₁) unit,
   X¹¹ is each independently a single bond or a divalent organic group,
   R¹³ is each independently a hydrogen atom or a monovalent organic group,
   t is each independently an integer of 2 or more,
   R¹⁴ is each independently a hydrogen atom, a halogen atom, or -X¹¹-SiR¹¹ₙ₁R¹²₃₋ₙ₁,
   R¹⁵ is each independently a single bond, an oxygen atom, an alkylene group having 1 to 6 carbon atoms, or an alkyleneoxy group having 1 to 6 carbon atoms,
   R^{a1} is each independently -Z¹-SiR²¹ₚ₁R²²_{q1}R²³ᵣ₁;
   Z¹ is each independently a divalent organic group,
   R²¹ is each independently -Z^{1'}-SiR^{21'}_{p1'}R^{22'}_{q1'}R^{23'}_{r1'};
   R²² is each independently a hydroxyl group or a hydrolyzable group,
   R²³ is each independently a monovalent organic group,
   p1 is each independently an integer of 0 to 3,
   q1 is each independently an integer of 0 to 3,
   r1 is each independently an integer of 0 to 3,
   Z^{1'} is each independently a divalent organic group,
   R^{21'} is each independently -Z^{1"}-SiR^{22"}_{q1"}R^{23"}_{r1"};
   R^{22'} is each independently a hydroxyl group or a hydrolyzable group,
   R^{23'} is each independently a monovalent organic group,
   p1' is each independently an integer of 0 to 3,
   q1' is each independently an integer of 0 to 3,
   r1' is each independently an integer of 0 to 3,
   Z^{1"} is each independently a divalent organic group,
   R^{22"} is each independently a hydroxyl group or a hydrolyzable group,
   R^{23"} is each independently a monovalent organic group,
   q^{1"} is each independently an integer of 0 to 3,
   r1" is each independently an integer of 0 to 3,
   R^{b1} is each independently a hydroxyl group or a hydrolyzable group,
   R^{c1} is each independently a monovalent organic group,
   k1 is each independently an integer of 0 to 3,
   11 is each independently an integer of 0 to 3,
   m1 is each independently an integer of 0 to 3,
   provided that, in the formula (S3), at least two Si atoms to which a hydroxyl group or a hydrolyzable group is bonded are present,
   R^{d1} is each independently -Z²-CR³¹ₚ₂R³²_{q2}R³³ᵣ₂,
   Z² is each independently a single bond, an oxygen atom, or a divalent organic group,
   R³¹ is each independently -Z^{2'}-CR^{32'}_{q2'}R^{33'}_{r2'},
   R³² is each independently -Z³-SiR³⁴ₙ₂R³⁵₃₋ₙ₂,
   R³³ is each independently a hydrogen atom, a hydroxyl group, or a monovalent organic group,
   p2 is each independently an integer of 0 to 3,
   q2 is each independently an integer of 0 to 3,
   r2 is each independently an integer of 0 to 3,
   Z^{2'} is each independently a single bond, an oxygen atom, or a divalent organic group,
   R^{32'} is each independently -Z³-SiR³⁴ₙ₂R³⁵₃₋ₙ₂,
   R^{33'} is each independently a hydrogen atom, a hydroxyl group, or a monovalent organic group,
   q2' is each independently an integer of 0 to 3,
   r2' is each independently an integer of 0 to 3,
   Z³ is each independently a single bond, an oxygen atom, or a divalent organic group;
   R³⁴ is each independently a hydroxyl group or a hydrolyzable group,
   R³⁵ is each independently a monovalent organic group,
   n2 is each independently an integer of 0 to 3,
   R^{e1} is each independently -Z³-SiR³⁴ₙ₂R³⁵₃₋ₙ₂,
   R^{f1} is each independently a hydrogen atom, a hydroxyl group, or a monovalent organic group,
   k2 is each independently an integer of 0 to 3,
   l2 is each independently an integer of 0 to 3,
   m2 is each independently an integer of 0 to 3,
   provided that, in the formula (S4), at least two Si atoms to which a hydroxyl group or a hydrolyzable group is bonded are present,
   R^{g1} and R^{h1} are each independently -Z⁴-SiR¹¹ₙ₁R¹²₃₋ₙ₁, -Z⁴-SiR^{a1}ₖ₁R^{b}ₗ₁R^{c1}ₘ₁, or -Z⁴-CR^{d1}ₖ₂R^{e1}ₗ₂R^{f1}ₘ₂, and
   Z⁴ is each independently a single bond, an oxygen atom, or a divalent organic group,
   provided that, in the formula (S5), at least two Si atoms to which a hydroxyl group or a hydrolyzable group is bonded are present.
[6] The composition according to any one of [1] to [5], wherein the silane compound represented by the formula (1) comprises an amide bond in X¹.
[7] The composition according to any one of [1] to [6], wherein the silane compound represented by the formula (2) comprises an amide bond in X².
[8] The composition according to any one of [1] to [7],
   wherein the compound represented by the formula (1) includes one or more compounds selected from the following group (I):

   CH₃-[Si(CH₃)₂O]ₙ₁Si(CH₃)₂-(CH₂)_{H1}-C(=O)NHCH₂CH₂CH₂Si(OCH₃)₃

   CH₃CH₂CH₂CH₂-[Si(CH₃)₂O]ₙ₁Si(CH₃)₂-(CH₂)_{H1}-C(=O)NHCH₂CH₂CH₂Si(OCH₃)₃

   [(CH₃)₃SiO)]₂(CH₃)Si-O-[Si(CH₃)₂O]ₙ₁Si(CH₃)₂-(CH₂)_{H1}- C(=O)NHCH₂CH₂CH₂Si(OCH₃)₃

   [(CH₃)₃SiO)]₃Si-O-[Si(CH₃)₂O]ₙ₁Si(CH₃)₂-(CH₂)_{H1}- C(=O)NHCH₂CH₂CH₂Si(OCH₃)₃

   CH₃-[Si(CH₃)₂O]ₙ₁Si(CH₃)₂-(CH₂)_{H1}-O-(CH₂)_{H2}-C(=O)NHCH₂CH₂CH₂Si(OCH₃)₃

   CH₃CH₂CH₂CH₂-[Si(CH₃)₂O]ₙ₁Si(CH₃)₂-(CH₂)_{H1}-O-(CH₂)_{H2}- C(=O)NHCH₂CH₂CH₂Si(OCH₃)₃

   CH₃-[Si(CH₃)₂O]ₙ₁Si(CH₃)₂-(CH₂)_{H1}-Si(OCH₃)₃

   CH₃CH₂CH₂CH₂-[Si(CH₃)₂O]ₙ₁Si(CH₃)₂-(CH₂)_{H1}-Si(OCH₃)₃

   [(CH₃)₃SiO)]₂(CH₃)Si-O-[Si(CH₃)₂O]ₙ₁Si(CH₃)₂-(CH₂)_{H1}-Si(OCH₃)₃

   [(CH₃)₃SiO)]₃Si-O-[Si(CH₃)₂O]ₙ₁Si(CH₃)₂-(CH₂)_{H1}-Si(OCH₃)₃

   CH₃-[Si(CH₃)₂O]ₙ₁Si(CH₃)₂-(CH₂)_{H1}-C(=O)NHCH₂CH[CH₂CH₂CH₂Si(OCH₃)₃]₂

   CH₃CH₂CH₂CH₂-[Si(CH₃)₂O]ₙ₁Si(CH₃)₂-(CH₂)_{H1}- C(=O)NHCH₂CH[CH₂CH₂CH₂Si(OCH₃)₃]₂

   [(CH₃)₃SiO)]₂(CH₃)Si-O-[Si(CH₃)₂O]ₙ₁Si(CH₃)₂-(CH₂)_{H1}- C(=O)NHCH₂CH[CH₂CH₂CH₂Si(OCH₃)₃]₂

   [(CH₃)₃SiO)]₃Si-O-[Si(CH₃)₂O]ₙ₁Si(CH₃)₂-(CH₂)_{H1}- C(=O)NHCH₂CH[CH₂CH₂CH₂Si(OCH₃)₃]₂

   CH₃-[Si(CH₃)₂O]ₙ₁Si(CH₃)₂-(CH₂)_{H1}-O-(CH₂)_{H2}- C(=O)NHCH₂CH[CH₂CH₂CH₂Si(OCH₃)₃]₂

   CH₃CH₂CH₂CH₂-[Si(CH₃)₂O]ₙ₁Si(CH₃)₂-(CH₂)_{H1}-O-(CH₂)_{H2}- C(=O)NHCH₂CH[CH₂CH₂CH₂Si(OCH₃)₃]₂

   CH₃-[Si(CH₃)₂O]ₙ₁Si(CH₃)₂-(CH₂)_{H1}-CH[CH₂CH₂CH₂Si(OCH₃)₃]₂

   CH₃CH₂CH₂CH₂-[Si(CH₃)₂O]ₙ₁Si(CH₃)₂-(CH₂)_{H1}-CH[CH₂CH₂CH₂Si(OCH₃)₃]₂

   [(CH₃)₃SiO)]₂(CH₃)Si-O-[Si(CH₃)₂O]ₙ₁Si(CH₃)₂-(CH₂)_{H1}- CH[CH₂CH₂CH₂Si(OCH₃)₃]₂

   [(CH₃)₃SiO)]₃Si-O-[Si(CH₃)₂O]ₙ₁Si(CH₃)₂-(CH₂)_{H1}-CH[CH₂CH₂CH₂Si(OCH₃)₃]₂

   CH₃-[Si(CH₃)₂O]ₙ₁Si(CH₃)₂-(CH₂)_{H1}- C(=O)NHCH₂CH[CH₂CH₂CH₂CH₂CH₂CH₂CH₂CH₂CH₂CH₂CH₂Si(OCH₃)₃]₂

   CH₃CH₂CH₂CH₂-[Si(CH₃)₂O]ₙ₁Si(CH₃)₂-(CH₂)_{H1}- C(=O)NHCH₂CH[CH₂CH₂CH₂CH₂CH₂CH₂CH₂CH₂CH₂CH₂CH₂Si(OCH₃)₃]₂

   [(CH₃)₃SiO)]₂(CH₃)Si-O-[Si(CH₃)₂O]ₙ₁Si(CH₃)₂-(CH₂)_{H1}- C(=O)NHCH₂CH[CH₂CH₂CH₂CH₂CH₂CH₂CH₂CH₂CH₂CH₂CH₂Si(OCH₃)₃]₂

   [(CH₃)₃SiO)]₃Si-O-[Si(CH₃)₂O]ₙ₁Si(CH₃)₂-(CH₂)_{H1}- C(=O)NHCH₂CH[CH₂CH₂CH₂CH₂CH₂CH₂CH₂CH₂CH₂CH₂CH₂Si(OCH₃)₃]₂

   CH₃-[Si(CH₃)₂O]ₙ₁Si(CH₃)₂-(CH₂)_{H1}-O-(CH₂)_{H2}- C(=O)NHCH₂CH[CH₂CH₂CH₂CH₂CH₂CH₂CH₂CH₂CH₂CH₂CH₂Si(OCH₃)₃]₂

   CH₃CH₂CH₂CH₂-[Si(CH₃)₂O]ₙ₁Si(CH₃)₂-(CH₂)_{H1}-O-(CH₂)_{H2}- C(=O)NHCH₂CH[CH₂CH₂CH₂CH₂CH₂CH₂CH₂CH₂CH₂CH₂CH₂Si(OCH₃)₃]₂

   CH₃-[Si(CH₃)₂O]ₙ₁Si(CH₃)₂-(CH₂)_{H1}- CH[CH₂CH₂CH₂CH₂CH₂CH₂CH₂CH₂CH₂CH₂CH₂Si(OCH₃)₃]₂

   CH₃CH₂CH₂CH₂-[Si(CH₃)₂O]ₙ₁Si(CH₃)₂-(CH₂)_{H1}- CH[CH₂CH₂CH₂CH₂CH₂CH₂CH₂CH₂CH₂CH₂CH₂Si(OCH₃)₃]₂

   [(CH₃)₃SiO)]₂(CH₃)Si-O-[Si(CH₃)₂O]ₙ₁Si(CH₃)₂-(CH₂)_{H1}- CH[CH₂CH₂CH₂CH₂CH₂CH₂CH₂CH₂CH₂CH₂CH₂Si(OCH₃)₃]₂

   [(CH₃)₃SiO)]₃Si-O-[Si(CH₃)₂O]ₙ₁Si(CH₃)₂-(CH₂)_{H1}- CH[CH₂CH₂CH₂CH₂CH₂CH₂CH₂CH₂CH₂CH₂CH₂Si(OCH₃)₃]₂

   CH₃-[Si(CH₃)₂O]ₙ₁Si(CH₃)₂-(CH₂)_{H1}-C(=O)N[CH₂CH₂CH₂Si(OCH₃)₃]₂

   CH₃CH₂CH₂CH₂-[Si(CH₃)₂O]ₙ₁Si(CH₃)₂-(CH₂)_{H1}-C(=O)N[CH₂CH₂CH₂Si(OCH₃)₃]₂

   [(CH₃)₃SiO)]₂(CH₃)Si-O-[Si(CH₃)₂O]ₙ₁Si(CH₃)₂-(CH₂)_{H1}- C(=O)N[CH₂CH₂CH₂Si(OCH₃)₃]₂

   [(CH₃)₃SiO)]₃Si-O-[Si(CH₃)₂O]ₙ₁Si(CH₃)₂-(CH₂)_{H1}- C(=O)N[CH₂CH₂CH₂Si(OCH₃)₃)₂

   CH₃-[Si(CH₃)₂O]ₙ₁Si(CH₃)₂-(CH₂)_{H1}-O-(CH₂)_{H2}-C(=O)N[CH₂CH₂CH₂Si(OCH₃)₃]₂

   CH₃CH₂CH₂CH₂-[Si(CH₃)₂O]ₙ₁Si(CH₃)₂-(CH₂)_{H1}-O-(CH₂)_{H2}- C(=O)N[CH₂CH₂CH₂Si(OCH₃)₃]₂

   CH₃-[Si(CH₃)₂O]ₙ₁Si(CH₃)₂-(CH₂)_{H1}-N[CH₂CH₂CH₂Si(OCH₃)₃]₂

   CH₃CH₂CH₂CH₂-[Si(CH₃)₂O]ₙ₁Si(CH₃)₂-(CH₂)_{H1}-N[CH₂CH₂CH₂Si(OCH₃)₃]₂

   [(CH₃)₃SiO)]₂(CH₃)Si-O-[Si(CH₃)₂O]ₙ₁Si(CH₃)₂-(CH₂)_{H1}- N[CH₂CH₂CH₂Si(OCH₃)₃]₂

   [(CH₃)₃SiO)]₃Si-O-[Si(CH₃)₂O]ₙ₁Si(CH₃)₂-(CH₂)_{H1}-N[CH₂CH₂CH₂Si(OCH₃)₃]₂

   CH₃-[Si(CH₃)₂O]ₙ₁Si(CH₃)₂-(CH₂)_{H1}-C(=O)NHCH₂C[CH₂CH₂CH₂Si(OCH₃)₃]₃

   CH₃CH₂CH₂CH₂-[Si(CH₃)₂O]ₙ₁Si(CH₃)₂-(CH₂)_{H1}- C(=O)NHCH₂C[CH₂CH₂CH₂Si(OCH₃)₃]₃

   [(CH₃)₃SiO)]₂(CH₃)Si-O-[Si(CH₃)₂O]ₙ₁Si(CH₃)₂-(CH₂)_{H1}- C(=O)NHCH₂C[CH₂CH₂CH₂Si(OCH₃)₃]₃

   [(CH₃)₃SiO)]₃Si-O-[Si(CH3)₂O]ₙ₁Si(CH₃)₂-(CH₂)_{H1}- C(=O)NHCH₂C[CH₂CH₂CH₂Si(OCH₃)₃]₃

   CH₃-[Si(CH₃)₂O]ₙ₁Si(CH₃)₂-(CH₂)_{H1}-O-(CH₂)_{H2}- C(=O)NHCH₂C[CH₂CH₂CH₂Si(OCH₃)₃]₃

   CH₃CH₂CH₂CH₂-[Si(CH₃)₂O]ₙ₁Si(CH₃)₂-(CH₂)_{H1}-O-(CH₂)_{H2}- C(=O)NHCH₂C[CH₂CH₂CH₂Si(OCH₃)₃]₃

   CH₃-[Si(CH₃)₂O]ₙ₁Si(CH₃)₂-(CH₂)_{H1}-C[CH₂CH₂CH₂Si(OCH₃)₃]₃

   CH₃CH₂CH₂CH₂-[Si(CH₃)₂O]ₙ₁Si(CH₃)₂-(CH₂)_{H1}-C[CH₂CH₂CH₂Si(OCH₃)₃]₃

   [(CH₃)₃SiO)]₂(CH₃)Si-O-[Si(CH₃)₂O]ₙ₁Si(CH₃)₂-(CH₂)_{H1}- C[CH₂CH₂CH₂Si(OCH₃)₃]₃

   [(CH₃)₃SiO)]₃Si-O-[Si(CH₃)₂O]ₙ₁Si(CH₃)₂-(CH₂)_{H1}-C[CH₂CH₂CH₂Si(OCH₃)₃]₃

   [(CH₃)₃SiO)]₂(CH₃)Si-(CH₂)_{H1}-C(=O)NHCH₂CH₂CH₂Si(OCH₃)₃

   [(CH₃)₃SiO)]₃Si-(CH₂)ui-C(=O)NHCH₂CH₂CH₂Si(OCH₃)₃

   [(CH₃)₃SiO)]₂(CH₃)Si-(CH₂)_{H1}-Si(OCH₃)₃

   [(CH₃)₃SiO)]₃Si-(CH₂)_{H1}-Si(OCH₃)₃

   [(CH₃)₃SiO)]₂(CH₃)Si-(CH₂)_{H1}-C(=O)NHCH₂CH[CH₂CH₂CH₂Si(OCH₃)₃]₂

   [(CH₃)₃SiO)]₃Si-(CH₂)_{H1}-C(=O)NHCH₂CH[CH₂CH₂CH₂Si(OCH₃)₃]₂

   [(CH₃)₃SiO)]₂(CH₃)Si-(CH₂)_{H1}-CH[CH₂CH₂CH₂Si(OCH₃)₃]₂

   [(CH₃)₃SiO)]₃Si-(CH₂)_{H1}-CH[CH₂CH₂CH₂Si(OCH₃)₃]₂

   [(CH₃)₃SiO)]₂(CH₃)Si-(CH₂)_{H1}- C(=O)NHCH₂CH[CH₂CH₂CH₂CH₂CH₂CH₂CH₂CH₂CH₂CH₂CH₂Si(OCH₃)₃]₂

   [(CH₃)₃SiO)]₃Si-(CH₂)_{H1}- C(=O)NHCH₂CH[CH₂CH₂CH₂CH₂CH₂CH₂CH₂CH₂CH₂CH₂CH₂Si(OCH₃)₃]₂

   [(CH₃)₃SiO)]₂(CH₃)Si-(CH₂)_{H1}- CH[CH₂CH₂CH₂CH₂CH₂CH₂CH₂CH₂CH₂CH₂CH₂Si(OCH₃)₃]₂

   [(CH₃)₃SiO)]₃Si-(CH₂)_{H1}- CH[CH₂CH₂CH₂CH₂CH₂CH₂CH₂CH₂CH₂CH₂CH₂Si(OCH₃)₃]₂

   [(CH₃)₃SiO)]₂(CH₃)Si-(CH₂)_{H1}-C(=O)N[CH₂CH₂CH₂Si(OCH₃)₃]₂

   [(CH₃)₃SiO)]₃Si-(CH₂)_{H1}-C(=O)N[CH₂CH₂CH₂Si(OCH₃)₃]₂

   [(CH₃)₃SiO)]₂(CH₃)Si-(CH₂)_{H1}-N[CH₂CH₂CH₂Si(OCH₃)₃]₂

   [(CH₃)₃SiO)]₃Si-(CH₂)_{H1}-N[CH₂CH₂CH₂Si(OCH₃)₃]₂

   [(CH₃)₃SiO)]₂(CH₃)Si-(CH₂)_{H1}-C(=O)NHCH₂C[CH₂CH₂CH₂Si(OCH₃)₃]₃

   [(CH₃)₃SiO)]₃Si-(CH₂)_{H1}-C(=O)NHCH₂C[CH₂CH₂CH₂Si(OCH₃)₃]₃

   [(CH₃)₃SiO)]₂(CH₃)Si-(CH₂)_{H1}-C[CH₂CH₂CH₂Si(OCH₃)₃]₃

   [(CH₃)₃SiO)]₃Si-(CH₂)_{H1}-C[CH₂CH₂CH₂Si(OCH₃)₃]₃

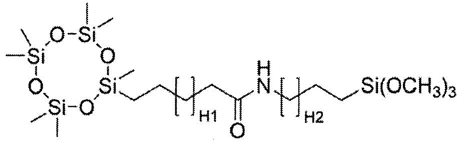

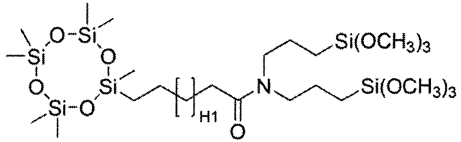

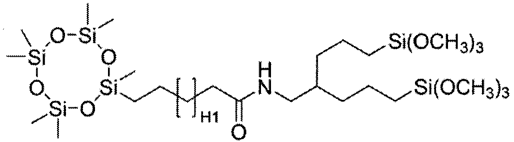

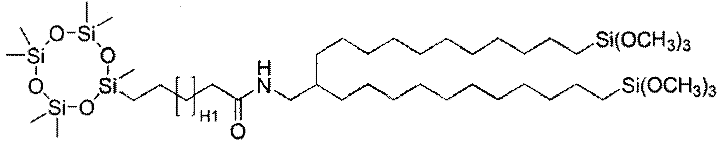

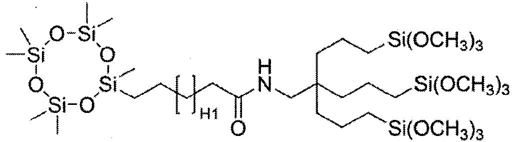

   CH₃CH₂CH₂CH₂-[Si(CH₃)₂O]ₙ₁Si(CH₃)₂-(CH₂)_{H1}-O-(CH₂)_{H2}-C(CH₂CH₃)[CH₂OC(=O)NHCH₂CH₂CH₂Si(OCH₃)₃]₂

   CH₃-[Si(CH₃)₂O]ₙ₁Si(CH₃)₂-(CH₂)_{H1}-O-(CH₂)_{H2}- C(CH₂CH₃)[CH₂OC(=O)NHCH₂CH₂CH₂Si(OCH₃)₃]₂

   CH₃CH₂CH₂CH₂-[Si(CH₃)₂O]ₙ₁Si(CH₃)₂-(CH₂)_{H1}-O-(CH₂)_{H2}- C(CH₂CH₃)[CH₂OC(=O)NHCH₂CH₂OC(=O)CH(CH₃)CH₂Si(OCH₃)₃]₂

   CH₃-[Si(CH₃)₂O]ₙ₁Si(CH₃)₂-(CH₂)_{H1}-O-(CH₂)_{H2}- C(CH₂CH₃)[CH₂OC(=O)NHCH₂CH₂OC(=O)CH(CH₃)CH₂Si(OCH₃)₃]₂

   CH₃CH₂CH₂CH₂-[Si(CH₃)₂O]ₙ₁Si(CH₃)₂-(CH₂)_{H1}-O-(CH₂)_{H2}- C[CH₂OC(=O)NHCH₂CH₂CH₂Si(OCH₃)₃]₃

   CH₃-[(Si(CH₃)₂O)]ₙ₁Si(CH₃)₂-(CH₂)_{H1}-O-(CH₂)_{H2}- C[CH₂₀C(=O)NHCH₂CH₂CH₂Si(OCH₃)₃]₃

   [CH₃CH₂CH₂CH₂-[(Si(CH₃)₂O)]ₙ₁Si(CH₃)₂-(CH₂)_{H1}-O-(CH₂)_{H2}-]₂- C[CH₂OC(=O)NHCH₂CH₂CH₂Si(OCH₃)₃]₂

   [CH₃-[(Si(CH₃)₂O)]ₙ₁Si(CH₃)₂-(CH₂)_{H1}-O-(CH₂)_{H2}-]₂- C[CH₂OC(=O)NHCH₂CH₂CH₂Si(OCH₃)₃]₂

   CH₃CH₂CH₂CH₂-[Si(CH₃)₂O]ₙ₁Si(CH₃)₂-(CH₂)_{H1}-O-(CH₂)_{H2}- OC(=O)NHCH₂CH₂CH₂Si(OCH₃)₃

   CH₃-[Si(CH₃)₂O]ₙ₁Si(CH₃)₂-(CH₂)_{H1}-O-(CH₂)_{H2}-OC(=O)NHCH₂CH₂CH₂Si(OCH₃)₃

   CH₃CH₂CH₂CH₂-[Si(CH₃)₂O]ₙ₁Si(CH₃)₂-(CH₂)_{H1}-O-(CH₂)_{H2}- OC(=O)NHCH₂CH₂OC(=O)CH(CH₃)CH₂Si(OCH₃)₃

   CH₃-[Si(CH₃)₂O]ₙ₁Si(CH₃)₂-(CH₂)_{H1}-O-(CH₂)_{H2}- OC(=O)NHCH₂CH₂OC(=O)CH(CH₃)CH₂Si(OCH₃)₃

   [CH_{3C}H₂CH₂CH₂-[Si(CH₃)₂O]ₙ₁Si(CH₃)₂-(CH₂)_{H1}-O-(CH₂)_{H2}-]₃C- CH₂OC(=O)NHCH₂CH₂CH₂Si(OCH₃)₃

   [CH₃-[Si(CH₃)₂O]ₙ₁Si(CH₃)₂-(CH₂)_{H1}-O-(CH₂)_{H2}-]₃C- CH₂OC(=O)NHCH₂CH₂CH₂Si(OCH₃)₃

   [CH₃CH₂CH₂CH₂-[(Si(CH₃)₂O)]ₙ₁Si(CH₃)₂-(CH₂)_{H1}-O- (CH₂)_{H2}-]₂C(CH₂CH₃)[CH₂OC(=O)NHCH₂CH₂CH₂Si(OCH₃)₃]

   [CH₃-[(Si(CH₃)₂O)]ₙ₁Si(CH₃)₂-(CH₂)_{H1}-O- (CH₂)_{H2}-]₂C(CH₂CH₃)[CH₂OC(=O)NHCH₂CH₂CH₂Si(OCH₃)₃]

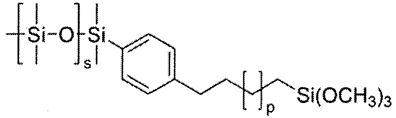

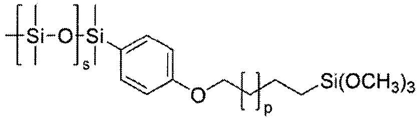

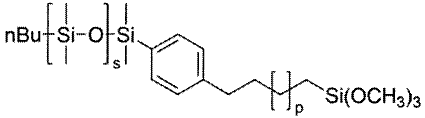

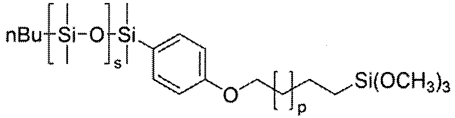

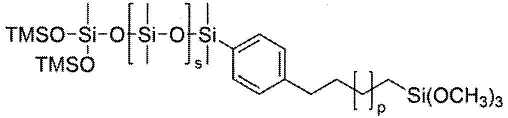

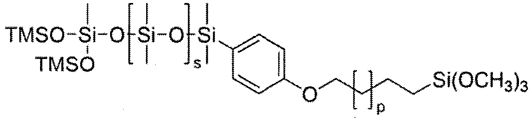

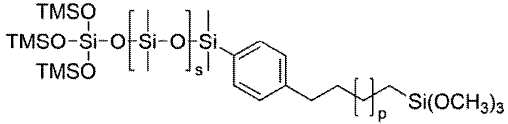

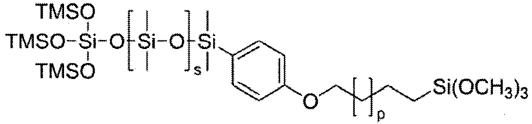

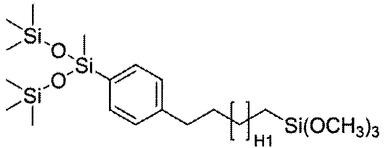

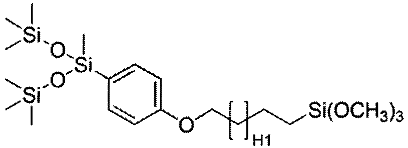

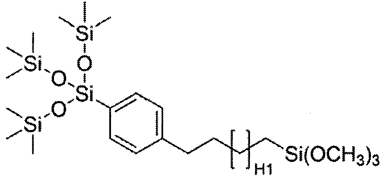

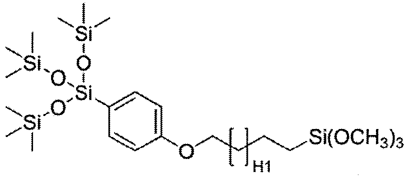

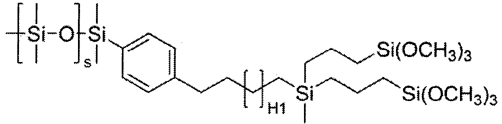

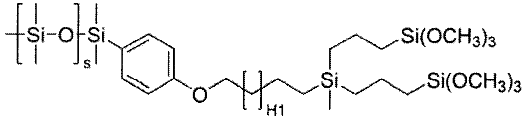

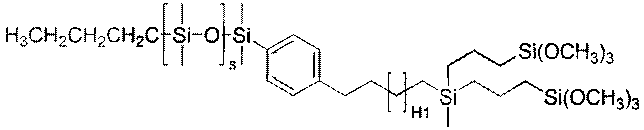

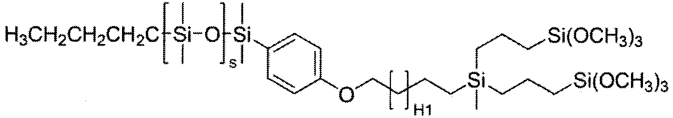

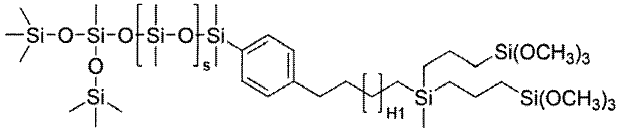

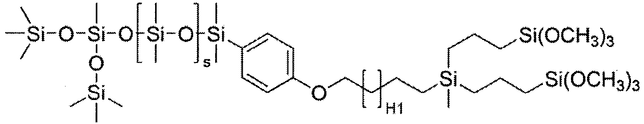

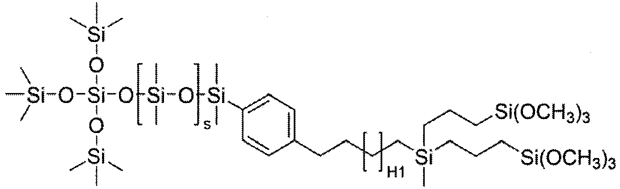

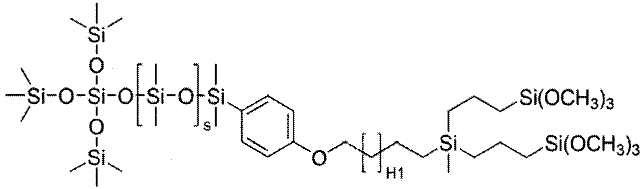

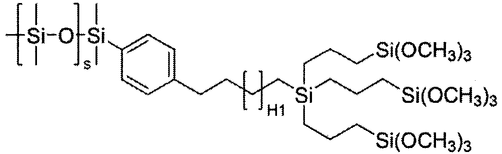

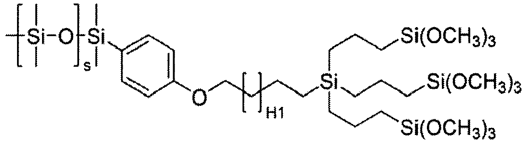

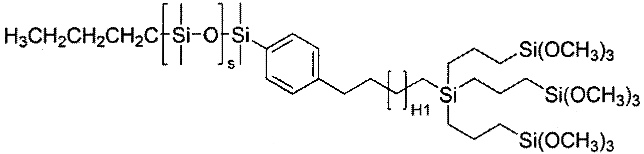

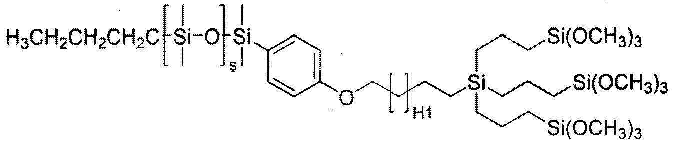

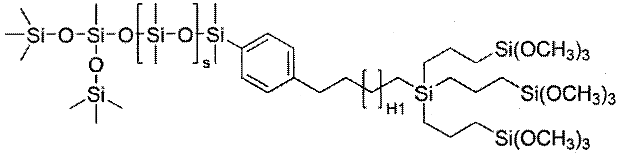

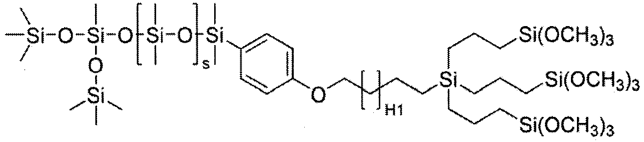

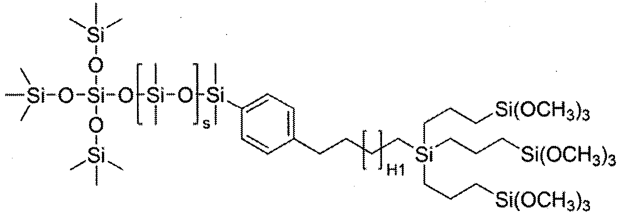

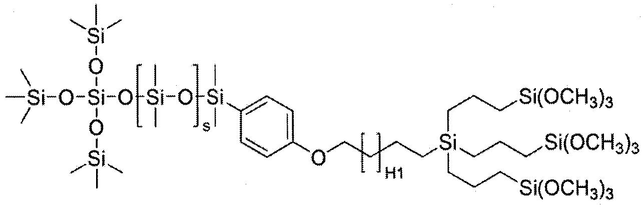

   wherein TMS is a trimethylsilyl group, n1 and s are each independently an integer of 0 to 100, and H1 and H2 are each independently an integer of 1 to 50.
[9] The composition according to [8],
   wherein n1 and s are each independently 0 or 1,
   p and H1 are each independently 8 to 40, and
   H2 is each independently 1 to 10.
[10] The composition according to [8],
   wherein n1 and s are each independently 5 to 100,
   p and H1 are each independently 8 to 40, and
   H2 is each independently an integer of 1 to 10.
[11] The composition according to any one of [1] to [10],
   wherein the compound represented by the formula (1) includes one or more compounds selected from the following group (I):

   (CH₃)₃Si-(OSi(CH₃)₂)_{nI}-(CH₂)₁₀-CON[CH₂CH₂CH₂Si(OCH₃)₃]₂

   (CH₃)₃Si-(OSi(CH₃)₂)_{nI}-(CH₂)₂₂-CON[CH₂CH₂CH₂)₃Si(OCH₃)₃]₂

   (CH₃)₃Si-(OSi(CH₃)₂)_{nI}-(CH₂)₁₀-CONH-CH₂C[CH₂CH₂CH₂Si(OCH₃)₃]₃

   [(CH₃)₃SiO]₂CH₃SiO(Si(CH₃)₂O)_{nI}Si-(CH₃)₂-(CH₂)₂₂- CONHCH₂CH[CH₂CH₂CH₂Si(OCH₃)₃]₂

   CH₃(Si(CH₃)₂O)ₙ₁Si(CH₃)₂(CH₂)₃₄CON((CH₂)₃Si(OCH₃)₃)₂

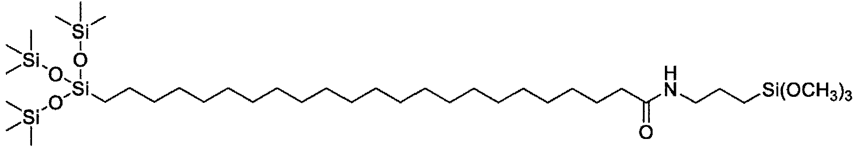

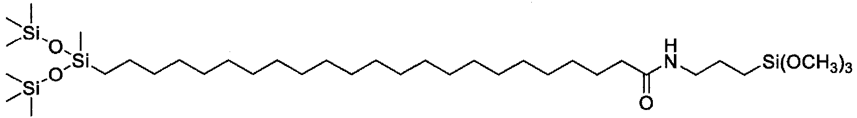

   wherein nI each independently represents an integer of 10 to 80.
[12] The composition according to any one of [1] to [11],
   wherein the compound represented by the formula (2) includes one or more compounds selected from the following group (II):

   [(CH₃)₃SiO]₂CH₃Si-(OSi(CH₃)₂)_{nII}-(CH₂)₂₂-CONH-CH₂CH(CH₂CH=CH₂)₂

   (CH₃)₃Si-(OSi(CH₃)₂)_{nII}-(CH₂)₁₀-CON(CH₂CH=CH₂)₂

   (CH₃)₃Si-(OSi(CH₃)₂)_{nII}-(CH₂)₁₀-CONH-CH₂C(CH₂CH=CH₂)₃

   (CH₃)₃Si-(OSi(CH₃)₂)_{nII}-(CH₂)₂₂-CONH-CH₂CH(CH₂CH=CH₂)₂

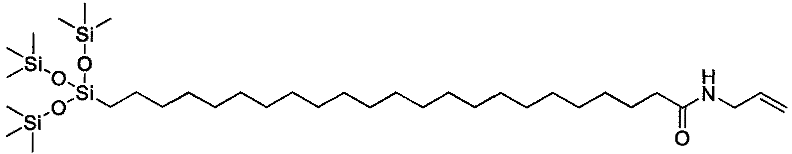

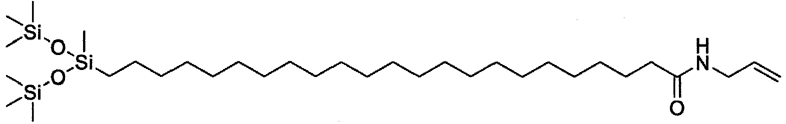

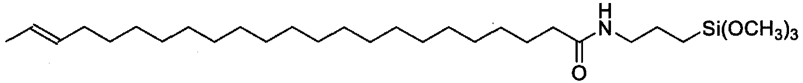

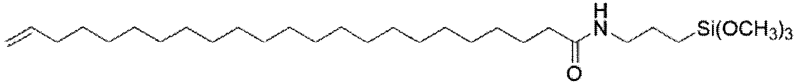

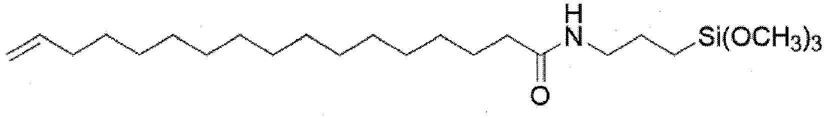

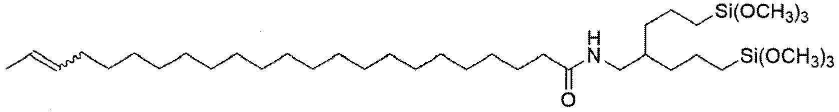

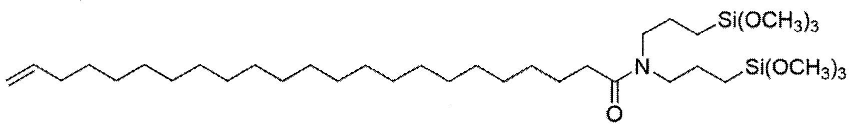

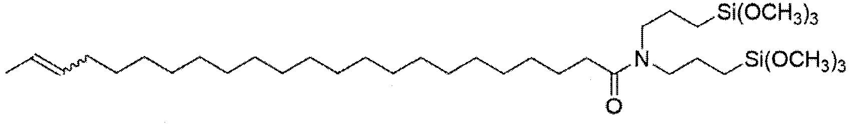

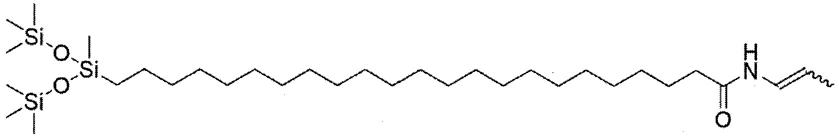

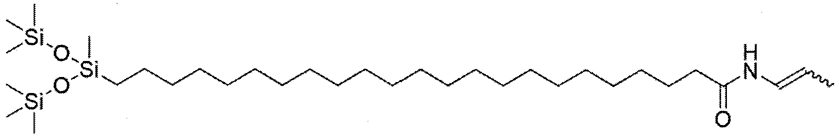

   wherein nII each independently represents an integer of 10 to 80.
[13] The composition according to any one of [1] to [12], wherein the content of the silane compound represented by the formula (2) is 0.01 mol or more and 99.9 mol or less per 100 mol of the silane compound represented by the formula (1).
[14] The composition according to any one of [1] to [13], wherein the content of the silane compound represented by the formula (2) is 0.01 mol or more and 50.0 mol or less per 100 mol of the silane compound represented by the formula (1).
[15] The composition according to any one of [1] to [14], wherein the content of the silane compound represented by the formula (2) is 0.01 mol or more and 10.0 mol or less per 100 mol of the silane compound represented by the formula (1).
[16] The composition according to any one of [1] to [15], wherein the content of the compound represented by the formula (2) is 0.1 to 30% by mass based on the total content of the compound represented by the formula (1) and the compound represented by the formula (2).
[17] A surface-treating agent comprising the composition according to any one of [1] to [16].
[18] The surface-treating agent according to [17], comprising a condensed product of the composition according to any one of [1] to [16].
[19] The surface-treating agent according to [17] or [18], which is for vacuum deposition.
[20] The surface-treating agent according to [17] or [18], which is for wet coating.
[21] A pellet comprising the surface-treating agent according to any one of [17] to [20].
[22] An article comprising a substrate, and a layer formed on the substrate from the surface-treating agent according to any one of [1] to [16].
[23] The article according to [22] comprising, between the substrate and the layer, a silicon oxide-containing intermediate layer.
[24] The article according to [23], wherein the intermediate layer further comprises an alkali metal atom.
[25] The article according to [24], wherein the alkali metal atom is at least partially a sodium atom.
[26] The article according to any one of [22] to [25], which is an optical member.
[27] The article according to any one of [22] to [26], which is a display.

### Advantageous Effects of Invention

The present disclosure can realize a surface-treating layer with good friction durability and fingerprint removability by wiping.

### Description of Embodiments

The term "monovalent organic group" as used herein refers to a carbon-containing monovalent group. The monovalent organic group is not limited, and may be a hydrocarbon group or a derivative thereof. The derivative of a hydrocarbon group refers to a group that has one or more of N, O, S, Si, amide, sulfonyl, siloxane, carbonyl, carbonyloxy, and the like at the terminal or in the molecular chain of the hydrocarbon group. The term simply referred to as an "organic group" means a monovalent organic group. The term "divalent organic group" refers to a carbon-containing divalent group. The divalent organic group may be, for example, a divalent group obtained by further removing one hydrogen atom from the organic group. Similarly, an organic group having a valence of 3 or more refers to a group obtained by removing a predetermined number of hydrogen atoms from an organic group.

The "hydrocarbon group" as used herein refers to a group comprising carbon and hydrogen and a group in which a hydrogen atom is removed from the hydrocarbon. Examples of the hydrocarbon group include, but are not limited to, C₁₋₃₀ hydrocarbon groups, such as an aliphatic hydrocarbon group and an aromatic hydrocarbon group. The "aliphatic hydrocarbon group" may be linear, branched, or cyclic, and may be saturated or unsaturated. The hydrocarbon group may comprise one or more ring structures. The hydrocarbon group may be substituted with one or more substituents.

Examples of the substituent of the "hydrocarbon group" as used herein include, but are not limited to, a halogen atom; and one or more groups selected from a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5- to 10-membered heterocyclyl group, a 5- to 10-membered unsaturated heterocyclyl group, a C₆₋₁₀ aryl group, and a 5- to 10-membered heteroaryl group each optionally substituted with one or more halogen atoms.

The "hydrolyzable group" as used herein refers to a group that can undergo a hydrolysis reaction, i.e., refers to a group that can be removed from the main backbone of the compound by a hydrolysis reaction. Examples of the hydrolyzable group include -OR^{h}, -OCOR^{h}, -O-N=CR^{h}₂, -NR^{h}₂, -NHR^{h}, -NCO, or halogen (in these formulae, R^{h} represents a substituted or unsubstituted alkyl group having 1 to 4 carbon atoms), and -OR^{h} (i.e., an alkoxy group) is preferable. Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable.

The "arylene group" as used herein refers to a divalent aromatic group. The arylene group may be either a monocyclic aromatic group or a polycyclic aromatic group. The arylene group is, for example, a divalent 1- to 3-ring aromatic group, and specific examples thereof include divalent groups formed by removing two hydrogen atoms from benzene, naphthalene, anthracene, fluorene, or phenanthrene, as shown below. The arylene group may be substituted with one or more substituents. Note that the bond positions may be at any position.

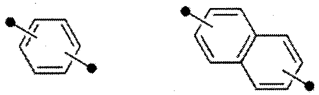

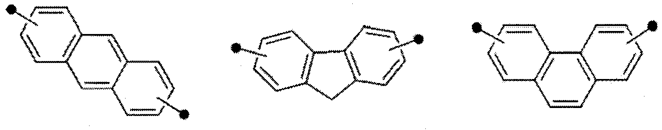

A compound of the present disclosure comprises:
a silane compound represented by the following formula (1):

   R^{A}_{α}-X¹-R^{Si1}_{β}

   wherein
R^{A} is R¹ₙₐR²₃₋ₙₐSi-(O)ₚₐ-
   R¹ is each independently a group represented by -(R⁴-SiR³₂)ₘₐ-R³,
   R⁴ is each independently an oxygen atom or a C₁₋₆ alkylene group,
   R³ is each independently a hydrocarbon group or R^{1'},
   R^{1'} has the same meaning as R¹,
   ma is each independently an integer of 1 to 5,
   provided that the number of R^{1'} in R¹ is 20 or less,
   R² is each independently a hydrocarbon group,
   na is an integer of 1 to 3,
   pa is 0 or 1,
X¹ is a di- to decavalent group,
R^{Si1} is a monovalent group comprising a Si atom to which a hydroxyl group or a hydrolyzable group is bonded,
α is an integer of 1 to 9, and
β is an integer of 1 to 9; and
a silane compound represented by the following formula (2):

   R⁷⁰-CH=CH-X²-R⁷¹ (2)

   wherein
X² is a divalent group,
R⁷⁰ is a hydrogen atom or a methyl group,
R⁷¹ is R^{Si2} or R^{A},
R^{Si2} is α monovalent group comprising a Si atom to which a hydroxyl group or a hydrolyzable group is bonded.

The composition of the present disclosure comprises the compound represented by the formula (1) and the compound represented by the formula (2), and therefore, can realize a surface-treating layer with good friction durability and fingerprint removability by wiping. While the present disclosure should not be construed as being limited to any particular theory, the reason why the composition of the present disclosure can exhibit such effects is considered to be as follows. Specifically, the composition of the present disclosure comprises, in addition to the silane compound represented by the formula (1), a silane compound having a vinyl group or a 1-propenyl group. Therefore, it is considered that when a surface-treating layer is formed using such a composition, the surface-treating layer can be formed with higher density, and thus, friction durability and fingerprint removability by wiping can be improved.

In the present disclosure, R¹ₙₐR²₃₋ₙₐSi-(O)ₚₐ- in R^{A} is also referred to as the group A.

R¹ is each independently a group represented by -(R⁴-S₁R³₂)ₘₐ-R³,

R⁴ is each independently an oxygen atom or a C₁₋₆ alkylene group.

The C₁₋₆ alkylene group in R⁴ may be linear or may be branched. The C₁₋₆ alkylene group is preferably a C₁₋₄ alkylene group, and more preferably a C₂₋₄ alkylene group.

In one embodiment, R⁴ is O.

In one embodiment, some R⁴ groups are O, and other R⁴ groups are C₁₋₆ alkylene groups.

R³ is each independently a hydrocarbon group or R^{1'}.

The hydrocarbon group in R³ may preferably be an alkyl group or an aryl group.

The alkyl group may be linear or may be branched. The alkyl group is preferably a C₁₋₆ alkyl group, and more preferably a C₁₋₄ alkyl group. The alkyl group is particularly preferably a methyl group, an ethyl group, a n-propyl group, an iso-propyl group, a n-butyl group, a tert-butyl group, or a n-butyl group.

The aryl group may be monocyclic or may be polycyclic. The aryl is preferably a C₆₋₂₀ aryl group, and more preferably a C₆₋₁₀ aryl group. The aryl group is particularly preferably a phenyl group.

R³ is preferably an alkyl group, and more preferably a C₁₋₄ alkyl group, and even more preferably a methyl group or a n-butyl group.

In another embodiment, R³ is a methyl group.

In another embodiment, R³ is a n-butyl group.

R^{1'} has the same meaning as R¹. That is, R^{1'} is -(R⁴-SiR³₂)ₘₐ-R³. However, in R¹, the number of R^{1'} is 20 or less, preferably 10 or less, more preferably 6 or less, and even more preferably 3 or less.

In one embodiment, R³ is each independently a hydrocarbon group or R^{1'}.

In a preferable embodiment, R³ is each independently a hydrocarbon group.

In one embodiment, R³ is -(R^{4'}-SiR^{3'}₂)_{ma'}-R^{3'}
wherein
R^{3'} is each independently a hydrocarbon group or -(R⁴-S₁R³₂)ₘₐ-R³,
at least one R^{3'} is -(R⁴-S₁R³₂)ₘₐ-R³,
   R³ is each independently a hydrocarbon group,
   R⁴ is each independently an oxygen atom or a C₁₋₆ alkylene group,
   ma is each independently an integer of 1 to 5,
R^{4'} is each independently an oxygen atom or a C₁₋₆ alkylene group, and
ma' is each independently an integer of 1 to 5.

In another embodiment, in one embodiment, R³ is -(R^{4'}-SiR^{3'}₂)_{ma'}-R^{3'} wherein
R^{3'} is each independently a hydrocarbon group or -(R^{4"}-SiR^{3"}₂)_{ma"}-R^{3"},
at least one R^{3'} is -(R^{4"}-SiR^{3"}₂)_{ma"}-R^{3"},
   R^{3"} is each independently a hydrocarbon group or -(R⁴-SiR³₂)ₘₐ-R³,
   at least one R^{3"} is -(R⁴-SiR³₂)ₘₐ-R³,
      R³ is each independently a hydrocarbon group,
      R⁴ is each independently an oxygen atom or a C₁₋₆ alkylene group,
      ma is each independently an integer of 1 to 5,
   R^{4"} is each independently an oxygen atom or a C₁₋₆ alkylene group,
   ma" is each independently an integer of 1 to 5,
R^{4'} is each independently an oxygen atom or a C₁₋₆ alkylene group, and
ma' is each independently an integer of 1 to 5.

ma is each independently an integer of 1 to 5, and preferably 1 or 2.

R² is each independently a hydrocarbon group.

The hydrocarbon group in R² may preferably be an alkyl group or an aryl group.

The alkyl group may be linear or may be branched. The alkyl group is preferably a C₁₋₆ alkyl group, and more preferably a C₁₋₄ alkyl group. The alkyl group is particularly preferably a methyl group, an ethyl group, a n-propyl group, an iso-propyl group, a n-butyl group, or a tert-butyl group.

The aryl group may be monocyclic or may be polycyclic. The aryl group is preferably a C₆₋₂₀ aryl group, and more preferably a C₆₋₁₀ aryl group. The aryl group is particularly preferably a phenyl group.

R² is preferably an alkyl group, and more preferably a C₁₋₄ alkyl group.

In one embodiment, R² is a C₁₋₆ alkyl group, preferably a C₁₋₃ alkyl group, and more preferably a methyl group.

In one embodiment, R² is a C₁₋₆ alkyl group, preferably a C₁₋₄ alkyl group, and more preferably a n-butyl group.

na is an integer of 1 to 3. In one embodiment, na is 2. In another embodiment, na is 3. Note that na, when R^{1'} is present, is independently selected for (R⁴-SiR³₂)ₘₐ.

pa is 0 or 1. In one embodiment, pa is 0. In another embodiment, pa is 1.

In R¹, 2 or more, preferably 3 or more, more preferably 4 or more, and even more preferably 6 or more, such as 8 or more, 9 or more, 10 or more, or 12 or more Si-O bonds are present.

In a preferable embodiment, in the group A,
R¹ is each independently a group represented by -(R⁴-SiR³₂)ₘₐ-R³,
R⁴ is each independently an oxygen atom or a C₁₋₆ alkylene group,
R³ is each independently a hydrocarbon group (preferably a C₁₋₄ alkyl group) or R^{1'}, is preferably a hydrocarbon group (preferably a C₁₋₄ alkyl group),
   R^{1'} has the same meaning as R¹,
ma is 1 or 2,
R² is each independently a hydrocarbon group or a C₁₋₄ alkyl group, and
na is an integer of 1 to 3.

Examples of the group A include, but are not limited to, the following groups: 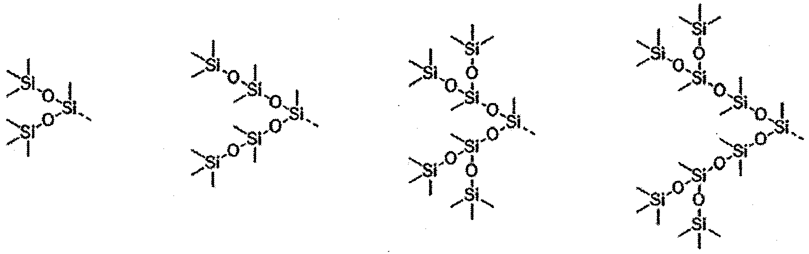 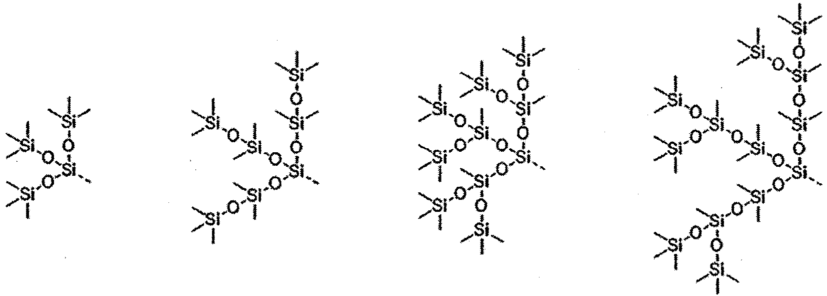 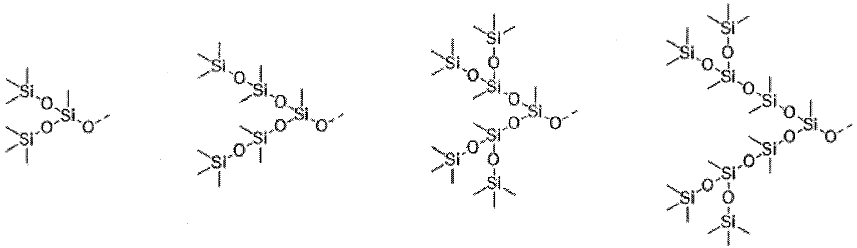 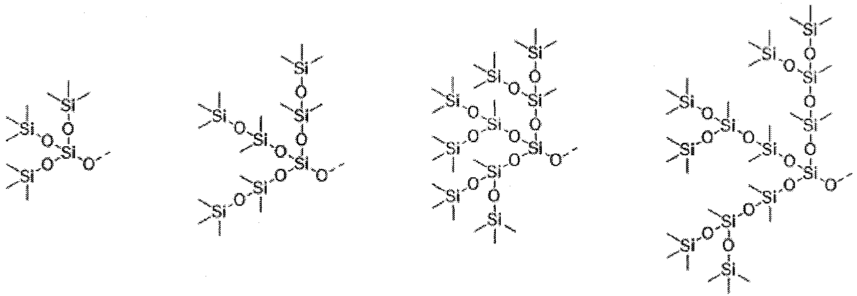 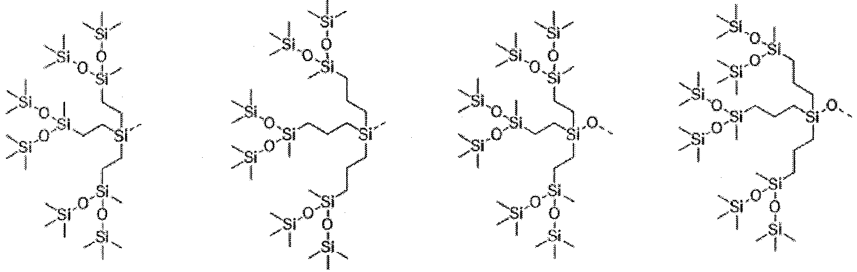 wherein TMS is a trimethylsilyl group.

In a preferable embodiment, the group A is any of the following groups:

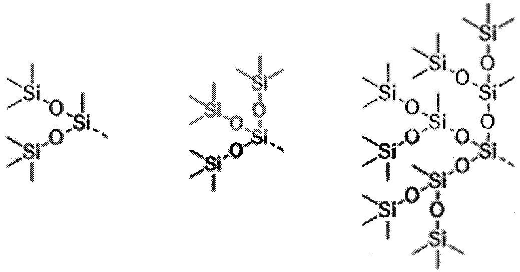

In one embodiment, R^{A} is a group having at least one branched structure of Si.

The branched structure is preferably the following structure: 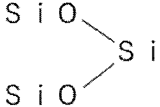 In the above formula, the Si atom is tetravalent, but the other bonds are not shown.

In one embodiment, the branched structure may be any of the following structures: 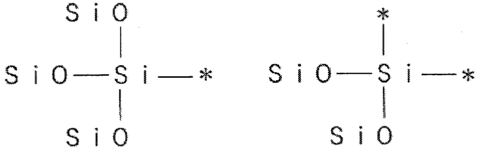 wherein * represents a bonding site. In other words, the branched structure may have two SiO branches or three SiO branches. In the above formulae, although the Si atom in the SiO is tetravalent, the other bonds are not shown.

The bonding site represented by * may be bonded to another atom or group not bonded to X¹ that may be comprised in R^{A}, may be bonded to an atom or group bonded to X¹ that may be comprised in R^{A}, or may be directly bonded to X¹. When the branched structure comprises one *, it is preferable that the * is a group bonded to X¹ that may be comprised in R^{A}, or is directly bonded to X¹. When two or more * are comprised, these * are independently bonded to another atom or group not bonded to X¹ that may be comprised in R^{A}, or may be bonded to an atom or group bonded to X¹ that may be comprised in R^{A}, or to X¹ itself, and preferably, at least one * is bonded to X¹ or to an atom or group bonded to X¹.

X¹ is understood as a linker that connects the siloxane moiety (R^{A}), which primarily provides functions such as water repellency, and the silane moiety (R^{Si1}), which provides binding ability to a substrate. Accordingly, X¹ is not limited as long as the silane compound represented by the formula (1) can stably exist.

In the formula (1), α is an integer of 1 to 9, and β is an integer of 1 to 9. These α and β may vary depending on the valence of X¹. The sum of α and β is the same as the valence of X¹. For example, when X¹ is a decavalent organic group, the sum of α and β is 10. For example, α may be 9, and β may be 1; α may be 5, and β may be 5; or α may be 1, and β may be 9. When X¹ is a divalent organic group, α and β are each 1.

X¹ is a di- to decavalent group.

The di- to decavalent group is preferably a di- to tetravalent group, and more preferably a divalent group. In another embodiment, the di- to decavalent organic group is preferably a tri- to octavalent organic group, and more preferably a tri- to hexavalent organic group.

In one embodiment, X¹ is a divalent group, and α and β are 1.

In one embodiment, X¹ is a tri- to hexavalent group, α is 1, and β is 2 to 5.

In one embodiment, X¹ is a trivalent organic group; and α is 2 and β is 1, or α is 1 and β is 2.

In one embodiment, X¹ is each independently a di- to decavalent group, such as a di- or trivalent group, comprising a partial structure selected from a single bond, a C₁₋₆₀ alkylene group, -CO-, -COO-, -OCO-, -NR⁴¹-, -CONR⁴¹-, -NR⁴¹CO-, - OCONR⁴¹-, -NR⁴¹COO-, -NR⁴¹-CO-NR⁴¹-, -O-, -S-, -CON=, and R^{S}, and x is an integer of 1 to 20.

When the composition comprises a plurality of types of compounds represented by formula (1), X¹ in the respective compounds may have the same partial structure or may have different partial structures. In this case, the partial structure is selected from a single bond, a C₁₋₆₀ alkylene group, -CO-, -COO-, - NR⁴¹-, -CONR⁴¹-, -OCONR⁴¹-, -NR⁴¹-CO-NR⁴¹-, -O-, -S-, -CON=, and R^{S}.

In the partial structure, the C₁₋₆₀ alkylene group is more preferably a C₁₀₋₃₀ alkylene group, and even more preferably C₁₀₋₂₂ alkylene group, and may be linear or branched, and is preferably linear.

In one embodiment, the partial structure comprised in X¹ is an alkylene group having 10 to 30 carbon atoms.

In one embodiment, the partial structure comprised in X¹ is an alkylene group having 10 carbon atoms.

In one embodiment, the partial structure comprised in X¹ is an alkylene group having 22 carbon atoms.

R⁴¹ is a hydrogen atom, an oxyalkylene-containing group, or a C₁₋₆ alkyl group. The C₁₋₆ alkyl group in R⁴¹ may be linear or may be branched. In one embodiment, the C₁₋₆ alkyl group is linear. In another embodiment, the C₁₋₆ alkyl group is branched. The C₁₋₆ alkyl group is preferably a C₁₋₄ alkyl group, more preferably a C₁₋₃ alkyl group, even more preferably a methyl group or an ethyl group, and particularly preferably a methyl group.

The oxyalkylene-containing group in R⁴¹ is a group comprising -O-alkylene-, and can representatively be an oxyalkylene-containing group having 1 to 10 carbon atoms. The oxyalkylene-containing group having 1 to 10 carbon atoms is a group comprising -O-C₁₋₁₀ alkylene-, and is, for example, -R⁵⁵-(-O-C₁₋₁₀ alkylene)ₙ-R⁵⁶ (wherein R⁵⁵ is a single bond or a divalent organic group, and preferably a C₁₋₆ alkylene group, n is any integer, and preferably an integer of 2 to 10, and R⁵⁶ is a hydrogen atom or a monovalent organic group, and preferably a C₁₋₆ alkyl group). The alkylene group may be linear or may be branched.

In one embodiment, R⁴¹ is a hydrogen atom.

In one embodiment, R⁴¹ is a C₁₋₆ alkyl group, and preferably a methyl group.

R^{S} is a group represented by the following formula: 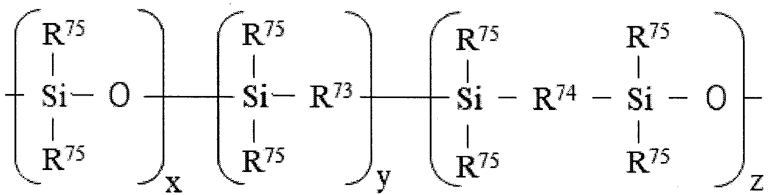 wherein
R⁷³ is each independently a single bond, a C₁₋₁₂ alkylene group, -R⁷⁶-O-R⁷⁶-, - R⁷⁸-R⁷⁷-R⁷⁸- , -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁴ is each independently a C₁₋₁₂ alkylene group, -R⁷⁶-O-R⁷⁶-, -R⁷⁸-R⁷⁷-R⁷⁸-, - R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
   R⁷⁶ is each independently a C₁₋₆ alkylene group,
   R⁷⁷ is each independently an optionally substituted arylene group,
   R⁷⁸ is each independently a single bond or a C₁₋₆ alkylene group,
   R⁷⁹ is each independently a single bond or an oxygen atom,
R⁷⁵ is each independently a hydrocarbon group,
x is an integer of 0 to 500,
y is an integer of 0 to 500,
z is an integer of 0 to 500,
x + y + z is 1 or more, and
the occurrence order of the respective repeating units enclosed in parentheses provided with x, y, or z is not limited in the formula.

R⁷³ is each independently a single bond, a C₁₋₁₂ alkylene group, -R⁷⁶-O-R⁷⁶-, - R⁷⁸-R⁷⁷-R⁷⁸- , -R⁷⁸-R⁷⁷-R⁷⁹-R⁷⁷-R⁷⁸- , -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-, and is preferably a C₁₋₁₂ alkylene group or -R⁷⁶-O-R⁷⁶-.

In one embodiment, R⁷³ is a single bond.

In one embodiment, R⁷³ is a C₁₋₁₂ alkylene group, -R⁷⁶-O-R⁷⁶-, -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-, and is preferably a C₁₋₁₂ alkylene group or -R⁷⁶-O-R⁷⁶-.

R⁷⁴ is each independently a C₁₋₁₂ alkylene group, -R⁷⁶-O-R⁷⁶-, -R⁷⁸-R⁷⁷-R⁷⁸-, - R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-.

In one embodiment, R⁷⁴ is each independently a C₁₋₁₂ alkylene group or -R⁷⁶-O-R⁷⁶-.

In another embodiment, R⁷⁴ is each independently -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-.

In one embodiment, R⁷³ is each independently a C₁₋₁₂ alkylene group or -R⁷⁶-O-R⁷⁶-, and R⁷⁴ is each independently a C₁₋₁₂ alkylene group or -R⁷⁶-O-R⁷⁶-.

In another embodiment, R⁷³ is each independently a C₁₋₁₂ alkylene group or - R⁷⁶-O-R⁷⁶-, and R⁷⁴ is each independently -R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-.

The C₁₋₁₂ alkylene group may be linear or may be branched. The C₁₋₁₂ alkylene group is preferably linear.

The C₁₋₁₂ alkylene group is preferably a C₂₋₈ alkylene group, and more preferably a C₂₋₆ alkylene group.

R⁷⁶ is each independently a C₁₋₆ alkylene group. The C₁₋₆ alkylene group may be linear or may be branched. The C₁₋₆ alkylene group is preferably linear.

The C₁₋₆ alkylene group is preferably a C₂₋₄ alkylene group, and more preferably a C₂₋₃ alkylene group.

In a preferable embodiment, in a group comprising a plurality of R⁷⁶, all R⁷⁶ are the same group.

R⁷⁷ is each independently an optionally substituted arylene group.

In one embodiment, R⁷⁷ is each independently any of the following:

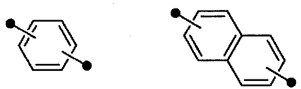

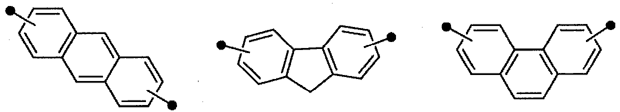

In one embodiment, R⁷⁷ is a phenylene group.

In another embodiment, R⁷⁷ is a naphthylene group.

The arylene group may have a substituent. The number of substituents is not limited, and is, for example, 1 to 4, and preferably 1 or 2.

In one embodiment, the phenylene group and the naphthylene group may have a substituent. The number of substituents is not limited, and is, for example, 1 to 4, and preferably 1 or 2. The substituted phenylene group is preferably 2,5-substituted phenylene.

The substituent with respect to the arylene group is each independently -R¹⁴¹-R¹⁴².

R¹⁴¹ is a single bond, an oxygen atom, or a sulfur atom, preferably a single bond or an oxygen atom, and more preferably an oxygen atom.

R¹⁴² is a C₁₋₁₂ alkyl group, -(O-R¹⁴³)ₚ, -R¹⁴⁴-R¹⁴⁵, or -R¹⁴⁴-OR¹⁴⁶, all of which are optionally substituted with a halogen.

The halogen is fluorine, chlorine, bromine, or iodine, and is preferably fluorine.

The C₁₋₁₂ alkyl group in R¹⁴² may be linear or may be branched.

R¹⁴³ is a C₁₋₆ alkylene group, and preferably a C₂₋₄ alkylene group. Such an alkylene group may be linear or may be branched.

R¹⁴⁴ is a C₁₋₁₂ alkylene group, and preferably a C₁₋₆ alkylene group. Such an alkylene group may be linear or may be branched.

R¹⁴⁵ is -CH=CH₂ or -OCOCH=CH₂.

R¹⁴⁶ is a hydrogen atom or a C₁₋₆ alkyl group. Such an alkyl group may be linear or may be branched. The C₁₋₆ alkyl group is preferably a C₁₃ alkyl group, more preferably a C₁₋₂ alkyl group, and even more preferably a methyl group.

R⁷⁸ is each independently a single bond or a C₁₋₆ alkylene group. Such a C₁₋₆ alkylene group may be linear or may be branched.

In one embodiment, R⁷⁸ is a single bond.

In another embodiment, R⁷⁸ is a C₁₋₆ alkylene group.

R⁷⁹ is each independently a single bond or an oxygen atom.

In one embodiment, R⁷⁹ is a single bond.

In another embodiment, R⁷⁹ is an oxygen atom.

R⁷⁵ is each independently a hydrocarbon group. Such a hydrocarbon group may be substituted.

R⁷⁵ is, each independently, preferably an unsubstituted hydrocarbon group or a hydrocarbon group substituted with a halogen atom. Such a halogen atom is preferably a fluorine atom.

R⁷⁵ is, each independently, preferably a C₁₋₁₈ alkyl group or aryl group optionally substituted with a halogen atom, and more preferably a C₁₋₁₈ alkyl group or aryl group.

The C₁₋₁₈ alkyl group may be linear or may be branched, and is preferably linear. The C₁₋₁₈ alkyl group is preferably a C₁₋₁₀ alkyl group, more preferably a C₁₋₆ alkyl group, even more preferably a C₁₋₄ alkyl group, and yet more preferably a methyl group.

The aryl group is preferably a phenyl group.

In one embodiment, R⁷⁵ is each independently a C₁₋₆ alkyl group, preferably a C₁₋₄ alkyl group, and more preferably a methyl group.

In another embodiment, R⁷⁵ is a phenyl group.

In another embodiment, R⁷⁵ is each independently a methyl group or a phenyl group, and preferably a methyl group.

x is an integer of 0 to 500, preferably an integer of 0 to 300, more preferably an integer of 0 to 100, even more preferably an integer of 1 to 100, yet more preferably an integer of 5 to 50, and further preferably an integer of 10 to 30.

In one embodiment, x is 0.

In one embodiment, x is an integer of 1 to 500, preferably an integer of 1 to 300, more preferably an integer of 1 to 100, even more preferably an integer of 5 to 50, and yet more preferably an integer of 10 to 30.

y is an integer of 0 to 500, preferably an integer of 0 to 300, more preferably an integer of 0 to 100, even more preferably an integer of 1 to 100, yet more preferably an integer of 5 to 50, and further preferably an integer of 10 to 30.

In one embodiment, y is 0.

In one embodiment, y is an integer of 1 to 500, preferably an integer of 1 to 300, more preferably an integer of 1 to 100, even more preferably an integer of 5 to 50, and yet more preferably an integer of 10 to 30.

z is an integer of 0 to 500, preferably an integer of 0 to 300, more preferably an integer of 0 to 100, even more preferably an integer of 1 to 100, yet more preferably an integer of 5 to 50, and further preferably an integer of 10 to 30.

In one embodiment, z is 0.

In one embodiment, z is an integer of 1 to 500, preferably an integer of 1 to 300, more preferably an integer of 1 to 100, even more preferably an integer of 5 to 50, and yet more preferably an integer of 10 to 30.

In one embodiment, y is 0, and z is 0.

In another embodiment, x is 0, and y is 0.

In still another embodiment, x is 0, and z is 0.

The divalent siloxane-containing group may be a random polymer, or may be a block polymer.

In a preferable embodiment, X¹ is a group represented by the following formula:

-(X¹²¹)ₐ₀-[(X¹¹¹)ₐ₁-(X¹¹²)ₐ₂]-

wherein
X¹²¹ is R⁶¹_{b1}R⁶²_{3-b1}C-, R⁶³_{b2}R⁶⁴_{3-b2}Si-, or R⁶⁵₂N-,
   R⁶¹ is a divalent organic group,
   R⁶² is a hydrogen atom or a monovalent organic group,
   R⁶³ is a divalent organic group,
   R⁶⁴ is a hydrogen atom or a monovalent organic group,
   R⁶⁵ is a divalent organic group,
   b1 is 2 or 3,
   b2 is 2 or 3,
X¹¹¹ is a single bond or a divalent organic group,
X¹¹² is -CO-, -COO-, -OCO-, -NR⁴¹-, -CONR⁴¹-, -NR⁴¹CO-, -OCONR⁴¹-, - NR⁴¹COO-, -NR⁴¹-CO-NR⁴¹-, -O-, -S-, or R^{S},
R⁴¹ is a hydrogen atom, an oxyalkylene-containing group, or a C₁₋₆ alkyl group,
R^{S} is a group represented by the following formula: 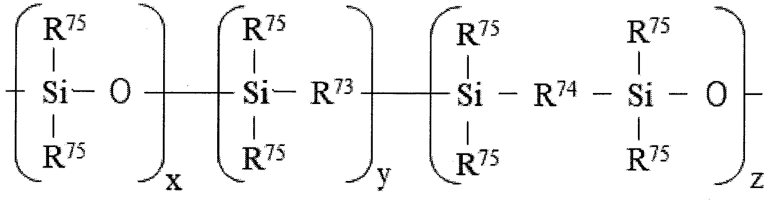 wherein
R⁷³ is each independently a single bond, a C₁₋₁₂ alkylene group, -R⁷⁶-O-R⁷⁶-, - R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁴ is each independently a C₁₋₁₂ alkylene group, -R⁷⁶-O-R⁷⁶-, -R⁷⁸-R⁷⁷-R⁷⁸-, - R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
   R⁷⁶ is each independently a C₁₋₆ alkylene group,
   R⁷⁷ is each independently an optionally substituted phenylene group or naphthylene group,
   R⁷⁸ is each independently a single bond or a C₁₋₆ alkylene group,
   R⁷⁹ is each independently a single bond or an oxygen atom,
R⁷⁵ is each independently a hydrocarbon group,
x is an integer of 0 to 500,
y is an integer of 0 to 500,
z is an integer of 0 to 500,
x + y + z is 1 or more, and
the occurrence order of the respective repeating units enclosed in parentheses provided with x, y, or z is not limited in the formula,
a0 is 0 or 1,
a1 is an integer of 1 to 5,
a2 is an integer of 0 to 5, and
the occurrence order of the respective repeating units enclosed in parentheses provided with a1 or a2 is not limited in the formula; or
a group represented by a formula (X^{A1}): 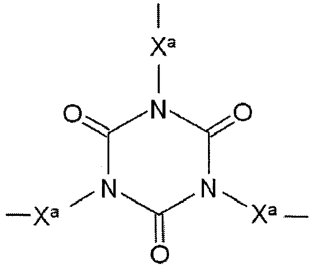
wherein X^{a} is each independently a single bond or a divalent linking group. The left side of the group X¹ binds to R^{A} and the right side binds to R^{Si1}.

X¹²¹ is R⁶¹_{b1}R⁶²_{3-b1}C-, R⁶³_{b2}R⁶⁴_{3-b2}Si-, or R⁶⁵₂N-.

R⁶¹ is a divalent organic group.

R⁶¹ is preferably a C₁₋₆ alkylene group, -(CH₂)_{f1}-O-(CH₂)_{f2}- (wherein f1 is an integer of 0 to 6 such as an integer of 1 to 6, and f2 is an integer of 0 to 6 such as an integer of 1 to 6), or -(CH₂)_{f3}-phenylene-(CH₂)_{f4}- (wherein f3 is an integer of 0 to 6 such as an integer of 1 to 6, and f4 is an integer of 0 to 6 such as an integer of 1 to 6). Such a C₁₋₆ alkylene group may be linear or may be branched, and is preferably linear. These groups may be substituted with, for example, one or more substituents selected from, a fluorine atom, a C₁₋₆ alkyl group, a C₂₋₆ alkenyl group, and a C₂₋₆ alkynyl group, and are preferably unsubstituted.

In a preferable embodiment, R⁶¹ is a C₁₋₆ alkylene group or -(CH₂)_{f3}-phenylene-(CH₂)_{f4}-, and preferably -phenylene-(CH₂)_{f4}-.

In another preferable embodiment, R⁶¹ is a C₁₋₃ alkylene group. In one embodiment, R⁶¹ may be -CH₂CH₂CH₂-. In another embodiment, R⁶¹ may be - CH₂CH₂-.

R⁶² is a hydrogen atom or a monovalent organic group.

In one embodiment, R⁶² is a hydrogen atom.

In another embodiment, R⁶² is a monovalent organic group.

In R⁶², the monovalent organic group is preferably a C₁₋₂₀ alkyl group, more preferably a C₁₋₆ alkyl group, and even more preferably a methyl group.

b1 is 2 or 3. In one embodiment, b1 is 2. In another embodiment, b1 is 3.

R⁶³ is a divalent organic group.

R⁶³ is preferably a C₁₋₆ alkylene group, -(CH₂)_{g1}-O-(CH₂)_{g2}- (wherein g1 is an integer of 0 to 6 such as an integer of 1 to 6, and g2 is an integer of 0 to 6 such as an integer of 1 to 6), or -(CH₂)_{g3}-phenylene-(CH₂)_{g4}- (wherein g3 is an integer of 0 to 6 such as an integer of 1 to 6, and g4 is an integer of 0 to 6 such as an integer of 1 to 6). Such a C₁₋₆ alkylene group may be linear or may be branched, and is preferably linear. These groups may be substituted with, for example, one or more substituents selected from, a fluorine atom, a C₁₋₆ alkyl group, a C₂₋₆ alkenyl group, and a C₂₋₆ alkynyl group, and are preferably unsubstituted.

In a preferable embodiment, R⁶³ is a C₁₋₆ alkylene group or -(CH₂)_{g3}-phenylene-(CH₂)_{g4}-, and preferably -phenylene-(CH₂)_{g4}-.

In another preferable embodiment, R⁶³ is a C₁₋₃ alkylene group. In one embodiment, R⁶³ may be -CH₂CH₂CH₂-. In another embodiment, R⁶³ may be - CH₂CH₂-.

R⁶⁴ is a hydrogen atom or a monovalent organic group.

In one embodiment, R⁶⁴ is a hydrogen atom.

In another embodiment, R⁶⁴ is a monovalent organic group.

In R⁶⁴, the monovalent organic group is preferably a C₁₋₂₀ alkyl group, more preferably a C₁₋₆ alkyl group, and even more preferably a methyl group.

b2 is 2 or 3. In one embodiment, b2 is 2. In another embodiment, b2 is 3.

R⁶⁵ is a divalent organic group.

R⁶⁵ is preferably a C₁₋₆ alkylene group, -(CH₂)ₕ₁-O-(CH₂)ₕ₂- (wherein h1 is an integer of 0 to 6 such as an integer of 1 to 6, and h2 is an integer of 0 to 6 such as an integer of 1 to 6), or -(CH₂)ₕ₃-phenylene-(CH₂)ₕ₄- (wherein h3 is an integer of 0 to 6 such as an integer of 1 to 6, and h4 is an integer of 0 to 6 such as an integer of 1 to 6). Such a C₁₋₆ alkylene group may be linear or may be branched, and is preferably linear. These groups may be substituted with, for example, one or more substituents selected from, a fluorine atom, a C₁₋₆ alkyl group, a C₂₋₆ alkenyl group, and a C₂₋₆ alkynyl group, and are preferably unsubstituted.

In a preferable embodiment, R⁶⁵ is a C₁₋₆ alkylene group or -(CH₂)ₕ₃-phenylene-(CH₂)ₕ₄-, and preferably -phenylene-(CH₂)ₕ₄-.

In another preferable embodiment, R⁶⁵ is a C₁₋₃ alkylene group. In one embodiment, R⁶⁵ may be -CH₂CH₂CH₂-. In another embodiment, R⁶⁵ may be - CH₂CH₂-.

In one embodiment, X¹²¹ is R⁶¹_{b1}R⁶²_{3-b1}C-.

In one embodiment, X¹²¹ is R⁶³_{b2}R⁶⁴_{3-b2}Si-.

In one embodiment, X¹²¹ is R⁶⁵₂N-.

X¹¹¹ is a single bond or a divalent organic group.

The divalent organic group is preferably a divalent hydrocarbon group.

The hydrocarbon group in X¹¹¹ is preferably a hydrocarbon group having 1 to 60 carbon atoms, and preferably a hydrocarbon group having 1 to 30 carbon atoms.

The hydrocarbon group may preferably be an alkylene group or an arylene group.

The alkylene group may be linear, or may be branched. The alkylene group may be preferably an alkylene group having 1 to 60 carbon atoms, and more preferably 1 to 30 carbon atoms.

In one embodiment, the alkylene group may be, for example, a C₁₋₁₀ alkylene group, a C₁₋₈ alkylene group, a C₁₋₆ alkylene group, a C₂₋₁₀ alkylene group, a C₂₋₈ alkylene group, or a C₂₋₆ alkylene group.

In one embodiment, the alkylene group may be, for example, a C₁₀₋₃₀ alkylene group. The number of carbon atoms of such an alkylene group is preferably 10 or more, more preferably 16 or more, even more preferably 18 or more, and yet more preferably 22 or more. The number of carbon atoms of the alkylene group in X¹¹¹ may be preferably 60 or less, more preferably 40 or less, even more preferably 30 or less, and yet more preferably 24 or less. The number of carbon atoms of the alkylene group in X¹¹¹ may be preferably 10 to 60, more preferably 10 to 40, and even more preferably 16 to 30.

In one embodiment, the alkylene group may be, for example, a C₁₁₋₃₀ alkylene group. The number of carbon atoms of such an alkylene group is preferably 10 or more, more preferably 16 or more, even more preferably 18 or more, and yet more preferably 22 or more. The number of carbon atoms of the alkylene group in X¹¹¹ may be preferably 60 or less, more preferably 40 or less, even more preferably 30 or less, and yet more preferably 24 or less. The number of carbon atoms of the alkylene group in X¹¹¹ may be preferably 11 to 60, more preferably 12 to 40, and even more preferably 16 to 30.

The arylene group may be monocyclic or may be polycyclic. The arylene group is preferably an arylene group having 6 to 20 carbon atoms, and more preferably an arylene group having 6 to 10 carbon atoms. The arylene group is particularly preferably a phenylene group.

In one embodiment, X¹¹¹ is a group represented by:

-X¹¹³-X¹¹²-X¹¹⁴-

wherein
X¹¹³ is an alkylene group, an oxyalkylene group, or -(CⱼH₂ⱼ)ₖ₁-(O-CⱼH₂ⱼ)ₖ₂, wherein j is an integer of 1 to 6, k1 is 1 or 0, and k2 is an integer of 1 to 20,
X¹¹² is -CO-, -COO-, -OCO-, -NR⁴¹-, -CONR⁴¹-, -NR⁴¹CO-, -OCONR⁴¹-, - NR⁴¹COO-, -NR⁴¹-CO-NR⁴¹-, -O-, or -S-, preferably -CO-, -NR⁴¹-, -CONR⁴¹-, or - NR⁴¹CO-, and more preferably -CONR⁴¹- or -NR⁴¹CO-,
   R⁴¹ is a hydrogen atom or a C₁₋₆ alkyl group, and preferably a hydrogen atom, and
X¹¹⁴ is a single bond, an oxyalkylene-containing group or an alkylene group.

X¹¹³ is an alkylene group, an oxyalkylene group, or -(CⱼH₂ⱼ)ₖ₁-(O-CⱼH₂ⱼ)ₖ₂, wherein j is an integer of 1 to 6, k1 is 1 or 0, and k2 is an integer of 1 to 20.

The alkylene group may be linear or may be branched. The alkylene group may be an alkylene group preferably having 1 to 60 carbon atoms, and more preferably 1 to 30 carbon atoms.

In one embodiment, the alkylene group may be, for example, a C₁₋₁₀ alkylene group, a C₁₋₈ alkylene group, a C₁₋₆ alkylene group, a C₂₋₁₀ alkylene group, a C₂₋₈ alkylene group, or a C₂₋₆ alkylene group.

In one embodiment, the alkylene group may be, for example, a C₁₀₋₃₀ alkylene group. The number of carbon atoms of the alkylene group may be preferably 12 or more, more preferably 16 or more, even more preferably 18 or more, and yet more preferably 22 or more. The number of carbon atoms of the alkylene group in X¹¹³ may be preferably 60 or less, more preferably 40 or less, even more preferably 30 or less, and yet more preferably 24 or less. The number of carbon atoms of the alkylene group in X¹¹³ may be preferably 10 to 60, more preferably 10 to 40, and even more preferably 16 to 30.

In one embodiment, the alkylene group may be, for example, a C₁₁₋₃₀ alkylene group. The number of carbon atoms of the alkylene group may preferably be 12 or more, more preferably 16 or more, even more preferably 18 or more, and yet more preferably 22 or more. The number of carbon atoms of the alkylene group in X¹¹³ may be preferably 60 or less, more preferably 40 or less, even more preferably 30 or less, and yet more preferably 24 or less. The number of carbon atoms of the alkylene group in X¹¹³ may be preferably 11 to 60, more preferably 12 to 40, and even more preferably 16 to 30.

The oxyalkylene group is a group having an oxygen atom at the left terminal (the R^{A} side) of the alkylene group, i.e., an -O-alkylene group.

j is an integer of 1 to 6, and preferably an integer of 2 to 4.

k1 is 1 or 0, and preferably 0.

k2 is an integer of 1 to 20, preferably an integer of 2 to 10, and more preferably an integer of 2 to 6.

X¹¹⁴ is an alkylene group.

The alkylene group may be linear or may be branched. The alkylene group is an alkylene group having preferably 1 to 60 carbon atoms, and more preferably 1 to 30 carbon atoms, is preferably a C₁₋₁₀ alkylene group, more preferably a C₁₋₈ alkylene group, and even more preferably a C₁₋₆ alkylene group, such as a C₂₋₁₀ alkylene group, a C₂₋₈ alkylene group, or a C₂₋₆ alkylene group.

In one embodiment, X¹¹¹ is a group represented by:

-O-R^{S}-X¹¹³-X¹¹²-X¹¹⁴-

wherein
R^{S} is a group represented by the following formula: 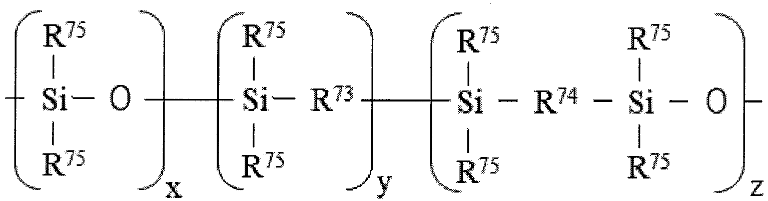 wherein
R⁷³ is each independently a single bond, a C₁₋₁₂ alkylene group, -R⁷⁶-O-R⁷⁶-, - R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁴ is each independently a C₁₋₁₂ alkylene group, -R⁷⁶-O-R⁷⁶-, -R⁷⁸-R⁷⁷-R⁷⁸-, - R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
   R⁷⁶ is each independently a C₁₋₆ alkylene group,
   R⁷⁷ is each independently an optionally substituted phenylene group or naphthylene group,
   R⁷⁸ is each independently a single bond or a C₁₋₆ alkylene group,
   R⁷⁹ is each independently a single bond or an oxygen atom,
R⁷⁵ is each independently a hydrocarbon group,
x is an integer of 0 to 500,
y is an integer of 0 to 500,
z is an integer of 0 to 500,
x + y + z is 1 or more, and
the occurrence order of the respective repeating units enclosed in parentheses provided with x, y, or z is not limited in the formula,
X¹¹² is -CO-, -COO-, -OCO-, -NR⁴¹-, -CONR⁴¹-, -NR⁴¹CO-, -OCONR⁴¹-, - NR⁴¹COO-, -NR⁴¹-CO-NR⁴¹-, -O-, or -S-, preferably -CO-, -NR⁴¹-, -CONR⁴¹-, or - NR⁴¹CO-, and more preferably -CONR⁴¹- or -NR⁴¹CO-,
   R⁴¹ is a hydrogen atom, an oxyalkylene-containing group, or a C₁₋₆ alkyl group, and preferably a hydrogen atom,
X¹¹³ is an alkylene group, an oxyalkylene group, or -(CⱼH₂ⱼ)ₖ₁-(O-CⱼH₂ⱼ)ₖ₂, wherein j is an integer of 1 to 6, k1 is 1 or 0, and k2 is an integer of 1 to 20, and
X¹¹⁴ is a single bond or an alkylene group.

In one embodiment, X¹¹¹ is a group represented by the formula:

-X¹¹⁵-R^{S}-X¹¹³-X¹¹²-X¹¹⁴-

wherein
R^{S} is a group represented by the following formula: 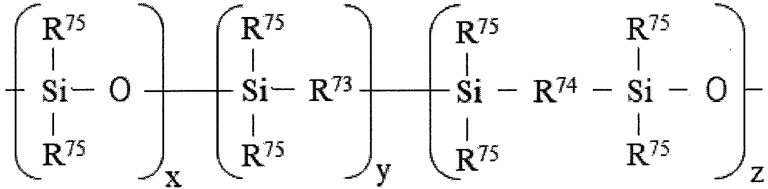 (wherein
R⁷³ is each independently a single bond, a C₁₋₁₂ alkylene group, -R⁷⁶-O-R⁷⁶-, - R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁴ is each independently a C₁₋₁₂ alkylene group, -R⁷⁶-O-R⁷⁶-, -R⁷⁸-R⁷⁷-R⁷⁸-, - R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
   R⁷⁶ is each independently a C₁₋₆ alkylene group,
   R⁷⁷ is each independently an optionally substituted phenylene group or naphthylene group,
   R⁷⁸ is each independently a single bond or a C₁₋₆ alkylene group,
   R⁷⁹ is each independently a single bond or an oxygen atom,
R⁷⁵ is each independently a hydrocarbon group,
x is an integer of 0 to 500,
y is an integer of 0 to 500,
z is an integer of 0 to 500,
x + y + z is 1 or more, and
the occurrence order of the respective repeating units enclosed in parentheses provided with x, y, or z is not limited in the formula),
X¹¹² is -CO-, -COO-, -OCO-, -NR⁴¹-, -CONR⁴¹-, -NR⁴¹CO-, -OCONR⁴¹-, - NR⁴¹COO-, -NR⁴¹-CO-NR⁴¹-, -O-, or -S-, preferably -CO-, -NR⁴¹-, -CONR⁴¹-, or - NR⁴¹CO-, and more preferably -CONR⁴¹- or -NR⁴¹CO-,
   R⁴¹ is a hydrogen atom, an oxyalkylene-containing group, or a C₁₋₆ alkyl group, and preferably a hydrogen atom,
X¹¹³ is an alkylene group, an oxyalkylene group, or -(CⱼH₂ⱼ)ₖ₁-(O-CⱼH₂ⱼ)ₖ₂ wherein j is an integer of 1 to 6, k1 is 1 or 0, and k2 is an integer of 1 to 20,
X¹¹⁴ is a single bond or an alkylene group, and
X¹¹⁵ is an alkylene group, an oxyalkylene group, or -(Cₚ₁₀H₂ₚ₁₀)_{q1}-(O-Cₚ₁₀H₂ₚ₁₀)_{q2} wherein p10 is an integer of 1 to 6, q1 is 1 or 0, and q2 is an integer of 1 to 20.

X¹¹⁵ is an alkylene group, an oxyalkylene group, or -(CₚH₂ₚ)_{q1}-(O-CₚH₂ₚ)_{q2} wherein p is an integer of 1 to 6, q1 is 1 or 0, and q2 is an integer of 1 to 20.

The alkylene group may be linear or may be branched. The alkylene group may preferably be an alkylene group having 1 to 60 carbon atoms, and more preferably an alkylene group having 1 to 30 carbon atoms.

In one embodiment, the alkylene group may be, for example, a C₁₋₁₀ alkylene group, a C₁₋₈ alkylene group, a C₁₋₆ alkylene group, a C₂₋₁₀ alkylene group, a C₂₋₈ alkylene group, or a C₂₋₆ alkylene group.

The oxyalkylene group is a group having an oxygen atom at the left terminal (the R^{A} or R^{B} side) of the alkylene group, i.e., an -O-alkylene group.

p10 is an integer of 1 to 6, and preferably an integer of 2 to 4.

q1 is 1 or 0, and preferably 0.

q2 is an integer of 1 to 20, preferably an integer of 2 to 10, and more preferably an integer of 2 to 6.

In one embodiment, X¹ may be a group represented by the following formula (X^{A1}): 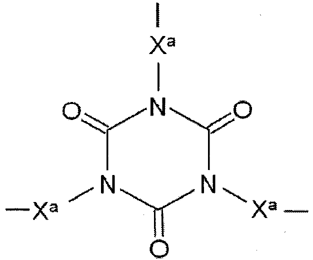 wherein X^{a} is a single bond or a divalent organic group.

X^{a} is a single bond or divalent linking group directly bonded to the isocyanuric ring. X^{a} is preferably a single bond, an alkylene group, or a divalent group comprising at least one bond selected from the group consisting of an ether bond, an ester bond, an amide bond, and a sulfide bond, and more preferably a single bond, an alkylene group having 1 to 10 carbon atoms, or a divalent hydrocarbon group having 1 to 10 carbon atoms and comprising at least one bond selected from the group consisting of an ether bond, an ester bond, an amide bond, and a sulfide bond.

X^{a} is even more preferably a group represented by the following formula:

-(CX¹²¹X¹²²)ₓ₁-(X^{a1})_{y1}-(CX¹²³X¹²⁴)_{z1}-

wherein X¹²¹ to X¹²⁴ are each independently H, OH, or -OSi(OR¹²¹)₃, where three R¹²¹ are each independently an alkyl group having 1 to 4 carbon atoms,
X^{a1} is -C(=O)NH-, -NHC(=O)-, -O-, -C(=O)O-, -OC(=O)-, -OC(=O) O-, - NH-, or -NHC(=O)NH- (left side of each bond binds to CX¹²¹X¹²²), and
x1 is an integer of 0 to 10, y1 is 0 or 1, and z1 is an integer of 1 to 10.

X^{a1} is preferably -O- or -C(=O)O-.

X^{a} is particularly preferably
a group represented by the following formula:

   -(CH₂)ₘ₁₂-O-(CH₂)ₘ₁₃-
wherein m12 is an integer of 1 to 3, and m13 is an integer of 1 to 3,
a group represented by

   -(CH₂)ₘ₁₅-O-CH₂CH(OH)-(CH₂)ₘ₁₆-
wherein m15 is an integer of 1 to 3, and m16 is an integer of 1 to 3,
a group represented by

   -(CH₂)ₘ₁₈-
wherein m18 is an integer of 1 to 3, and
a group represented by

   -(CH₂)ₘ₂₀-O-CH₂CH(OSi(OCH₃)₃)-(CH₂)ₘ₂₁-
wherein m20 is an integer of 1 to 3, and m21 is an integer of 1 to 3.

X^{a} is not limited, and specific examples include -CH₂-, -C₂H₄-, -C₃H₆-, -C₄H₈-, -C₄H₈-O-CH₂-, -CO-O-CH₂-CH(OH)-CH₂-, -S-, - NR¹²¹-, -(CH₂)ₘ₂₂-C(=O)-O-(CH₂)ₘ₂₃-, -(CH₂)ₘ₂₂-O-C(=O)-(CH₂)ₘ₂₃-, -(CH₂)ₘ₂₂-C(=O)-NR¹²¹-(CH₂)ₘ₂₃-, and -(CH₂)ₘ₂₂-NR¹²¹-C(=O)-(CH₂)ₘ₂₃-CH₂OCH₂CH(OSi(OCH₃)₃)CH₂-,
wherein R¹²¹ is a hydrogen atom or a C₁₋₆ hydrocarbon chain, m22 is an integer of 1 to 10, and m23 is an integer of 1 to 10.

In another preferable embodiment, X^{A} and X^{B} may be each independently a divalent organic group comprising an alkylene group having 7 or more carbon atoms, may be preferably a divalent organic group comprising an alkylene group having 10 or more carbon atoms, more preferably a divalent organic group comprising an alkylene group having 11 or more carbon atoms, more preferably a divalent organic group further comprising -CO-, -COO-, -NR⁴¹-, -CONR⁴¹-, -OCONR⁴¹-, -NR⁴¹-CO-NR⁴¹-, -O-, or -S-, and even more preferably a group represented by the following formula:

-X^{10B}-X^{11B}-X^{12B}-

wherein
X¹⁹⁸ is an alkylene group having 11 or more carbon atoms,
X^{11B} is a single bond, -CO-, -COO-, -NR⁴¹-, -CONR⁴¹-, -OCONR⁴¹-, -NR⁴¹-CO-NR⁴¹-, -O-, -S-, -O-(CH₂)ₓ-CONR⁴¹-, or -O-(CH₂)ₓ-CO-,
R⁴¹ is a hydrogen atom, an oxyalkylene-containing group, or a C₁₋₆ alkyl group,
x is an integer of 1 to 30, and
X^{12B} is a single bond or a C₁₋₆ alkylene group.

The number of carbon atoms of the alkylene group in X¹ and X^{10B} may be preferably 10 or more, more preferably 16 or more, even more preferably 18 or more, and yet more preferably 22 or more. The number of carbon atoms of the alkylene group in X¹ and X^{10B} may be preferably 60 or less, more preferably 40 or less, even more preferably 30 or less, and yet more preferably 24 or less. The number of carbon atoms of the alkylene group in X¹ and X^{10B} may be preferably 10 to 60, more preferably 10 to 40, and even more preferably 16 to 30.

The number of carbon atoms of the alkylene group in X¹ and X^{10B} may be preferably 12 or more, more preferably 16 or more, even more preferably 18 or more, and yet more preferably 22 or more. The number of carbon atoms of the alkylene group in X¹ and X^{10B} may be preferably 60 or less, more preferably 40 or less, even more preferably 30 or less, and yet more preferably 24 or less. The number of carbon atoms of the alkylene group in X¹ and X^{10B} may be preferably 11 to 60, more preferably 12 to 40, and even more preferably 16 to 30.

The alkylene group in X¹ and X^{10B} may be linear or may be branched. The alkylene group is preferably linear.

X^{10B} is preferably -CO-, -COO-, -NR⁴¹-, -CONR⁴¹-, -OCONR⁴¹-, -NR⁴¹-CO-NR⁴¹-, -O-, -S-, -O-(CH₂)ₓ-CONR⁴¹-, or -O-(CH₂)ₓ-CO-, more preferably -CO-, - CONR⁴¹-, or -OCONR⁴¹-, and even more preferably -CONR⁴¹-. R⁴¹ represents a hydrogen atom, an oxyalkylene-containing group, or a C₁₋₆ alkyl group, and is preferably a hydrogen atom, and x is an integer of 1 to 20.

In one embodiment, X^{12B} is a single bond.

In another embodiment, X^{12B} is a C₁₋₆ alkylene group.

The C₁₋₆ alkylene group in X^{12B} may be linear or may be branched. In one embodiment, the C₁₋₆ alkylene group is linear. In another embodiment, the C₁₋₆ alkylene group is branched. The C₁₋₆ alkylene group is preferably a C₁₋₄ alkylene group, and more preferably a C₁₋₃ alkylene group.

In one embodiment, in the formula (1), the number of carbon atoms in the alkylene group in X¹ is larger than the number of Si atoms in R^{Si1}. By making the number of carbon atoms in the alkylene group in X¹ larger than the number of Si atoms in R^{Si1}, the friction durability of a surface-treating layer to be obtained can be further increased.

In a preferred embodiment, in the formula (1), the number of carbon atoms in the alkylene group in X¹ may be 2.5 times or more, preferably 3.0 times or more, and more preferably 3.5 times or more the number of Si atoms in R^{Si1}. Further, the number of carbon atoms in the alkylene group in X¹ may be preferably 50 times or less, for example, 30 times or less, 20 times or less, or 10 times or less the number of Si atoms in R^{Si1}.

In one embodiment, in the formula (1), the number of carbon atoms in the alkylene group in X¹ is larger than the number of atoms in the main chain in R^{Si1}. By making the number of carbon atoms in the alkylene group in X¹ larger than the number of atoms in the main chain in R^{Si1}, the friction durability of a surface-treating layer to be obtained can be further increased.

In a preferred embodiment, in the formula (1), the number of carbon atoms in the alkylene group in X¹ may be 2.0 times or more, preferably 2.5 times or more, more preferably 3.0 times or more, and even more preferably 4.0 times or more the number of atoms in the main chain in R^{Si1}. Further, the number of carbon atoms in the alkylene group in X¹ may be preferably 30 times or less, for example, 20 times or less, 10 times or less, or 6.0 times or less the number of atoms in the main chain in R^{Si1}.

In a preferable embodiment, in the formula (1), X¹ comprises an amide bond. In other words, X¹ is each independently preferably a di- to decavalent group, such as a di- or trivalent group, comprising -CONR⁴¹-, -OCONR⁴¹-, or -NR⁴¹-CO-NR⁴¹-.

R^{Si1} is a monovalent group comprising a Si atom to which a hydroxyl group or a hydrolyzable group is bonded.

Here, the "main chain" in R^{Si1} means an atom chain in R^{Si1} that is bonded to X¹ and has the largest number of atoms (excluding hydrogen atoms) counting from the Si atom. For example, the number of atoms in the main chain in R^{Si1} is 4 in the case of Si(CH₃)₃OSi(CH₃)₂-, the number of atoms in the main chain in R^{Si1} is 6 in the case of Si(CH₃)₃OSi(CH₃)₃OSi(CH₃)₂-, and is 3 in the case of Si(Si(CH₃)₃)₃-.

In a preferable embodiment, R^{Si1} is each independently preferably a group represented by the following formula (S1), (S2), (S3), (S4), or (S5):

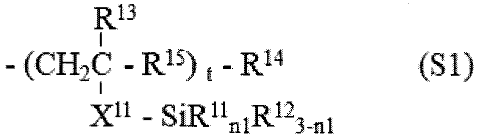

- SiR¹¹ₙ₁R¹²₃₋ₙ₁ (S2)

- SiR^{a1}ₖ₁R^{b1}ₗ₁R^{c1}ₘ₁ (S3)

- CR^{d1}ₖ₂R^{e1}ₗ₂R^{f1}ₘ₂ (S4)

- NR^{g1}R^{h1} (S5)

wherein
R¹¹ is each independently a hydroxyl group or a hydrolyzable group,
R¹² is each independently a monovalent organic group,
n1 is each independently an integer of 0 to 3 for each (SiR¹¹ₙ₁R¹²₃₋ₙ₁) unit,
X¹¹ is each independently a single bond or a divalent organic group,
R¹³ is each independently a hydrogen atom or a monovalent organic group,
t is each independently an integer of 2 or more,
R¹⁴ is each independently a hydrogen atom, a halogen atom, or -X¹¹-SiR¹¹ₙ₁R¹²₃₋ₙ₁,
R¹⁵ is each independently a single bond, an oxygen atom, an alkylene group having 1 to 6 carbon atoms, or an alkyleneoxy group having 1 to 6 carbon atoms,
R^{a1} is each independently -Z¹-SiR²¹ₚ₁R²²_{q1}R²³ᵣ₁;
Z¹ is each independently a divalent organic group,
R²¹ is each independently -Z^{1'}-SiR^{21'}_{p1'}R^{22'}_{q1'}R^{23'}_{r1'};
R²² is each independently a hydroxyl group or a hydrolyzable group,
R²³ is each independently a monovalent organic group,
p1 is each independently an integer of 0 to 3,
q1 is each independently an integer of 0 to 3,
r1 is each independently an integer of 0 to 3,
Z^{1'} is each independently a divalent organic group,
R^{21'} is each independently -Z^{1"}-SiR^{22"}_{q1"}R^{23"}_{r1"};
R^{22'} is each independently a hydroxyl group or a hydrolyzable group,
R^{23'} is each independently a monovalent organic group,
p1' is each independently an integer of 0 to 3,
q1' is each independently an integer of 0 to 3,
r1' is each independently an integer of 0 to 3,
Z^{1"} is each independently a divalent organic group,
R^{22"} is each independently a hydroxyl group or a hydrolyzable group,
R^{23"} is each independently a monovalent organic group,
q1" is each independently an integer of 0 to 3,
r1" is each independently an integer of 0 to 3,
R^{b1} is each independently a hydroxyl group or a hydrolyzable group,
R^{c1} is each independently a monovalent organic group,
k1 is each independently an integer of 0 to 3,
l1 is each independently an integer of 0 to 3,
m1 is each independently an integer of 0 to 3,
provided that, in the formula (S3), at least two Si atoms to which a hydroxyl group or a hydrolyzable group is bonded are present,
R^{d1} is each independently -Z²-CR³¹ₚ₂R³²_{q2}R³³ᵣ₂,
Z² is each independently a single bond, an oxygen atom, or a divalent organic group,
R³¹ is each independently -Z^{2'}-CR^{32'}_{q2'}R^{33'}_{r2'},
R³² is each independently -Z³-SiR³⁴ₙ₂R³⁵₃₋ₙ₂,
R³³ is each independently a hydrogen atom, a hydroxyl group, or a monovalent organic group,
p2 is each independently an integer of 0 to 3,
q2 is each independently an integer of 0 to 3,
r2 is each independently an integer of 0 to 3,
Z^{2'} is each independently a single bond, an oxygen atom, or a divalent organic group,
R^{32'} is each independently -Z³-S1R³⁴ₙ₂R³⁵₃₋ₙ₂,
R^{33'} is each independently a hydrogen atom, a hydroxyl group, or a monovalent organic group,
q2' is each independently an integer of 0 to 3,
r2' is each independently an integer of 0 to 3,
Z³ is each independently a single bond, an oxygen atom, or a divalent organic group;
R³⁴ is each independently a hydroxyl group or a hydrolyzable group,
R³⁵ is each independently a monovalent organic group,
n2 is each independently an integer of 0 to 3,
R^{e1} is each independently -Z³-SiR³⁴ₙ₂³⁵₃₋ₙ₂,
R^{f1} is each independently a hydrogen atom, a hydroxyl group, or a monovalent organic group,
k2 is each independently an integer of 0 to 3,
l2 is each independently an integer of 0 to 3,
m2 is each independently an integer of 0 to 3,
provided that, in the formula (S4), at least two Si atoms to which a hydroxyl group or a hydrolyzable group is bonded are present,
R^{g1} and R^{h1} are each independently -Z⁴-SiR¹¹ₙ₁R¹²₃₋ₙ₁, -Z⁴-SiR^{a1}ₖ₁R^{b}ₗ₁R^{c1}ₘ₁, or -Z⁴-CR^{d1}ₖ₂R^{e1}ₗ₂R^{f1}ₘ₂, and
Z⁴ is each independently a single bond, an oxygen atom, or a divalent organic group,
provided that, in the formula (S5), at least two Si atoms to which a hydroxyl group or a hydrolyzable group is bonded are present.

In the formulae, R¹¹ is each independently a hydroxyl group or a hydrolyzable group.

R¹¹ is preferably, each independently, a hydrolyzable group.

R¹¹ is preferably, each independently, -OR^{h}, -OCOR^{h}, -O-N=CR^{h}₂, -NR^{h}₂, - NHR^{h}, -NCO, or a halogen (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

In the formulae, R¹² is each independently a monovalent organic group. Such a monovalent organic group is a monovalent organic group excluding the above hydrolyzable group.

In R¹², the monovalent organic group is preferably a C₁₋₂₀ alkyl group, more preferably a C₁₋₆ alkyl group, and even more preferably a methyl group.

In the formulae, n1 is each independently an integer of 0 to 3 for each (SiR¹¹ₙ₁R¹²₃₋ₙ₁) unit, provided that, in the formula (S1), at least two (SiR¹¹ₙ₁R¹²₃₋ₙ₁) units wherein n1 is 1 to 3 are present. In other words, in the formula (S1), at least two Si atoms to which a hydroxyl group or a hydrolyzable group is bonded are present.

n1 is each independently an integer of preferably 1 to 3, more preferably 2 to 3, and even more preferably 3 for each (SiR¹¹_{n1R}¹²₃₋ₙ₁) unit.

In the formula, X¹¹ is each independently a single bond or a divalent organic group. Such a divalent organic group is preferably -R²⁸-Oₓ-R²⁹-, wherein R²⁸ and R²⁹ are each independently a single bond or a C₁₋₂₀ alkylene group, and x is 0 or 1. Such a C₁₋₂₀ alkylene group may be linear or may be branched, and is preferably linear. Such a C₁₋₂₀ alkylene group is preferably a C₁₋₁₀ alkylene group, more preferably a C₁₋₆ alkylene group, and even more preferably a C₁₋₃ alkylene group.

In one embodiment, X¹¹ is each independently a -C₁₋₆ alkylene-O-C₁₋₆ alkylene- or a -O-C₁₋₆ alkylene-.

In a preferable embodiment, X¹¹ is each independently a single bond or a linear C₁₋₆ alkylene group, preferably a single bond or a linear C₁₋₃ alkylene group, more preferably a single bond or a linear C₁₋₂ alkylene group, and even more preferably a linear C₁₋₂ alkylene group.

In the formula, R¹³ is each independently a hydrogen atom or a monovalent organic group. Such a monovalent organic group is preferably a C₁₋₂₀ alkyl group.

In a preferable embodiment, R¹³ is each independently a hydrogen atom or a linear C₁₋₆ alkyl group, preferably a hydrogen atom or a linear C₁₋₃ alkyl group, and preferably a hydrogen atom or a methyl group.

In the formula, R¹⁵ is each independently a single bond, an oxygen atom, an alkylene group having 1 to 6 carbon atoms, or an alkyleneoxy group having 1 to 6 carbon atoms.

In one embodiment, R¹⁵ is each independently an oxygen atom, an alkylene group having 1 to 6 carbon atoms, or an alkyleneoxy group having 1 to 6 carbon atoms.

In a preferable embodiment, R¹⁵ is a single bond.

In the formula, t is each independently an integer of 2 or more.

In a preferable embodiment, t is each independently an integer of 2 to 10, and preferably an integer of 2 to 6.

In the formula, R¹⁴ is each independently a hydrogen atom, a halogen atom, or -X¹¹-SiR¹¹ₙ₁R¹²₃₋ₙ₁. Such a halogen atom is preferably an iodine atom, a chlorine atom, or a fluorine atom, and more preferably a fluorine atom. In a preferable embodiment, R¹⁴ is a hydrogen atom.

In one embodiment, the formula (S1) is the following formula (S1-a): 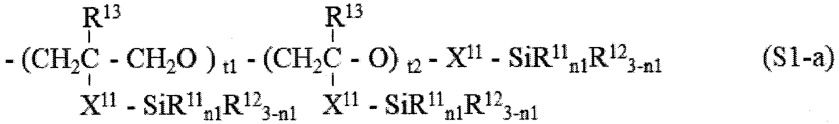 wherein
R¹¹, R¹², R¹³, X¹¹, and n1 have the same meanings as those described for the formula (S1),
t1 and t2 are each independently an integer of 1 or more, preferably an integer of 1 to 10, and more preferably an integer of 2 to 10, such as an integer of 1 to 5 or an integer of 2 to 5, and
the occurrence order of the respective repeating units enclosed in parentheses provided with t1 and t2 is not limited in the formula.

In a preferable embodiment, the formula (S1) is the following formula (S1-b): 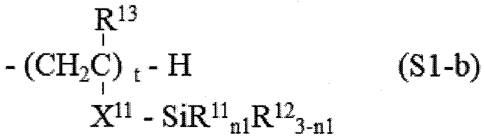 wherein R¹¹, R¹², R¹³, X¹¹, n1, and t have the same meanings as those described for the formula (S1).

R^{a1} is each independently -Z¹-SiR²¹ₚ₁R²²_{q1}R²³ᵣ₁.

Z¹ is each independently an oxygen atom or a divalent organic group. Below, the right side of the structure denoted as Z¹ binds to (SiR²¹ₚ₁R²²_{q1}R²³ᵣ₁).

In a preferable embodiment, Z¹ is a divalent organic group.

In a preferable embodiment, Z¹ does not include a group that forms a siloxane bond with the Si atom to which Z¹ is bonded. Preferably, in the formula (S2), (Si-Z¹-Si) does not include a siloxane bond.

Z¹ is preferably a C₁₋₃₀ alkylene group, -(CH₂)_{z1}-O-(CH₂)_{z2}- (wherein z1 is an integer of 0 to 6 such as an integer of 1 to 6, and z2 is an integer of 0 to 6 such as an integer of 1 to 6), or -(CH₂)_{z3}-phenylene-(CH₂)_{z4}- (wherein z3 is an integer of 0 to 6 such as an integer of 1 to 6, and z4 is an integer of 0 to 6 such as an integer of 1 to 6). Such a C₁₋₃₀ alkylene group is more preferably a C₁₋₂₀ alkylene group, and even more preferably a C₁₋₁₅ alkylene group, may be linear or branched, and is preferably linear. These groups may be substituted with, for example, one or more substituents selected from, a fluorine atom, a C₁₋₆ alkyl group, a C₂₋₆ alkenyl group, and a C₂₋₆ alkynyl group, and are preferably unsubstituted.

In a preferable embodiment, Z¹ is a C₁₋₂₀ alkylene group or -(CH₂)_{z3}-phenylene-(CH₂)_{z4}-, and preferably -phenylene-(CH₂)_{z4}-.

In another preferable embodiment, Z¹ is a C₁₋₂₀ alkylene group. In one embodiment, Z¹ may be -CH₂CH₂CH₂-. In another embodiment, Z¹ may be - CH₂CH₂-. In another embodiment, Z¹ may be - CH₂CH₂CH₂CH₂CH₂CH₂CH₂CH₂CH₂CH₂CH₂-.

R²¹ is each independently -Z^{1'}-SiR^{21'}_{p1'}R^{22'}_{q1'}R^{23'}_{r1'}.

Z^{1'} is each independently an oxygen atom or a divalent organic group. Below, the right side of the structure denoted as Z^{1'} binds to (SiR^{21'}_{p1'}R^{22'}_{q1'}R^{23'}_{r1'}).

In a preferable embodiment, Z^{1'} is a divalent organic group.

In a preferable embodiment, Z^{1'} does not include a group that forms a siloxane bond with the Si atom to which Z^{1'} is bonded. Preferably, in the formula (S2), (Si-Z^{1'}-Si) does not include a siloxane bond.

Z^{1'} is preferably a C₁₋₁₅ alkylene group, -(CH₂)_{z1'}-O-(CH₂)_{z2'}- (wherein z1' is an integer of 0 to 6 such as an integer of 1 to 6, and z2' is an integer of 0 to 6 such as an integer of 1 to 6), or -(CH₂)_{z3'}-phenylene-(CH₂)_{z4'}- (wherein z3' is an integer of 0 to 6 such as an integer of 1 to 6, and z4' is an integer of 0 to 6 such as an integer of 1 to 6). Such a C₁₋₃₀ alkylene group is more preferably a C₁₋₂₀ alkylene group, and even more preferably a C₁₋₁₅ alkylene group, may be linear or branched, and is preferably linear. These groups may be substituted with, for example, one or more substituents selected from, a fluorine atom, a C₁₋₆ alkyl group, a C₂₋₆ alkenyl group, and a C₂₋₆ alkynyl group, and are preferably unsubstituted.

In a preferable embodiment, Z^{1'} is a C₁₋₂₀ alkylene group or -(CH₂)_{z3'}-phenylene-(CH₂)_{z4'}-, and preferably -phenylene-(CH₂)_{z4'}-.

In another preferable embodiment, Z^{1'} is a C₁₋₂₀ alkylene group. In one embodiment, Z^{1'} may be -CH₂CH₂CH₂-. In another embodiment, Z¹' may be - CH₂CH₂-. In another embodiment, Z^{1'} may be - CH₂CH₂CH₂CH₂CH₂CH₂CH₂CH₂CH₂CH₂CH₂-.

R^{21'} is each independently -Z^{1"}-SiR^{22"}_{q1"}R^{23"}_{r1"}.

Z^{1"} is each independently an oxygen atom or a divalent organic group. Below, the right side of the structure denoted as Z^{1"} binds to (SiR^{22"}_{q1"}R^{23"}_{r1"}).

In a preferable embodiment, Z^{1"} is a divalent organic group.

In a preferable embodiment, Z^{1"} does not include a group that forms a siloxane bond with the Si atom to which Z^{1"} is bonded. Preferably, in the formula (S2), (Si-Z^{1"}-Si) does not include a siloxane bond.

Z^{1"} is preferably a C₁₋₁₅ alkylene group, -(CH₂)_{z1"}-O-(C_{H2})_{z2"}- (wherein z1" is an integer of 0 to 6 such as an integer of 1 to 6, and z2" is an integer of 0 to 6 such as an integer of 1 to 6), or -(CH₂)_{z3"}-phenylene-(CH₂)_{z4"}- (wherein z3" is an integer of 0 to 6 such as an integer of 1 to 6, and z4" is an integer of 0 to 6 such as an integer of 1 to 6). Such a C₁₋₆ alkylene group may be linear or may be branched, and is preferably linear. These groups may be substituted with, for example, one or more substituents selected from, a fluorine atom, a C₁₋₆ alkyl group, a C₂₋₆ alkenyl group, and a C₂₋₆ alkynyl group, and are preferably unsubstituted.

In a preferable embodiment, Z^{1"} is a C₁₋₂₀ alkylene group or -(CH₂)_{z3"}-phenylene-(CH₂)_{z4"}-, and preferably -phenylene-(CH₂)_{z4"}-. When Z^{1"} is such a group, light resistance, in particular ultraviolet resistance, can be more increased.

In another preferable embodiment, Z^{1"} is a C₁₋₂₀ alkylene group. In one embodiment, Z^{1"} may be -CH₂CH₂CH₂-. In another embodiment, Z^{1"} may be - CH₂CH₂-. In another embodiment, Z^{1"} may be - CH₂CH₂CH₂CH₂CH₂CH₂CH₂CH₂CH₂CH₂CH₂-.

R^{22"} is each independently a hydroxyl group or a hydrolyzable group.

R^{22"} is preferably, each independently, a hydrolyzable group.

R^{22"} is preferably, each independently, -OR^{h}, -OCOR^{h}, -O-N=CR^{h}₂, -NR^{h}₂, - NHR^{h}, or -NCO (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

R^{23"} is each independently a monovalent organic group. Such a monovalent organic group is a monovalent organic group excluding the above hydrolyzable group.

In R^{23"}, the monovalent organic group is preferably a C₁₋₂₀ alkyl group, more preferably a C₁₋₆ alkyl group, and even more preferably a methyl group.

q1" is each independently an integer of 0 to 3, and r1" is each independently an integer of 0 to 3. The sum of q1" and r1" is 3 in the (SiR^{22"}_{q1"}R^{23"}_{r1"}) unit.

q1" is preferably, each independently, an integer of 1 to 3, more preferably 2 to 3, and even more preferably 3 for each (SiR^{22"}_{q1"}R^{23"}_{r1"}) unit.

R^{22'} is each independently a hydroxyl group or a hydrolyzable group.

R^{22'} is preferably, each independently, a hydrolyzable group.

R^{22'} is preferably, each independently, -OR^{h}, -OCOR^{h}, -O-N=CR^{h}₂, -NR^{h}₂, - NHR^{h}, or -NCO (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

R^{23'} is each independently a monovalent organic group. Such a monovalent organic group is a monovalent organic group excluding the above hydrolyzable group.

In R^{23'}, the monovalent organic group is preferably a C₁₋₂₀ alkyl group, more preferably a C₁₋₆ alkyl group, and even more preferably a methyl group.

p1' is each independently an integer of 0 to 3, q1' is each independently an integer of 0 to 3, and r1' is each independently an integer of 0 to 3. The sum of p', q1', and r1' is 3 in the (SiR^{21'}_{p1'}R^{22'}_{q1'}R^{23'}_{r1'}) unit.

In one embodiment, p1' is 0.

In one embodiment, p1' may be each independently an integer of 1 to 3, an integer of 2 to 3, or 3 for each (SiR^{21'}_{p1'}R^{22'}_{q1'}R^{23'}_{r1'}) unit. In a preferable embodiment, p1' is 3.

In one embodiment, q1' is each independently an integer of 1 to 3, preferably an integer of 2 to 3, and more preferably 3 for each (SiR^{21'}_{pl'}R^{22'}_{q1'}R^{23'}_{r1'}) unit.

In one embodiment, p1' is 0, and q1' is each independently an integer of 1 to 3, preferably an integer of 2 to 3, and even more preferably 3 for each (SiR^{21'}_{p1'}R^{22'}_{q1'}R^{23'}_{r1'}) unit.

R²² is each independently a hydroxyl group or a hydrolyzable group.

R²² is preferably, each independently, a hydrolyzable group.

R²² is preferably, each independently, -OR^{h}, -OCOR^{h}, -O-N=CR^{h}₂, -NR^{h}₂, - NHR^{h}, or -NCO (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

R²³ is each independently a monovalent organic group. Such a monovalent organic group is a monovalent organic group excluding the above hydrolyzable group.

In R²³, the monovalent organic group is preferably a C₁₋₂₀ alkyl group, more preferably a C₁₋₆ alkyl group, and even more preferably a methyl group.

p1 is each independently an integer of 0 to 3, q1 is each independently an integer of 0 to 3, and r1 is each independently an integer of 0 to 3. The sum of p1, q1, and r1 is 3 in the (SiR²¹ₚ₁R²²_{q1}R²³ᵣ₁) unit.

In one embodiment, p1 is 0.

In one embodiment, p1 may be each independently an integer of 1 to 3, an integer of 2 to 3, or 3 for each (SiR²¹ₚ₁R²²_{q1}R²³ᵣ₁) unit. In a preferable embodiment, p1 is 3.

In one embodiment, q1 is each independently an integer of 1 to 3, preferably an integer of 2 to 3, and more preferably 3 for each (SiR²¹ₚ₁R²²_{q1}R²³ᵣ₁) unit.

In one embodiment, p1 is 0, and q1 is each independently an integer of 1 to 3, preferably an integer of 2 to 3, and even more preferably 3 for each (S1R²¹ₚ₁R²²_{q1}R²³ᵣ₁) unit.

In the formula, R^{b1} is each independently a hydroxyl group or a hydrolyzable group.

R^{b1} is preferably, each independently, a hydrolyzable group.

R^{b1} is preferably, each independently, -OR^{h}, -OCOR^{h}, -O-N=CR^{h}₂, -NR^{h}₂, - NHR^{h}, or -NCO (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

In the formula, R^{c1} is each independently a monovalent organic group. Such a monovalent organic group is a monovalent organic group excluding the above hydrolyzable group.

In R^{c1}, the monovalent organic group is preferably a C₁₋₂₀ alkyl group, more preferably a C₁₋₆ alkyl group, and even more preferably a methyl group.

k1 is each independently an integer of 0 to 3, 11 is each independently an integer of 0 to 3, and m1 is each independently an integer of 0 to 3. The sum of k1, 11, and m1 is 3 in the (SiR^{a1}ₖ₁R^{b1}ₗ₁R^{c1}ₘ₁) unit.

In one embodiment, k1 is each independently an integer of 1 to 3, preferably 2 or 3, and more preferably 3 for each (SiR^{a1}ₖ₁R^{b1}ₗ₁R^{c1}ₘ₁) unit. In a preferable embodiment, k1 is 3.

In the formula (S3), at least two Si atoms to which a hydroxyl group or a hydrolyzable group is bonded are present.

In a preferable embodiment, in the terminal moiety of the formula (S3), at least two Si atoms to which a hydroxyl group or a hydrolyzable group is bonded are present.

In a preferable embodiment, the group represented by the formula (S3) has any one of -Z¹-S₁R²²_{q1}R²³ᵣ₁ (wherein q1 is an integer of 1 to 3, preferably 2 or 3, and more preferably 3, and r1 is an integer of 0 to 2), -Z^{1'}-SiR^{22'}_{q1'}R^{23'}_{r1'} (wherein q1' is an integer of 1 to 3, preferably 2 or 3, and more preferably 3, and r1' is an integer of 0 to 2), and -Z^{1"}-SiR^{22"}_{q1"}R^{23"}_{r1"} (wherein q1" is an integer of 1 to 3, preferably 2 or 3, and more preferably 3, and r1" is an integer of 0 to 2). Z¹, Z^{1'}, Z^{1"}, R²², R²³, R^{22'}*,* R^{23'}, R^{22"}, and R^{23"} have the same meanings as those described above.

In a preferable embodiment, when R^{21'} is present in the formula (S3), q1" is an integer of 1 to 3, preferably 2 or 3, and more preferably 3 in at least one and preferably all R^{21'} groups.

In a preferable embodiment, when R²¹ is present in the formula (S3), p1' is 0, and q1' is an integer of 1 to 3, preferably 2 or 3, and more preferably 3 in at least one and preferably all R²¹ groups.

In a preferable embodiment, when R^{a1} is present in the formula (S3), p1 is 0, and q1 is an integer of 1 to 3, preferably 2 or 3, and more preferably 3 in at least one and preferably all R^{a1} groups.

In a preferable embodiment, in the formula (S3), k1 is 2 or 3 and is preferably 3, p1 is 0, q1 is 2 or 3 and is preferably 3.

R^{d1} is each independently -Z²-CR³¹ₚ₂R³²_{q2}R³³ᵣ₂.

Z² is each independently a single bond, an oxygen atom, or a divalent organic group. Below, the right side of the structure denoted as Z² binds to (CR³¹ₚ₂R³²_{q2}R³³ᵣ₂).

In a preferable embodiment, Z² is a divalent organic group.

In a preferable embodiment, Z² does not include a siloxane bond.

Z² is preferably a C₁₋₃₀ alkylene group, -(CH₂)_{z5}-O-(CH₂)_{z6}- (wherein z5 is an integer of 0 to 6 such as an integer of 1 to 6, and z6 is an integer of 0 to 6 such as an integer of 1 to 6), or -(CH₂)_{z7}-phenylene-(CH₂)_{z8}- (wherein z7 is an integer of 0 to 6 such as an integer of 1 to 6, and z8 is an integer of 0 to 6 such as an integer of 1 to 6). Such a C₁₋₃₀ alkylene group is more preferably a C₁₋₂₀ alkylene group, and even more preferably a C₁₋₁₅ alkylene group, may be linear or branched, and is preferably linear. These groups may be substituted with, for example, one or more substituents selected from, a C₁₋₆ alkyl group, a C₂₋₆ alkenyl group, and a C₂₋₆ alkynyl group, and are preferably unsubstituted.

In a preferable embodiment, Z² is a C₁₋₂₀ alkylene group or -(CH₂)_{z7}-phenylene-(CH₂)_{z8}-, and preferably -phenylene-(CH₂)_{z8}-. When Z² is such a group, light resistance, in particular ultraviolet resistance, can be more increased.

In another preferable embodiment, Z² is a C₁₋₂₀ alkylene group. In one embodiment, Z² may be -CH₂CH₂CH₂-. In another embodiment, Z² may be - CH₂CH₂-. In another embodiment, Z² may be - CH₂CH₂CH₂CH₂CH₂CH₂CH₂CH₂CH₂CH₂CH₂-.

R³¹ is each independently -Z^{2'}-CR^{32'}_{q2'}R^{33'}_{r2'}.

Z^{2'} is each independently a single bond, an oxygen atom, or a divalent organic group. Below, the right side of the structure denoted as Z^{2'} binds to (CR^{32'}_{q2'}R^{33'}_{r2'}).

In a preferable embodiment, Z^{2'} does not include a siloxane bond.

Z^{2'} is preferably a C₁₋₃₀ alkylene group, -(CH₂)_{z5'}-O-(CH₂)_{z6'}- (wherein z5' is an integer of 0 to 6 such as an integer of 1 to 6, and z6' is an integer of 0 to 6 such as an integer of 1 to 6), or -(CH₂)_{z7'}-phenylene-(CH₂)_{z8'}- (wherein z7' is an integer of 0 to 6 such as an integer of 1 to 6, and z8' is an integer of 0 to 6 such as an integer of 1 to 6). Such a C₁₋₃₀ alkylene group is more preferably a C₁₋₂₀ alkylene group, and even more preferably a C₁₋₁₅ alkylene group, may be linear or branched, and is preferably linear. These groups may be substituted with one or more substituents selected from, for example, a C₁₋₆ alkyl group, a C₂₋₆ alkenyl group, and a C₂₋₆ alkynyl group, and are preferably unsubstituted.

In a preferable embodiment, Z^{2'} is a C₁₋₂₀ alkylene group or -(CH₂)_{z7'}-phenylene-(CH₂)_{z8'}-, and preferably -phenylene-(CH₂)_{z8'}-. When Z^{2'} is such a group, light resistance, in particular ultraviolet resistance, can be more increased.

In another preferable embodiment, Z^{2'} is a C₁₋₂₀ alkylene group. In one embodiment, Z² may be -CH₂CH₂CH₂-. In another embodiment, Z² may be - CH₂CH₂-. In another embodiment, Z² may be - CH₂CH₂CH₂CH₂CH₂CH₂CH₂CH₂CH₂CH₂CH₂-.

Z³ is each independently a single bond, an oxygen atom, or a divalent organic group. Below, the right side of the structure denoted as Z³ binds to (SiR³⁴ₙ₂R³⁵₃₋ₙ₂).

In one embodiment, Z³ is an oxygen atom.

In one embodiment, Z³ is a divalent organic group.

In a preferable embodiment, Z³ does not include a siloxane bond.

Z³ is preferably a C₁₋₃₀ alkylene group, -(CH₂)_{z5"}-O-(CH₂)_{z6"}- (wherein z5" is an integer of 0 to 6 such as an integer of 1 to 6, and z6" is an integer of 0 to 6 such as an integer of 1 to 6), -(CH₂)_{z7"}-phenylene-(CH₂)_{z8"}- (wherein z7" is an integer of 0 to 6 such as an integer of 1 to 6, and z8" is an integer of 0 to 6 such as an integer of 1 to 6), or -(CH₂)_{z9"}-OCONR^{z1}-(CH₂)_{z10"}- (wherein R^{z1} is a hydrogen atom or a C₁₋₆ alkyl group, particularly a hydrogen atom, z9" is an integer of 0 to 6 such as an integer of 1 to 6, and z10" is an integer of 0 to 6 such as an integer of 1 to 6). Such a C₁₋₃₀ alkylene group is more preferably a C₁₋₂₀ alkylene group, and even more preferably a C₁₋₁₅ alkylene group, and may be linear or may be branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z³ is a C₁₋₁₅ alkylene group, -(CH₂)_{z7"}-phenylene-(CH₂)_{z8"}-, or -(CH₂)_{z9"}-OCONR^{z1}-(CH₂)_{z10"}-, and preferably -phenylene-(CH₂)_{z8"}- or - (CH₂)_{z9"}-OCONR^{z1}-(CH₂)_{z10"}-. When Z³ is such a group, light resistance, in particular ultraviolet resistance, can be more increased.

In another preferable embodiment, Z³ is a C₁₋₂₀ alkylene group. In one embodiment, Z³ may be -CH₂CH₂CH₂-. In another embodiment, Z³ may be - CH₂CH₂-. In another embodiment, Z³ may be - CH₂CH₂CH₂CH₂CH₂CH₂CH₂CH₂CH₂CH₂CH₂-.

R³⁴ is each independently a hydroxyl group or a hydrolyzable group.

R³⁴ is preferably, each independently, a hydrolyzable group.

R³⁴ is preferably, each independently, -OR^{h}, -OCOR^{h}, -O-N=CR^{h}₂, -NR^{h}₂, - NHR^{h}, -NCO, or a halogen (in these formulae, R^{h} represents a substituted or unsubstituted C₁₋₄ alkyl group), and more preferably -OR^{h} (i.e., an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{h} is a methyl group, and in another embodiment, R^{h} is an ethyl group.

R³⁵ is each independently a monovalent organic group. Such a monovalent organic group is a monovalent organic group excluding the above hydrolyzable group.

In R³⁵, the monovalent organic group is preferably a C₁₋₂₀ alkyl group, more preferably a C₁₋₆ alkyl group, and even more preferably a methyl group.

n2 is each independently an integer of 0 to 3 for each (SiR³⁴ₙ₂R³⁵₃₋ₙ₂) unit, provided that, in the terminal moiety of the formula (S3), at least two (S1R³⁴ₙ₂R³⁵₃₋ₙ₂) units wherein n2 is 1 to 3 are present. In other words, in the terminal moiety of the formula (S3), at least two Si atoms to which a hydroxyl group or a hydrolyzable group is bonded are present.

n2 is each independently an integer of preferably 1 to 3, more preferably 2 to 3, and even more preferably 3 for each (SiR³⁴ₙ₂R³⁵₃₋ₙ₂) unit.

R^{33'} is each independently a hydrogen atom, a hydroxyl group, or a monovalent organic group. Such a monovalent organic group is a monovalent organic group excluding the hydrolyzable group.

In R^{33'}, the monovalent organic group is preferably a C₁₋₂₀ alkyl group or - (CₛH₂ₛ)ₜ₁-(O-CₛH₂ₛ)ₜ₂H (wherein s is an integer of 1 to 6, preferably an integer of 2 to 4, t1 is 1 or 0 and preferably 0, and t2 is an integer of 1 to 20, preferably an integer of 2 to 10, and more preferably an integer of 2 to 6), more preferably a C₁₋₂₀ alkyl group, even more preferably a C₁₋₆ alkyl group, and particularly preferably a methyl group.

In one embodiment, R^{33'} is a hydroxyl group.

In another embodiment, R^{33'} is a monovalent organic group, preferably a C₁₋₂₀ alkyl group, and more preferably a C₁₋₆ alkyl group.

q2' is each independently an integer of 0 to 3, and r2' is each independently an integer of 0 to 3. The sum of q2' and r2' is 3 in the (CR^{32'}_{q2'}R^{33'}_{r2'}) unit.

q2' is each independently an integer of preferably 1 to 3, more preferably 2 to 3, and even more preferably 3 for each (CR^{32'}_{q2'}R^{33'}_{r2'}) unit.

R³² is each independently -Z³-SiR³⁴ₙ₂R³⁵₃₋ₙ₂. Such -Z³-SiR³⁴ₙ₂R³⁵₃₋ₙ₂ has the same meanings as those described for R³²

R³³ is each independently a hydrogen atom, a hydroxyl group, or a monovalent organic group. Such a monovalent organic group is a monovalent organic group excluding the above hydrolyzable group.

In R³³, the monovalent organic group is preferably a C₁₋₂₀ alkyl group or - (CₛH₂ₛ)ₜ₁-(O-CₛH₂ₛ)ₜ₂H (wherein s is an integer of 1 to 6, preferably an integer of 2 to 4, t1 is 1 or 0 and preferably 0, and t2 is an integer of 1 to 20, preferably an integer of 2 to 10, and more preferably an integer of 2 to 6), more preferably a C₁₋₂₀ alkyl group, even more preferably a C₁₋₆ alkyl group, and particularly preferably a methyl group.

In one embodiment, R³³ is a hydroxyl group.

In another embodiment, R³³ is a monovalent organic group, preferably a C₁₋₂₀ alkyl group, and more preferably a C₁₋₆ alkyl group.

p2 is each independently an integer of 0 to 3, q2 is each independently an integer of 0 to 3, and r2 is each independently an integer of 0 to 3. The sum of p2, q2, and r2 is 3 in the (CR³¹ₚ₂R³²_{q2}R³³ᵣ₂) unit.

In one embodiment, p2 is 0.

In one embodiment, p2 may be each independently an integer of 1 to 3, an integer of 2 to 3, or 3 for each (CR³¹ₚ₂R³²_{q2}R³³ᵣ₂) unit. In a preferable embodiment, p2 is 3.

In one embodiment, q2 is each independently an integer of 1 to 3, preferably an integer of 2 to 3, and more preferably 3 for each (CR³¹ₚ₂R³²_{q2}R³³ᵣ₂) unit.

In one embodiment, p2 is 0, and q2 is each independently an integer of 1 to 3, preferably an integer of 2 to 3, and even more preferably 3 for each (CR³¹ₚ₂R³²_{q2}R³³ᵣ₂) unit.

R^{e1} is each independently -Z³-SiR³⁴ₙ₂R³⁵₃₋ₙ₂. Such -Z³-SiR³⁴ₙ₂R³⁵₃₋ₙ₂ has the same meanings as those described for R^{32'}.

R^{f1} is each independently a hydrogen atom, a hydroxyl group, or a monovalent organic group. Such a monovalent organic group is a monovalent organic group excluding the above hydrolyzable group.

In R^{f1}, the monovalent organic group is preferably a C₁₋₂₀ alkyl group, a C₂₋₂₀ alkenyl group, or -(CₛH₂ₛ)ₜ₁-(O-CₛH₂ₛ)ₜ₂H (wherein s is an integer of 1 to 6, and preferably an integer of 2 to 4, t1 is 1 or 0 and preferably 0, and t2 is an integer of 1 to 20, preferably an integer of 2 to 10, and more preferably an integer of 2 to 6), more preferably a C₁₋₂₀ alkyl group or a C₂₋₂₀ alkenyl group, even more preferably a C₁₋₆ alkyl group or a C₂₋₆ alkenyl group, and particularly preferably a methyl group, an ethyl group, or a 2-propenyl group.

In one embodiment, R^{f1} is a hydrogen atom.

In one embodiment, R^{f1} is a hydroxyl group.

In another embodiment, R^{f1} is a monovalent organic group, preferably a C₁₋₂₀ alkyl group or a C₂₋₂₀ alkenyl group, and more preferably a C₁₋₆ alkyl group or a C₂₋₆ alkenyl group.

k2 is each independently an integer of 0 to 3, 12 is each independently an integer of 0 to 3, and m2 is each independently an integer of 0 to 3. The sum of k2, l2, and m2 is 3 in the (CR^{d1}ₖ₂R^{e1}ₗ₂R^{f1}ₘ₂) unit.

In one embodiment, two or more such as 2 to 27, preferably 2 to 9, more preferably 2 to 6, even more preferably 2 to 3, and particularly preferably 3 (SiR³⁴ₙ₂R³⁵₃₋ₙ₂) units in which n2 is 1 to 3, preferably 2 or 3, and more preferably 3 are present in each terminal moiety of the formula (S4).

In a preferable embodiment, when R^{32'} is present in the formula (S4), n2 is an integer of 1 to 3, preferably 2 or 3, and more preferably 3 in at least one and preferably all R^{32'} groups.

In a preferable embodiment, when R³² is present in the formula (S4), n2 is an integer of 1 to 3, preferably 2 or 3, and more preferably 3 in at least one and preferably all R³² groups.

In a preferable embodiment, when R^{e1} is present in the formula (S4), n2 is an integer of 1 to 3, preferably 2 or 3, and more preferably 3 in at least one and preferably all R^{a1} groups.

In a preferable embodiment, in the formula (S4), k2 is 0, 12 is 2 or 3 and is preferably 3, and n2 is 2 or 3 and is preferably 3.

R^{g1} and R^{h1} are each independently -Z⁴-SiR¹¹ₙ₁R¹²₃₋ₙ₁, -Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂. Here, R^{l1}, R^{l2}, R^{a1}, R^{b2}, R^{c1}, R^{d1}, R^{e1}, R^{f1}, n1, k1, l1, m1, k2, l2, and m2 have the same meanings as above.

In a preferable embodiment, R^{g1} and R^{h1} are each independently -Z⁴-SiR¹¹ₙ₁R¹²₃₋ₙ₁.

Z⁴ is each independently a single bond, an oxygen atom, or a divalent organic group. Below, the right side of the structure denoted as Z⁴ binds to (SiR^{l1}ₙ₁R^{l2}₃₋ₙ₁).

In one embodiment, Z⁴ is an oxygen atom.

In one embodiment, Z⁴ is a divalent organic group.

In a preferable embodiment, Z⁴ does not include a siloxane bond.

Z⁴ is preferably a C₁₋₃₀ alkylene group, -(CH₂)_{z5"}-O-(CH₂)_{z6"}- (wherein z5" is an integer of 0 to 6 such as an integer of 1 to 6, and z6" is an integer of 0 to 6 such as an integer of 1 to 6), or -(CH₂)_{z7"}-phenylene-(CH₂)_{z8"}- (wherein z7" is an integer of 0 to 6 such as an integer of 1 to 6, and z8" is an integer of 0 to 6 such as an integer of 1 to 6). Such a C₁₋₃₀ alkylene group is more preferably a C₁₋₂₀ alkylene group, and even more preferably a C₁₋₁₅ alkylene group, may be linear or branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z⁴ is a C₁₋₂₀ alkylene group or -(CH₂)_{z7"}-phenylene-(CH₂)_{z8"}-, and preferably -phenylene-(CH₂)_{z8"}-. When Z³ is such a group, light resistance, in particular ultraviolet resistance, can be more increased.

In another preferable embodiment, Z⁴ is a C₁₋₂₀ alkylene group. In one embodiment, Z⁴ may be -CH₂CH₂CH₂-. In another embodiment, Z⁴ may be - CH₂CH₂-. In another embodiment, Z⁴ may be - CH₂CH₂CH₂CH₂CH₂CH₂CH₂CH₂CH₂CH₂CH₂-.

In one embodiment, none of the formulae (S1), (S2), (S3), and (S4) comprises a siloxane bond.

In one embodiment, R^{Si} is a group represented by the formula (S2), (S3), (S4), or (S5).

In one embodiment, R^{Si1} is a group represented by the formula (S2), (S3), or (S4).

In one embodiment, R^{Si1} is a group represented by the formula (S3), (S4), or (S5).

In one embodiment, R^{Si1} is a group represented by the formula (S3) or (S4).

In one embodiment, R^{Si1} is a group represented by the formula (S4) or (S5).

In one embodiment, R^{Si1} is a group represented by the formula (S1). In a preferable embodiment, n1 is 1 to 3, preferably 2 to 3, and even more preferably 3.

In one embodiment, R^{Si1} is a group represented by the formula (S2). In a preferable embodiment, the formula (S2) is the following formulae. In the following formulae, * represents the point of attachment to X¹.

* -Si(OCH₃)₃

* -Si(OCH₂CH₃)₃

In one embodiment, R^{Si1} is a group represented by the formula (S3). In a preferable embodiment, the formula (S3) is -SiR^{a1}₂R^{c1} or -SiR^{a1}₃, R^{a1} is -Z¹-SiR²²_{q1}R²³ᵣ₁, Z¹ is a C₁₋₁₅ alkylene group, -(CH₂)_{z1}-O-(CH₂)_{z2}- (wherein z1 is an integer of 0 to 6 such as an integer of 1 to 6, and z2 is an integer of 0 to 6 such as an integer of 1 to 6), or -(CH₂)_{z3}-phenylene-(CH₂)_{z4}- (wherein z3 is an integer of 0 to 6 such as an integer of 1 to 6, and z4 is an integer of 0 to 6 such as an integer of 1 to 6), preferably a C₁₋₁₅ alkylene group, and q1 is 1 to 3, preferably 2 to 3, and even more preferably 3.

In a preferable embodiment, the formula (S3) is the following formulae. In the following formulae, * represents the point of attachment to X¹.

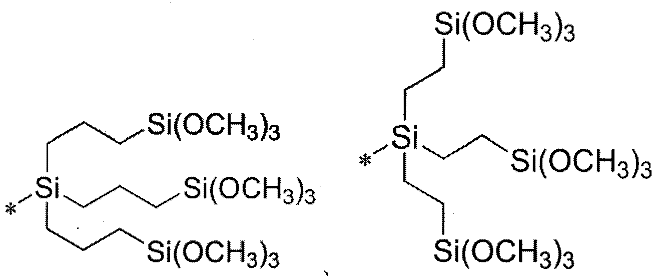

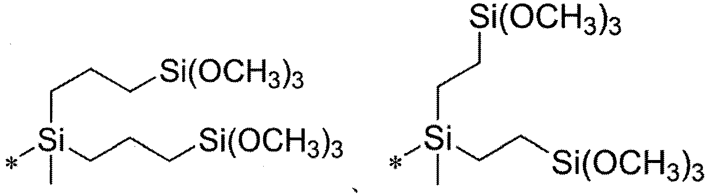

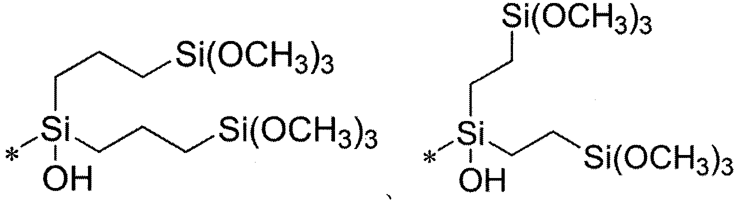

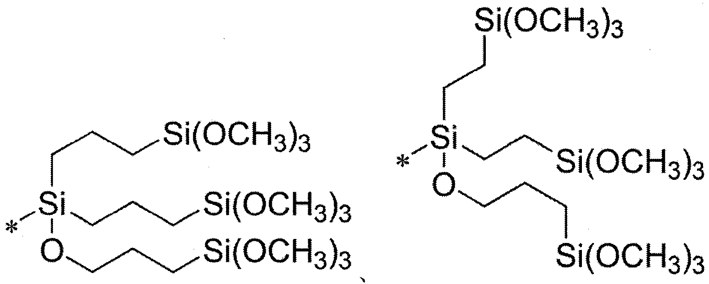

In one embodiment, R^{Si1} is a group represented by the formula (S4). In a preferable embodiment, the formula (S4) is -CR^{e1}₂R^{f1} or -CR^{e1}₃, R^{e1} is -Z³-SiR³⁴ₙ₂R³⁵₃₋ₙ₂, Z³ is a C₁₋₁₅ alkylene group, -(CH₂)_{z5"}-O-(CH₂)_{z6"}- (wherein z5" is an integer of 0 to 6 such as an integer of 1 to 6, and z6" is an integer of 0 to 6 such as an integer of 1 to 6), or -(CH₂)_{z7"}-phenylene-(CH₂)_{z8"}- (wherein z7" is an integer of 0 to 6 such as an integer of 1 to 6, and z8" is an integer of 0 to 6 such as an integer of 1 to 6), preferably a C₁₋₁₅ alkylene group, and n2 is 1 to 3, preferably 2 to 3, and even more preferably 3.

In a preferable embodiment, the formula (S4) is the following formulae. In the following formulae, * represents the point of attachment to X¹.

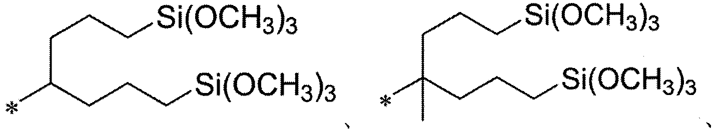

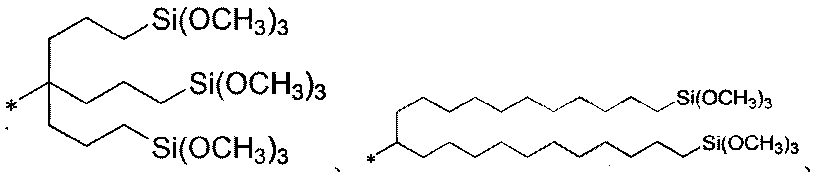

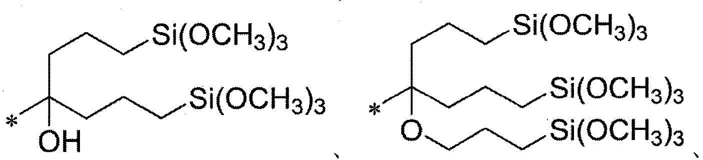

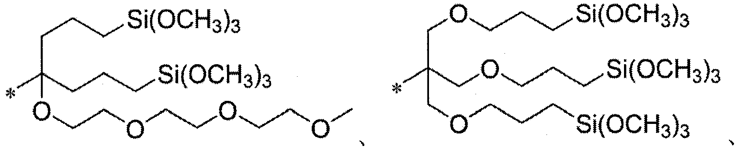

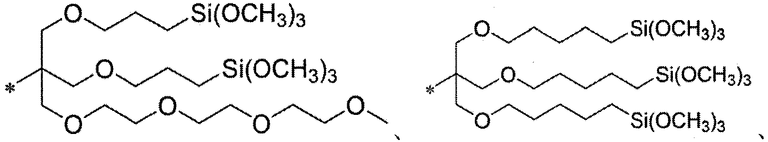

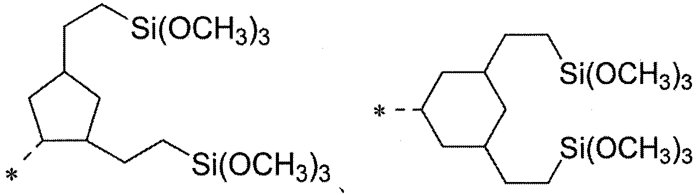

In one embodiment, R^{Si1} is a group represented by the formula (S5). In a preferable embodiment, R^{g1} and R^{h1} are -Z⁴-SiR¹¹ₙ₁R¹²₃₋ₙ₁, Z⁴ is a C₁₋₁₅ alkylene group, -(CH₂)_{z5"}-O-(CH₂)_{z6"}- (wherein z5" is an integer of 0 to 6 such as an integer of 1 to 6, and z6" is an integer of 0 to 6 such as an integer of 1 to 6), or -(CH₂)_{z7"}-phenylene-(CH₂)_{z8"}- (wherein z7" is an integer of 0 to 6 such as an integer of 1 to 6, and z8" is an integer of 0 to 6 such as an integer of 1 to 6), preferably a C₁₋₁₅ alkylene group, and n1 is 1 to 3, preferably 2 to 3, and even more preferably 3.

In a preferable embodiment, formula (S5) is the following formulae. In the following formulae, * represents the point of attachment to X¹.

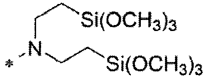

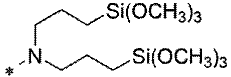

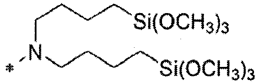

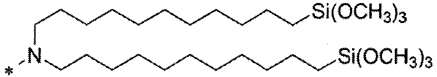

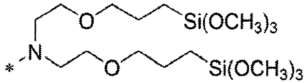

The compound represented by the formula (1) preferably includes a compound represented by the formula (1): R^{A}_{α}-X¹-R^{Si1}_{β}, wherein
R^{A} is R¹ₙₐR²₃₋ₙₐSi-(O)ₚₐ- in R¹: -(R⁴-SiR³₂)ₘₐ-R³, R³ is a methyl group, R⁴ is an oxygen atom, ma is 1, and pa is 1,
X¹ is -R^{S}-(CH₂)ₚ-(X)ᵣ-Rₚ-,
R^{S} is a group represented by the following formula: 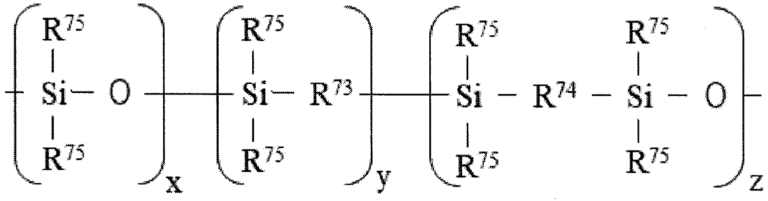
wherein R⁷⁵ is a methyl group, x is an integer of 10 to 300, and preferably an integer of 10 to 150, and y and z are 0, p is an integer of 11 to 60, and preferably an integer of 11 to 30, r is 0 or 1, X is -C(=O)NR⁴¹-, -C(=O)-, or -C(=O)O-, R⁴¹ is a hydrogen atom, an oxyalkylene-containing group, an alkyl group having 1 to 6 carbon atoms, or a phenyl group, R^{p} is a single bond or an alkylene group having 1 to 60 carbon atoms, and more preferably 1 to 30 carbon atoms, and
R^{Si1} is -X^{b}R^{a1}ₖ₁R^{b}ₗ₁R^{c1}ₘ₁, wherein X^{b} is a silicon atom, a carbon atom, or a nitrogen atom, and R^{a1}, R^{b1}, R^{c1}, k1, 11, and m1 have respectively the same meanings as above.

Examples of the compound represented by the formula (1) includes those having the following structures:
· CH₃-[Si(CH₃)₂O]ₙ₁Si(CH₃)₂-(CH₂)_{H1}-C(=O)NHCH₂CH₂CH₂Si(OCH₃)₃ (wherein n1 is an integer of 0 to 300, and H1 is an integer of 1 to 50);
· CH₃CH₂CH₂CH₂-[Si(CH₃)₂O]ₙ₁Si(CH₃)₂-(CH₂)_{H1}-C(=O)NHCH₂CH₂CH₂Si(OCH₃)₃ (wherein n1 is an integer of 0 to 300, and H1 is an integer of 1 to 50);
· [(CH₃)₃SiO)]₂(CH₃)Si-O-[Si(CH₃)₂O]ₙ₁Si(CH₃)₂-(CH₂)_{H1}-C(=O)NHCH₂CH₂CH₂Si(OCH₃)₃ (wherein n1 is an integer of 0 to 300, and H1 is an integer of 1 to 50);
· [(CH₃)₃SiO)]₃Si-O-[Si(CH₃)₂O]ₙ₁Si(CH₃)₂-(CH₂)_{H1}-C(=O)NHCH₂CH₂CH₂Si(OCH₃)₃ (wherein n1 is an integer of 0 to 300, and H1 is an integer of 1 to 50);
· CH₃-[Si(CH₃)₂O]ₙ₁Si(CH₃)₂-(CH₂)_{H1}-C(=O)NHCH₂CH[CH₂CH₂CH₂Si(OCH₃)₃]₂ (wherein n1 is an integer of 0 to 300, and H1 is an integer of 1 to 50);
· CH₃CH₂CH₂CH₂-[Si(CH₃)₂O]ₙ₁Si(CH₃)₂-(CH₂)_{H1}-C(=O)NHCH₂CH[CH₂CH₂CH₂Si(OCH₃)₃]₂ (wherein n1 is an integer of 0 to 300, and H1 is an integer of 1 to 50);
· [(CH₃)₃SiO)]₂(CH₃)Si-O-[Si(CH₃)₂O]ₙ₁Si(CH₃)₂-(CH₂)_{H1}-C(=O)NHCH₂CH[CH₂CH₂CH₂Si(OCH₃)₃]₂ (wherein n1 is an integer of 0 to 300, and H1 is an integer of 1 to 50);
. [(CH₃)₃SiO)]₃Si-O-[Si(CH₃)₂O]ₙ₁Si(CH₃)₂-(CH₂)_{H1}-C(=O)NHCH₂CH[CH₂CH₂CH₂Si(OCH₃)₃]₂ (wherein n1 is an integer of 0 to 300, and H1 is an integer of 1 to 50);
· CH₃-[Si(CH₃)₂O]ₙ₁Si(CH₃)₂-(CH₂)_{H1}-C(=O)NHCH₂CH[CH₂CH₂CH₂CH₂CH₂CH₂CH₂CH₂CH₂CH₂CH₂Si(OCH₃)₃]₂ (wherein n1 is an integer of 0 to 300, and H1 is an integer of 1 to 50);
· CH₃CH₂CH₂CH₂-[Si(CH₃)₂O]ₙ₁Si(CH₃)₂-(CH₂)_{H1}-C(=O)NHCH₂CH[CH₂CH₂CH₂CH₂CH₂CH₂CH₂CH₂CH₂CH₂CH₂Si(OCH₃)₃]₂ (wherein n1 is an integer of 0 to 300, and H1 is an integer of 1 to 50);
· [(CH₃)₃SiO)]₂(CH₃)Si-O-[Si(CH₃)₂O]ₙ₁Si(CH₃)₂-(CH₂)_{H1}-C(=O)NHCH₂CH[CH₂CH₂CH₂CH₂CH₂CH₂CH₂CH₂CH₂CH₂CH₂Si(OCH₃)₃]₂ (wherein n1 is an integer of 0 to 300, and H1 is an integer of 1 to 50);
· [(CH₃)₃SiO)]₃Si-O-[Si(CH₃)₂O]ₙ₁Si(CH₃)₂-(CH₂)_{H1}-C(=O)NHCH₂CH[CH₂CH₂CH₂CH₂CH₂CH₂CH₂CH₂CH₂CH₂CH₂Si(OCH₃)₃]₂ (wherein n1 is an integer of 0 to 300, and H1 is an integer of 1 to 50);
· CH₃-[Si(CH₃)₂O]ₙ₁Si(CH₃)₂-(CH₂)_{H1}-C(=O)N[CH₂CH₂CH₂Si(OCH₃)₃]₂ (wherein n1 is an integer of 0 to 300, and H1 is an integer of 1 to 50);
· CH₃CH₂CH₂CH₂-[Si(CH₃)₂O]ₙ₁Si(CH₃)₂-(CH₂)_{H1}-C(=O)N[CH₂CH₂CH₂Si(OCH₃)₃]₂ (wherein n1 is an integer of 0 to 300, and H1 is an integer of 1 to 50);
· [(CH₃)₃SiO)]₂(CH₃)Si-O-[Si(CH₃)₂O]ₙ₁Si(CH₃)₂-(CH₂)_{H1}-C(=O)N[CH₂CH₂CH₂Si(OCH₃)₃]₂ (wherein n1 is an integer of 0 to 300, and H1 is an integer of 1 to 50);
· [(CH₃)₃SiO)]₃Si-O-[Si(CH₃)₂O]ₙ₁Si(CH₃)₂-(CH₂)_{H1}-C(=O)N[CH₂CH₂CH₂Si(OCH₃)₃]₂ (wherein n1 is an integer of 0 to 300, and H1 is an integer of 1 to 50);
· CH₃-[Si(CH₃)₂O]ₙ₁Si(CH₃)₂-(CH₂)_{H1}-C(=O)NHCH₂C[CH₂CH₂CH₂Si(OCH₃)₃]₃ (wherein n1 is an integer of 0 to 300, and H1 is an integer of 1 to 50);
· CH₃CH₂CH₂CH₂-[Si(CH₃)₂O]ₙ₁Si(CH₃)₂-(CH₂)_{H1}-C(=O)NHCH₂C[CH₂CH₂CH₂Si(OCH₃)₃]₃ (wherein n1 is an integer of 0 to 300, and H1 is an integer of 1 to 50);
· [(CH₃)₃SiO)]₂(CH₃)Si-O-[Si(CH₃)₂O]ₙ₁Si(CH₃)₂-(CH₂)_{H1}-C(=O)NHCH₂C[CH₂CH₂CH₂Si(OCH₃)₃]₃ (wherein n1 is an integer of 0 to 300, and H1 is an integer of 1 to 50);
· [(CH₃)₃SiO)]₃Si-O-[Si(CH₃)₂O]ₙ₁Si(CH₃)₂-(CH₂)_{H1}-C(=O)NHCH₂C[CH₂CH₂CH₂Si(OCH₃)₃]₃ (wherein n1 is an integer of 0 to 300, and H1 is an integer of 1 to 50);
· [(CH₃)₃SiO)]₂(CH₃)Si-(CH₂)_{H1}-C(=O)NHCH₂CH₂CH₂Si(OCH₃)₃ (wherein H1 is an integer of 1 to 50);
· [(CH₃)₃SiO)]₃Si-(CH₂)_{H1}-C(=O)NHCH₂CH₂CH₂Si(OCH₃)₃ (wherein H1 is an integer of 1 to 50);
· [(CH₃)₃SiO)]₂(CH₃)Si-(CH₂)_{H1}-C(=O)NHCH₂CH[CH₂CH₂CH₂Si(OCH₃)₃]₂ (wherein H1 is an integer of 1 to 50);
· [(CH₃)₃SiO)]₃Si-(CH₂)_{H1}-C(=O)NHCH₂CH[CH₂CH₂CH₂Si(OCH₃)₃]₂ (wherein H1 is an integer of 1 to 50);
· [(CH₃)₃SiO)]₂(CH₃)Si-(CH₂)_{H1}-C(=O)NHCH₂CH[CH₂CH₂CH₂CH₂CH₂CH₂CH₂CH₂CH₂CH₂CH₂Si(OCH₃)₃]₂ (wherein H1 is an integer of 1 to 50);
· [(CH₃)₃SiO)]₃Si-(CH₂)_{H1}-C(=O)NHCH₂CH[CH₂CH₂CH₂CH₂CH₂CH₂CH₂CH₂CH₂CH₂CH₂Si(OCH₃)₃]₂ (wherein H1 is an integer of 1 to 50);
· [(CH₃)₃SiO)]₂(CH₃)Si-(CH₂)_{H1}-C(=O)N[CH₂CH₂CH₂Si(OCH₃)₃]₂ (wherein H1 is an integer of 1 to 50);
· [(CH₃)₃SiO)]₃Si-(CH₂)_{H1}-C(=O)N[CH₂CH₂CH₂Si(OCH₃)₃]₂ (wherein H1 is an integer of 1 to 50);
· [(CH₃)₃SiO)]₂(CH₃)Si-(CH₂)_{H1}-C(=O)NHCH₂C[CH₂CH₂CH₂Si(OCH₃)₃]₃ (wherein H1 is an integer of 1 to 50); and
· [(CH₃)₃SiO)]₃Si-(CH₂)_{H1}-C(=O)NHCH₂C[CH₂CH₂CH₂Si(OCH₃)₃]₃ (wherein H1 is an integer of 1 to 50).

In one embodiment, the compound represented by the formula (1) has any of the following structures:
· CH₃-[Si(CH₃)₂O]ₙ₁Si(CH₃)₂-(CH₂)_{H1}-C(=O)NHCH₂CH₂CH₂Si(OCH₃)₃ (wherein n1 is an integer of 0 to 300, and H1 is an integer of 10 to 30);
· CH₃CH₂CH₂CH₂-[Si(CH₃)₂O]ₙ₁Si(CH₃)₂-(CH₂)_{H1}-C(=O)NHCH₂CH₂CH₂Si(OCH₃)₃ (wherein n1 is an integer of 0 to 300, and H1 is an integer of 10 to 30);
· [(CH₃)₃SiO)]₂(CH₃)Si-O-[Si(CH₃)₂O]ₙ₁Si(CH₃)₂-(CH₂)_{H1}-C(=O)NHCH₂CH₂CH₂Si(OCH₃)₃ (wherein n1 is an integer of 0 to 300, and H1 is an integer of 10 to 30);
· [(CH₃)₃SiO)]₃Si-O-[Si(CH₃)₂O]ₙ₁Si(CH₃)₂-(CH₂)_{H1}-C(=O)NHCH₂CH₂CH₂Si(OCH₃)₃ (wherein n1 is an integer of 0 to 300, and H1 is an integer of 10 to 30);
· CH₃-[Si(CH₃)₂O]ₙ₁Si(CH₃)₂-(CH₂)_{H1}-C(=O)NHCH₂CH[CH₂CH₂CH₂Si(OCH₃)₃]₂ (wherein n1 is an integer of 0 to 300, and H1 is an integer of 10 to 30);
· CH₃CH₂CH₂CH₂-[Si(CH₃)₂O]ₙ₁Si(CH₃)₂-(CH₂)_{H1}-C(=O)NHCH₂CH[CH₂CH₂CH₂Si(OCH₃)₃]₂ (wherein n1 is an integer of 0 to 300, and H1 is an integer of 10 to 30);
· [(CH₃)₃SiO)]₂(CH₃)Si-O-[Si(CH₃)₂O]ₙ₁Si(CH₃)₂-(CH₂)_{H1}-C(=O)NHCH₂CH[CH₂CH₂CH₂Si(OCH₃)₃]₂ (wherein n1 is an integer of 0 to 300, and H1 is an integer of 10 to 30);
· [(CH₃)₃SiO)]₃Si-O-[Si(CH₃)₂O]ₙ₁Si(CH₃)₂-(CH₂)_{H1}-C(=O)NHCH₂CH[CH₂CH₂CH₂Si(OCH₃)₃]₂ (wherein n1 is an integer of 0 to 300, and H1 is an integer of 10 to 30);
· CH₃-[Si(CH₃)₂O]ₙ₁Si(CH₃)₂-(CH₂)_{H1}-C(=O)NHCH₂CH[CH₂CH₂CH₂CH₂CH₂CH₂CH₂CH₂CH₂CH₂CH₂Si(OCH₃)₃]₂ (wherein n1 is an integer of 0 to 300, and H1 is an integer of 10 to 30);
· CH₃CH₂CH₂CH₂-[Si(CH₃)₂O]ₙ₁Si(CH₃)₂-(CH₂)_{H1}-C(=O)NHCH₂CH[CH₂CH₂CH₂CH₂CH₂CH₂CH₂CH₂CH₂CH₂CH₂Si(OCH₃)₃]₂ (wherein n1 is an integer of 0 to 300, and H1 is an integer of 10 to 30);
· [(CH₃)₃SiO)]₂(CH₃)Si-O-[Si(CH₃)₂O]ₙ₁Si(CH₃)₂-(CH₂)_{H1}-C(=O)NHCH₂CH[CH₂CH₂CH₂CH₂CH₂CH₂CH₂CH₂CH₂CH₂CH₂Si(OCH₃)₃]₂ (wherein n1 is an integer of 0 to 300, and H1 is an integer of 10 to 30);
· [(CH₃)₃SiO)]₃Si-O-[Si(CH₃)₂O]ₙ₁Si(CH₃)₂-(CH₂)_{H1}-C(=O)NHCH₂CH[CH₂CH₂CH₂CH₂CH₂CH₂CH₂CH₂CH₂CH₂CH₂Si(OCH₃)₃]₂ (wherein n1 is an integer of 0 to 300, and H1 is an integer of 10 to 30);
· CH₃-[Si(CH₃)₂O]ₙ₁Si(CH₃)₂-(CH₂)_{H1}-C(=O)N[CH₂CH₂CH₂Si(OCH₃)₃]₂ (wherein n1 is an integer of 0 to 300, and H1 is an integer of 10 to 30);
· CH₃CH₂CH₂CH₂-[Si(CH₃)₂O]ₙ₁Si(CH₃)₂-(CH₂)_{H1}-C(=O)N[CH₂CH₂CH₂Si(OCH₃)₃]₂ (wherein n1 is an integer of 0 to 300, and H1 is an integer of 10 to 30);
· [(CH₃)₃SiO)]₂(CH₃)Si-O-[Si(CH₃)₂O]ₙ₁Si(CH₃)₂-(CH₂)_{H1}-C(=O)N[CH₂CH₂CH₂Si(OCH₃)₃]₂ (wherein n1 is an integer of 0 to 300, and H1 is an integer of 10 to 30);
· [(CH₃)₃SiO)]₃Si-O-[Si(CH₃)₂O]ₙ₁Si(CH₃)₂-(CH₂)_{H1}-C(=O)N[CH₂CH₂CH₂Si(OCH₃)₃]₂ (wherein n1 is an integer of 0 to 300, and H1 is an integer of 10 to 30);
· CH₃-[Si(CH₃)₂O]ₙ₁Si(CH₃)₂-(CH₂)_{H1}-C(=O)NHCH₂C[CH₂CH₂CH₂Si(OCH₃)₃]₃ (wherein n1 is an integer of 0 to 300, and H1 is an integer of 10 to 30);
· CH₃CH₂CH₂CH₂-[Si(CH₃)₂O]ₙ₁Si(CH₃)₂-(CH₂)_{H1}-C(=O)NHCH₂C[CH₂CH₂CH₂Si(OCH₃)₃]₃ (wherein n1 is an integer of 0 to 300, and H1 is an integer of 10 to 30);
· [(CH₃)₃SiO)]₂(CH₃)Si-O-[Si(CH₃)₂O]ₙ₁Si(CH₃)₂-(CH₂)_{H1}-C(=O)NHCH₂C[CH₂CH₂CH₂Si(OCH₃)₃]₃ (wherein n1 is an integer of 0 to 300, and H1 is an integer of 10 to 30);
· [(CH₃)₃SiO)]₃Si-O-[Si(CH₃)₂O]ₙ₁Si(CH₃)₂-(CH₂)_{H1}-C(=O)NHCH₂C[CH₂CH₂CH₂Si(OCH₃)₃]₃ (wherein n1 is an integer of 0 to 300, and H1 is an integer of 10 to 30);
. [(CH₃)₃SiO)]₂(CH₃)Si-(CH₂)_{H1}-C(=O)NHCH₂CH₂CH₂Si(OCH₃)₃ (wherein H1 is an integer of 10 to 30);
· [(CH₃)₃SiO)]₃Si-(CH₂)_{H1}-C(=O)NHCH₂CH₂CH₂Si(OCH₃)₃ (wherein H1 is an integer of 10 to 30);
. [(CH₃)₃SiO)]₂(CH₃)Si-(CH₂)_{H1}-C(=O)NHCH₂CH[CH₂CH₂CH₂Si(OCH₃)₃]₂ (wherein H1 is an integer of 10 to 30);
· [(CH₃)₃SiO)]₃Si-(CH₂)_{H1}-C(=O)NHCH₂CH[CH₂CH₂CH₂Si(OCH₃)₃]₂ (wherein H1 is an integer of 10 to 30);
· [(CH₃)₃SiO)]₂(CH₃)Si-(CH₂)_{H1}-C(=O)NHCH₂CH[CH₂CH₂CH₂CH₂CH₂CH₂CH₂CH₂CH₂CH₂CH₂Si(OCH₃)₃]₂ (wherein H1 is an integer of 10 to 30);
· [(CH₃)₃SiO)]₃Si-(CH₂)_{H1}-C(=O)NHCH₂CH[CH₂CH₂CH₂CH₂CH₂CH₂CH₂CH₂CH₂CH₂CH₂Si(OCH₃)₃]₂ (wherein H1 is an integer of 10 to 30);
· [(CH₃)₃SiO)]₂(CH₃)Si-(CH₂)_{H1}-C(=O)N[CH₂CH₂CH₂Si(OCH₃)₃]₂ (wherein H1 is an integer of 10 to 30);
· [(CH₃)₃SiO)]₃Si-(CH₂)_{H1}-C(=O)N[CH₂CH₂CH₂Si(OCH₃)₃]₂ (wherein H1 is an integer of 1 to 50);
. [(CH₃)₃SiO)]₂(CH₃)Si-(CH₂)_{H1}-C(=O)NHCH₂C[CH₂CH₂CH₂Si(OCH₃)₃]₃ (wherein H1 is an integer of 10 to 30); and
· [(CH₃)₃SiO)]₃Si-(CH₂)_{H1}-C(=O)NHCH₂C[CH₂CH₂CH₂Si(OCH₃)₃]₃ (wherein H1 is an integer of 10 to 30).

In one embodiment, the compound represented by the formula (1) has any of the following structures:
· CH₃-[Si(CH₃)₂O]ₙ₁Si(CH₃)₂-(CH₂)₁₀-C(=O)NHCH₂CH₂CH₂Si(OCH₃)₃, wherein n1 is an integer of 0 to 300;
· CH₃CH₂CH₂CH₂-[Si(CH₃)₂O]ₙ₁Si(CH₃)₂-(CH₂)₁₀-C(=O)NHCH₂CH₂CH₂Si(OCH₃)₃ (wherein n1 is an integer of 0 to 300);
· [(CH₃)₃SiO)]₂(CH₃)Si-O-[Si(CH₃)₂O]ₙ₁Si(CH₃)₂-(CH₂)₁₀-C(=O)NHCH₂CH₂CH₂Si(OCH₃)₃ (wherein n1 is an integer of 0 to 300);
. [(CH₃)₃SiO)]₃Si-O-[Si(CH₃)₂O]ₙ₁Si(CH₃)₂-(CH₂)₁₀-C(=O)NHCH₂CH₂CH₂Si(OCH₃)₃ (wherein n1 is an integer of 0 to 300);
· CH₃-[Si(CH₃)₂O]ₙ₁Si(CH₃)₂-(CH₂)₁₆-C(=O)NHCH₂CH[CH₂CH₂CH₂Si(OCH₃)₃]₂ (wherein n1 is an integer of 0 to 300);
· CH₃CH₂CH₂CH₂-[Si(CH₃)₂O]ₙ₁Si(CH₃)₂-(CH₂)₁₀-C(=O)NHCH₂CH[CH₂CH₂CH₂Si(OCH₃)₃]₂ (wherein n1 is an integer of 0 to 300);
· [(CH₃)₃SiO)]₂(CH₃)Si-O-[Si(CH₃)₂O]ₙ₁Si(CH₃)₂-(CH₂)₁₀-C(=O)NHCH₂CH[CH₂CH₂CH₂Si(OCH₃)₃]₂ (wherein n1 is an integer of 0 to 300);
· [(CH₃)₃SiO)]₃Si-O-[Si(CH₃)₂O]ₙ₁Si(CH₃)₂-(CH₂)₁₀-C(=O)NHCH₂CH[CH₂CH₂CH₂Si(OCH₃)₃]₂ (wherein n1 is an integer of 0 to 300);
· CH₃-[Si(CH₃)₂O]ₙ₁Si(CH₃)₂-(CH₂)₁₀-C(=O)NHCH₂CH[CH₂CH₂CH₂CH₂CH₂CH₂CH₂CH₂CH₂CH₂CH₂Si(OCH₃)₃]₂ (wherein n1 is an integer of 0 to 300);
· CH₃CH₂CH₂CH₂-[Si(CH₃)₂O]ₙ₁Si(CH₃)₂-(CH₂)₁₀-C(=O)NHCH₂CH[CH₂CH₂CH₂CH₂CH₂CH₂CH₂CH₂CH₂CH₂CH₂Si(OCH₃)₃]₂ (wherein n1 is an integer of 0 to 300);
· [(CH₃)₃SiO)]₂(CH₃)Si-O-[Si(CH₃)₂O]ₙ₁Si(CH₃)₂-(CH₂)₁₀-C(=O)NHCH₂CH[CH₂CH₂CH₂CH₂CH₂CH₂CH₂CH₂CH₂CH₂CH₂Si(OCH₃)₃]₂ (wherein n1 is an integer of 0 to 300);
· [(CH₃)₃SiO)]₃Si-O-[Si(CH₃)₂O]ₙ₁Si(CH₃)₂-(CH₂)₁₀-C(=O)NHCH₂CH[CH₂CH₂CH₂CH₂CH₂CH₂CH₂CH₂CH₂CH₂CH₂Si(OCH₃)₃]₂ (wherein n1 is an integer of 0 to 300);
· CH₃-[Si(CH₃)₂O]ₙ₁Si(CH₃)₂-(CH2)₁₀-C(=O)N[CH₂CH₂CH₂Si(OCH₃)₃]₂ (wherein n1 is an integer of 0 to 300);
· CH₃CH₂CH₂CH₂-[Si(CH₃)₂O]ₙ₁Si(CH₃)₂-(CH₂)₁₀-C(=O)N[CH₂CH₂CH₂Si(OCH₃)₃]₂ (wherein n1 is an integer of 0 to 300);
· [(CH₃)₃SiO)]₂(CH₃)Si-O-[Si(CH₃)₂O]ₙ₁Si(CH₃)₂-(CH₂)₁₀-C(=O)N[CH₂CH₂CH₂Si(OCH₃)₃]₂ (wherein n1 is an integer of 0 to 300);
· [(CH₃)₃SiO)]₃Si-O-[Si(CH₃)₂O]ₙ₁Si(CH₃)₂-(CH₂)₁₀-C(=O)N[CH₂CH₂CH₂Si(OCH₃)₃]₂ (wherein n1 is an integer of 0 to 300);
· CH₃-[Si(CH₃)₂O]ₙ₁Si(CH₃)₂-(CH₂)₁₀-C(=O)NHCH₂C[CH₂CH₂CH₂Si(OCH₃)₃]₃ (wherein n1 is an integer of 0 to 300);
· CH₃CH₂CH₂CH₂-[Si(CH₃)₂O]ₙ₁Si(CH₃)₂-(CH₂)₁₀-C(=O)NHCH₂C[CH₂CH₂CH₂Si(OCH₃)₃]₃ (wherein n1 is an integer of 0 to 300);
. [(CH₃)₃SiO)]₂(CH₃)Si-O-[Si(CH₃)₂O]ₙ₁Si(CH₃)₂-(CH₂)₁₀-C(=O)NHCH₂C[CH₂CH₂CH₂Si(OCH₃)₃]₃ (wherein n1 is an integer of 0 to 300);
· [(CH₃)₃SiO)]₃Si-O-[Si(CH₃)₂O]ₙ₁Si(CH₃)₂-(CH₂)₁₀-C(=O)NHCH₂C[CH₂CH₂CH₂Si(OCH₃)₃]₃ (wherein n1 is an integer of 0 to 300);
· [(CH₃)₃SiO)]₂(CH₃)Si-(CH₂)₁₀-C(=O)NHCH₂CH₂CH₂Si(OCH₃)₃
· [(CH₃)₃SiO)]₃Si-(CH₂)₁₀-C(=O)NHCH₂CH₂CH₂Si(OCH₃)₃
· [(CH₃)₃SiO)]₂(CH₃)Si-(CH₂)₁₀-C(=O)NHCH₂CH[CH₂CH₂CH₂Si(OCH₃)₃]₂
· [(CH₃)₃SiO)]₃Si-(CH₂)₁₀-C(=O)NHCH₂CH[CH₂CH₂CH₂Si(OCH₃)₃]₂
· [(CH₃)₃SiO)]₂(CH₃)Si-(CH₂)₁₀-C(=O)NHCH₂CH[CH₂CH₂CH₂CH₂CH₂CH₂CH₂CH₂CH₂CH₂CH₂Si(OCH₃)₃]₂
· [(CH₃)₃SiO)]₃Si-(CH₂)₁₀-C(=O)NHCH₂CH[CH₂CH₂CH₂CH₂CH₂CH₂CH₂CH₂CH₂CH₂CH₂Si(OCH₃)₃]₂
· [(CH₃)₃SiO)]₂(CH₃)Si-(CH₂)₁₀-C(=O)N[CH₂CH₂CH₂Si(OCH₃)₃]₂
· [(CH₃)₃SiO)]₃Si-(CH₂)₁₀-C(=O)N[CH₂CH₂CH₂Si(OCH₃)₃]₂
. [(CH₃)₃SiO)]₂(CH₃)Si-(CH₂)₁₀-C(=O)NHCH₂C[CH₂CH₂CH₂Si(OCH₃)₃]₃
· [(CH₃)₃SiO)]₃Si-(CH₂)₁₀-C(=O)NHCH₂C[CH₂CH₂CH₂Si(OCH₃)₃]₃

In one embodiment, the compound represented by the formula (1) has any of the following structures:
· CH₃-[Si(CH₃)₂O]ₙ₁Si(CH₃)₂-(CH₂)₂₂-C(=O)NHCH₂CH₂CH₂Si(OCH₃)₃ (wherein n1 is an integer of 0 to 300);
· CH₃CH₂CH₂CH₂-[Si(CH₃)₂O]ₙ₁Si(CH₃)₂-(CH₂)₂₂-C(=O)NHCH₂CH₂CH₂Si(OCH₃)₃ (wherein n1 is an integer of 0 to 300);
· [(CH₃)₃SiO)]₂(CH₃)Si-O-[Si(CH₃)₂O]ₙ₁Si(CH₃)₂-(CH₂)₂₂-C(=O)NHCH₂CH₂CH₂Si(OCH₃)₃ (wherein n1 is an integer of 0 to 300);
· [(CH₃)₃SiO)]₃Si-O-[Si(CH₃)₂O]ₙ₁Si(CH₃)₂-(CH₂)₂₂-C(=O)NHCH₂CH₂CH₂Si(OCH₃)₃ (wherein n1 is an integer of 0 to 300);
· CH₃-[Si(CH₃)₂O]ₙ₁Si(CH₃)₂-(CH₂)₂₂-C(=O)NHCH₂CH[CH₂CH₂CH₂Si(OCH₃)₃]₂ (wherein n1 is an integer of 0 to 300);
· CH₃CH₂CH₂CH₂-[Si(CH₃)₂O]ₙ₁Si(CH₃)₂-(CH₂)₂₂-C(=O)NHCH₂CH[CH₂CH₂CH₂Si(OCH₃)₃]₂ (wherein n1 is an integer of 0 to 300);
· [(CH₃)₃SiO)]₂(CH₃)Si-O-[Si(CH₃)₂O]ₙ₁Si(CH₃)₂-(CH₂)₂₂-C(=O)NHCH₂CH[CH₂CH₂CH₂Si(OCH₃)₃]₂ (wherein n1 is an integer of 0 to 300);
· [(CH₃)₃SiO)]₃Si-O-[Si(CH₃)₂O]ₙ₁Si(CH₃)₂-(CH₂)₂₂-C(=O)NHCH₂CH[CH₂CH₂CH₂Si(OCH₃)₃]₂ (wherein n1 is an integer of 0 to 300);
· CH₃-[Si(CH₃)₂O]ₙ₁Si(CH₃)₂₋(CH₂)₂₂-C(=O)NHCH₂CH[CH₂CH₂CH₂CH₂CH₂CH₂CH₂CH₂CH₂CH₂CH₂Si(OCH₃)₃]₂ (wherein n1 is an integer of 0 to 300);
· CH₃CH₂CH₂CH₂-[Si(CH₃)₂O]ₙ₁Si(CH₃)₂-(CH₂)₂₂-C(=O)NHCH₂CH[CH₂CH₂CH₂CH₂CH₂CH₂CH₂CH₂CH₂CH₂CH₂Si(OCH₃)₃]₂ (wherein n1 is an integer of 0 to 300);
· [(CH₃)₃SiO)]₂(CH₃)Si-O-[Si(CH₃)₂O]ₙ₁Si(CH₃)₂-(CH₂)₂₂-C(=O)NHCH₂CH[CH₂CH₂CH₂CH₂CH₂CH₂CH₂CH₂CH₂CH₂CH₂Si(OCH₃)₃]₂ (wherein n1 is an integer of 0 to 300);
· [(CH₃)₃SiO)]₃Si-O-[Si(CH₃)₂O]ₙ₁Si(CH₃)₂-(CH₂)₂₂-C(=O)NHCH₂CH[CH₂CH₂CH₂CH₂CH₂CH₂CH₂CH₂CH₂CH₂CH₂Si(OCH₃)₃]₂ (wherein n1 is an integer of 0 to 300);
· CH₃-[Si(CH₃)₂O]ₙ₁Si(CH₃)₂-(CH₂)₂₂-C(=O)N[CH₂CH₂CH₂Si(OCH₃)₃]₂ (wherein n1 is an integer of 0 to 300);
· CH₃CH₂CH₂CH₂-[Si(CH₃)₂O]ₙ₁Si(CH₃)₂-(CH₂)₂₂-C(=O)N[CH₂CH₂CH₂Si(OCH₃)₃]₂ (wherein n1 is an integer of 0 to 300);
· [(CH₃)₃SiO)]₂(CH₃)Si-O-[Si(CH₃)₂O]ₙ₁Si(CH₃)₂-(CH₂)₂₂-C(=O)N[CH₂CH₂CH₂Si(OCH₃)₃]₂ (wherein n1 is an integer of 0 to 300);
· [(CH₃)₃SiO)]₃Si-O-[Si(CH₃)₂O]ₙ₁Si(CH₃)₂-(CH₂)₂₂-C(=O)N[CH₂CH₂CH₂Si(OCH₃)₃]₂ (wherein n1 is an integer of 0 to 300);
· CH₃-[Si(CH₃)₂O]ₙ₁Si(CH₃)₂-(CH₂)₂₂-C(=O)NHCH₂C[CH₂CH₂CH₂Si(OCH₃)₃]₃ (wherein n1 is an integer of 0 to 300);
· CH₃CH₂CH₂CH₂-[Si(CH₃)₂O]ₙ₁Si(CH₃)₂-(CH₂)₂₂-C(=O)NHCH₂C[CH₂CH₂CH₂Si(OCH₃)₃]₃ (wherein n1 is an integer of 0 to 300);
. [(CH₃)₃SiO)]₂(CH₃)Si-O-[Si(CH₃)₂O]ₙ₁Si(CH₃)₂-(CH₂)₂₂-C(=O)NHCH₂C[CH₂CH₂CH₂Si(OCH₃)₃]₃ (wherein n1 is an integer of 0 to 300);
· [(CH₃)₃SiO)]₃Si-O-[Si(CH₃)₂O]ₙ₁Si(CH₃)₂-(CH₂)₂₂-C(=O)NHCH₂C[CH₂CH₂CH₂Si(OCH₃)₃]₃ (wherein n1 is an integer of 0 to 300);
· [(CH₃)₃SiO)]₂(CH₃)Si-(CH₂)₂₂-C(=O)NHCH₂CH₂CH₂Si(OCH₃)₃
· [(CH₃)₃SiO)]₃Si-(CH₂)₂₂-C(=O)NHCH₂CH₂CH₂Si(OCH₃)₃
. [(CH₃)₃SiO)]₂(CH₃)Si-(CH₂)₂₂-C(=O)NHCH₂CH[CH₂CH₂CH₂Si(OCH₃)₃]₂
· [(CH₃)₃SiO)]₃Si-(CH₂)₂₂-C(=O)NHCH₂CH[CH₂CH₂CH₂Si(OCH₃)₃]₂
· [(CH₃)₃SiO)]₂(CH₃)Si-(CH₂)₂₂-C(=O)NHCH₂CH[CH₂CH₂CH₂CH₂CH₂CH₂CH₂CH₂CH₂CH₂CH₂Si(OCH₃)₃]₂
· [(CH₃)₃SiO)]₃Si-(CH₂)₂₂-C(=O)NHCH₂CH[CH₂CH₂CH₂CH₂CH₂CH₂CH₂CH₂CH₂CH₂CH₂Si(OCH₃)₃]₂
· [(CH₃)₃SiO)]₂(CH₃)Si-(CH₂)₂₂-C(=O)N[CH₂CH₂CH₂Si(OCH₃)₃]₂
· [(CH₃)₃SiO)]₃Si-(CH₂)₂₂-C(=O)N[CH₂CH₂CH₂Si(OCH₃)₃]₂
· [(CH₃)₃SiO)]₂(CH₃)Si-(CH₂)₂₂-C(=O)NHCH₂C[CH₂CH₂CH₂Si(OCH₃)₃]₃
· [(CH₃)₃SiO)]₃Si-(CH₂)₂₂-C(=O)NHCH₂C[CH₂CH₂CH₂Si(OCH₃)₃]₃

The compound represented by the formula (1) preferably includes one or more compounds selected from the following group (I):

CH₃-[Si(CH₃)₂O]ₙ₁Si(CH₃)₂-(CH₂)_{H1}-C(=O)NHCH₂CH₂CH₂Si(OCH₃)₃

CH₃CH₂CH₂CH₂-[Si(CH₃)₂O]ₙ₁Si(CH₃)₂-(CH₂)_{H1}-C(=O)NHCH₂CH₂CH₂Si(OCH₃)₃

[(CH₃)₃SiO)]₂(CH₃)Si-O-[Si(CH₃)₂O]ₙ₁Si(CH₃)₂-(CH₂)_{H1}- C(=O)NHCH₂CH₂CH₂Si(OCH₃)₃

[(CH₃)₃SiO)]₃Si-O-[Si(CH₃)₂O]ₙ₁Si(CH₃)₂-(CH₂)_{H1}- C(=O)NHCH₂CH₂CH₂Si(OCH₃)₃

CH₃-[Si(CH₃)₂O]ₙ₁Si(CH₃)₂-(CH₂)_{H1}-O-(CH₂)_{H2}-C(=O)NHCH₂CH₂CH₂Si(OCH₃)₃

CH₃CH₂CH₂CH₂-[Si(CH₃)₂O]ₙ₁Si(CH₃)₂-(CH₂)_{H1}-O-(CH₂)_{H2}- C(=O)NHCH₂CH₂CH₂Si(OCH₃)₃

CH₃-[Si(CH₃)₂O]ₙ₁Si(CH₃)₂-(CH₂)_{H1}-Si(OCH₃)₃

CH₃CH₂CH₂CH₂-[Si(CH₃)₂O]ₙ₁Si(CH₃)₂-(CH₂)_{H1}-Si(OCH₃)₃

[(CH₃)₃SiO)]₂(CH₃)Si-O-[Si(CH₃)₂O]ₙ₁Si(CH₃)₂-(CH₂)_{H1}-Si(OCH₃)₃

[(CH₃)₃SiO)]₃Si-O-[Si(CH₃)₂O]ₙ₁Si(CH₃)₂-(CH₂)_{H1}-Si(OCH₃)₃

CH₃-[Si(CH₃)₂O]ₙ₁Si(CH₃)₂-(CH₂)_{H1}-C(=O)NHCH₂CH[CH₂CH₂CH₂Si(OCH₃)₃]₂

CH₃CH₂CH₂CH₂-[Si(CH₃)₂O]ₙ₁Si(CH₃)₂-(CH₂)_{H1}- C(=O)NHCH₂CH[CH₂CH₂CH₂Si(OCH₃)₃]₂

[(CH₃)₃SiO)]₂(CH₃)Si-O-[Si(CH₃)₂O]ₙ₁Si(CH₃)₂-(CH₂)_{H1}- C(=O)NHCH₂CH[CH₂CH₂CH₂Si(OCH₃)₃]₂

[(CH₃)₃SiO)]₃Si-O-[Si(CH₃)₂O]ₙ₁Si(CH₃)₂-(CH₂)_{H1}- C(=O)NHCH₂CH[CH₂CH₂CH₂Si(OCH₃)₃]₂

CH₃-[Si(CH₃)₂O]ₙ₁Si(CH₃)₂-(CH₂)_{H1}-O-(CH₂)_{H2}- C(=O)NHCH₂CH[CH₂CH₂CH₂Si(OCH₃)₃]₂

CH₃CH₂CH₂CH₂-[Si(CH₃)₂O]ₙ₁Si(CH₃)₂-(CH₂)_{H1}-O-(CH₂)_{H2}- C(=O)NHCH₂CH[CH₂CH₂CH₂Si(OCH₃)₃]₂

CH₃-[Si(CH₃)₂O]ₙ₁Si(CH₃)₂-(CH₂)_{H1}-CH[CH₂CH₂CH₂Si(OCH₃)₃]₂

CH₃CH₂CH₂CH₂-[Si(CH₃)₂O]ₙ₁Si(CH₃)₂-(CH₂)_{H1}-CH[CH₂CH₂CH₂Si(OCH₃)₃]₂

[(CH₃)₃SiO)]₂(CH₃)Si-O-[Si(CH₃)₂O]ₙ₁Si(CH₃)₂-(CH₂)_{H1}- CH[CH₂CH₂CH₂Si(OCH₃)₃]₂

[(CH₃)₃SiO)]₃Si-O-[Si(CH₃)₂O]ₙ₁Si(CH₃)₂-(CH₂)_{H1}-CH[CH₂CH₂CH₂Si(OCH₃)₃]₂

CH₃-[Si(CH₃)₂O]ₙ₁Si(CH₃)₂-(CH₂)_{H1}- C(=O)NHCH₂CH[CH₂CH₂CH₂CH₂CH₂CH₂CH₂CH₂CH₂CH₂CH₂Si(OCH₃)₃]₂

CH₃CH₂CH₂CH₂-[Si(CH₃)₂O]ₙ₁Si(CH₃)₂-(CH₂)_{H1}- C(=O)NHCH₂CH[CH₂CH₂CH₂CH₂CH₂CH₂CH₂CH₂CH₂CH₂CH₂Si(OCH₃)₃]₂

[(CH₃)₃SiO)]₂(CH₃)Si-O-[Si(CH₃)₂O]ₙ₁Si(CH₃)₂-(CH₂)_{H1}- C(=O)NHCH₂CH[CH₂CH₂CH₂CH₂CH₂CH₂CH₂CH₂CH₂CH₂CH₂Si(OCH₃)₃]₂

[(CH₃)₃SiO)]₃Si-O-[Si(CH₃)₂O]ₙ₁Si(CH₃)₂-(CH₂)_{H1}- C(=O)NHCH₂CH[CH₂CH₂CH₂CH₂CH₂CH₂CH₂CH₂CH₂CH₂CH₂Si(OCH₃)₃]₂

CH₃-[Si(CH₃)₂O]ₙ₁Si(CH₃)₂-(CH₂)_{H1}-O-(CH₂)_{H2}- C(=O)NHCH₂CH[CH₂CH₂CH₂CH₂CH₂CH₂CH₂CH₂CH₂CH₂CH₂Si(OCH₃)₃]₂

CH₃CH₂CH₂CH₂-[Si(CH₃)₂O]ₙ₁Si(CH₃)₂-(CH₂)_{H1}-O-(CH₂)_{H2}- C(=O)NHCH₂CH[CH₂CH₂CH₂CH₂CH₂CH₂CH₂CH₂CH₂CH₂CH₂Si(OCH₃)₃]₂

CH₃-[Si(CH₃)₂O]ₙ₁Si(CH₃)₂-(CH₂)_{H1}- CH[CH₂CH₂CH₂CH₂CH₂CH₂CH₂CH₂CH₂CH₂CH₂Si(OCH₃)₃]₂

CH₃CH₂CH₂CH₂-[Si(CH₃)₂O]ₙ₁Si(CH₃)₂-(CH₂)_{H1}- CH[CH₂CH₂CH₂CH₂CH₂CH₂CH₂CH₂CH₂CH₂CH₂Si(OCH₃)₃]₂

[(CH₃)₃SiO)]₂(CH₃)Si-O-[Si(CH₃)₂O]ₙ₁Si(CH₃)₂-(CH₂)_{H1}- CH[CH₂CH₂CH₂CH₂CH₂CH₂CH₂CH₂CH₂CH₂CH₂Si(OCH₃)₃]₂

[(CH₃)₃SiO)]₃Si-O-[Si(CH₃)₂O]ₙ₁Si(CH₃)₂-(CH₂)_{H1}- CH[CH₂CH₂CH₂CH₂CH₂CH₂CH₂CH₂CH₂CH₂CH₂Si(OCH₃)₃]₂

CH₃-[Si(CH₃)₂O]ₙ₁Si(CH₃)₂-(CH₂)_{H1}-C(=O)N[CH₂CH₂CH₂Si(OCH₃)₃]₂

CH₃CH₂CH₂CH₂-[Si(CH₃)₂O]ₙ₁Si(CH₃)₂-(CH₂)_{H1}-C(=O)N[CH₂CH₂CH₂Si(OCH₃)₃]₂

[(CH₃)₃SiO)]₂(CH₃)Si-O-[Si(CH₃)₂O]ₙ₁Si(CH₃)₂-(CH₂)_{H1}- C(=O)N[CH₂CH₂CH₂Si(OCH₃)₃]₂

[(CH₃)₃SiO)]₃Si-O-[Si(CH₃)₂O]ₙ₁Si(CH₃)₂-(CH₂)_{H1}- C(=O)N[CH₂CH₂CH₂Si(OCH₃)₃]₂

CH₃-[Si(CH₃)₂O]ₙ₁Si(CH₃)₂-(CH₂)_{H1}-O-(CH₂)_{H2}-C(=O)N[CH₂CH₂CH₂Si(OCH₃)₃]₂

CH₃CH₂CH₂CH₂-[Si(CH₃)₂O]ₙ₁Si(CH₃)₂-(CH₂)_{H1}-O-(CH₂)_{H2}- C(=O)N[CH₂CH₂CH₂Si(OCH₃)₃]₂

CH₃-[Si(CH₃)₂O]ₙ₁Si(CH₃)₂-(CH₂)_{H1}-N[CH₂CH₂CH₂Si(OCH₃)₃]₂

CH₃CH₂CH₂CH₂-[Si(CH₃)₂O]ₙ₁Si(CH₃)₂-(CH₂)_{H1}-N[CH₂CH₂CH₂Si(OCH₃)₃]₂

[(CH₃)₃SiO)]₂(CH₃)Si-O-[Si(CH₃)₂O]ₙ₁Si(CH₃)₂-(CH₂)_{H1}- N[CH₂CH₂CH₂Si(OCH₃)₃]₂

[(CH₃)₃SiO)]₃Si-O-[Si(CH₃)₂O]ₙ₁Si(CH₃)₂-(CH₂)_{H1}-N[CH₂CH₂CH₂Si(OCH₃)₃]₂

CH₃-[Si(CH₃)₂O]ₙ₁Si(CH₃)₂-(CH₂)_{H1}-C(=O)NHCH₂C[CH₂CH₂CH₂Si(OCH₃)₃]₃

CH₃CH₂CH₂CH₂-[Si(CH₃)₂O]ₙ₁Si(CH₃)₂-(CH₂)_{H1}- C(=O)NHCH₂C[CH₂CH₂CH₂Si(OCH₃)₃]₃

[(CH₃)₃SiO)]₂(CH₃)Si-O-[Si(CH₃)₂O]ₙ₁Si(CH₃)₂-(CH₂)_{H1}- C(=O)NHCH₂C[CH₂CH₂CH₂Si(OCH₃)₃]₃

[(CH₃)₃SiO)]₃Si-O-[Si(CH₃)₂O]ₙ₁Si(CH₃)₂-(CH₂)_{H1}- C(=O)NHCH₂C[CH₂CH₂CH₂Si(OCH₃)₃]₃

CH₃-[Si(CH₃)₂O]ₙ₁Si(CH₃)₂-(CH₂)_{H1}-O-(CH₂)_{H2}- C(=O)NHCH₂C[CH₂CH₂CH₂Si(OCH₃)₃]₃

CH₃CH₂CH₂CH₂₋[Si(CH₃)₂O]ₙ₁Si(CH₃)₂-(CH₂)_{H1}-O-(CH₂)_{H2}- C(=O)NHCH₂C[CH₂CH₂CH₂Si(OCH₃)₃]₃

CH₃-[Si(CH₃)₂O]ₙ₁Si(CH₃)₂-(CH₂)_{H1}-C[CH₂CH₂CH₂Si(OCH₃)₃]₃

CH₃CH₂CH₂CH₂-[Si(CH₃)₂O]ₙ₁Si(CH₃)₂-(CH₂)_{H1}-C[CH₂CH₂CH₂Si(OCH₃)₃]₃

[(CH₃)₃SiO)]₂(CH₃)Si-O-[Si(CH₃)₂O]ₙ₁Si(CH₃)₂-(CH₂)_{H1}- C[CH₂CH₂CH₂Si(OCH₃)₃]₃

[(CH₃)₃SiO)]₃Si-O-[Si(CH₃)₂O]ₙ₁Si(CH₃)₂-(CH₂)_{H1}-C[CH₂CH₂CH₂Si(OCH₃)₃]₃

[(CH₃)₃SiO)]₂(CH₃)Si-(CH₂)_{H1}-C(=O)NHCH₂CH₂CH₂Si(OCH₃)₃

[(CH₃)₃SiO)]₃Si-(CH₂)_{H1}-C(=O)NHCH₂CH₂CH₂Si(OCH₃)₃

[(CH₃)₃SiO)]₂(CH₃)Si-(CH₂)_{H1}-Si(OCH₃)₃

[(CH₃)₃SiO)]₃Si-(CH₂)_{H1}-Si(OCH₃)₃

[(CH₃)₃SiO)]₂(CH₃)Si-(CH₂)_{H1}-C(=O)NHCH₂CH[CH₂CH₂CH₂Si(OCH₃)₃]₂

[(CH₃)₃SiO)]₃Si-(CH₂)_{H1}-C(=O)NHCH₂CH[CH₂CH₂CH₂Si(OCH₃)₃]₂

[(CH₃)₃SiO)]₂(CH₃)Si-(CH₂)_{H1}-CH[CH₂CH₂CH₂Si(OCH₃)₃]₂

[(CH₃)₃SiO)]₃Si-(CH₂)_{H1}-CH[CH₂CH₂CH₂Si(OCH₃)₃]₂

[(CH₃)₃SiO)]₂(CH₃)Si-(CH₂)_{H1}- C(=O)NHCH₂CH[CH₂CH₂CH₂CH₂CH₂CH₂CH₂CH₂CH₂CH₂CH₂Si(OCH₃)₃]₂

[(CH₃)₃SiO)]₃Si-(CH₂)_{H1}- C(=O)NHCH₂CH[CH₂CH₂CH₂CH₂CH₂CH₂CH₂CH₂CH₂CH₂CH₂Si(OCH₃)₃]₂

[(CH₃)₃SiO)]₂(CH₃)Si-(CH₂)_{H1}- CH[CH₂CH₂CH₂CH₂CH₂CH₂CH₂CH₂CH₂CH₂CH₂Si(OCH₃)₃]₂

[(CH₃)₃SiO)]₃Si-(CH₂)_{H1}- CH[CH₂CH₂CH₂CH₂CH₂CH₂CH₂CH₂CH₂CH₂CH₂Si(OCH₃)₃]₂

[(CH₃)₃SiO)]₂(CH₃)Si-(CH₂)_{H1}-C(=O)N[CH₂CH₂CH₂Si(OCH₃)₃]₂

[(CH₃)₃SiO)]₃Si-(CH₂)_{H1}-C(=O)N[CH₂CH₂CH₂Si(OCH₃)₃]₂

[(CH₃)₃SiO)]₂(CH₃)Si-(CH₂)_{H1}-N[CH₂CH₂CH₂Si(OCH₃)₃]₂

[(CH₃)₃SiO)]₃Si-(CH₂)_{H1}-N[CH₂CH₂CH₂Si(OCH₃)₃]₂

[(CH₃)₃SiO)]₂(CH₃)Si-(CH₂)_{H1}-C(=O)NHCH₂C[CH₂CH₂CH₂Si(OCH₃)₃]₃

[(CH₃)₃SiO)]₃Si-(CH₂)_{H1}-C(=O)NHCH₂C[CH₂CH₂CH₂Si(OCH₃)₃]₃

[(CH₃)₃SiO)]₂(CH₃)Si-(CH₂)_{H1}-C[CH₂CH₂CH₂Si(OCH₃)₃]₃

[(CH₃)₃SiO)]₃Si-(CH₂)_{H1}-C[CH₂CH₂CH₂Si(OCH₃)₃]₃

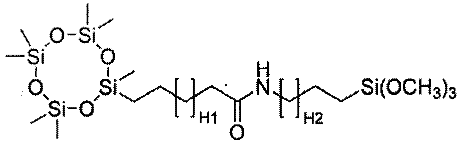

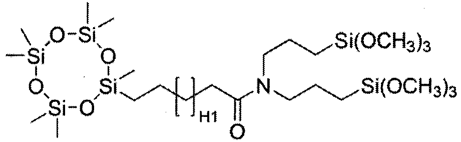

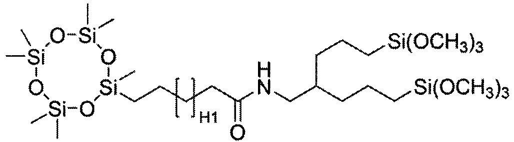

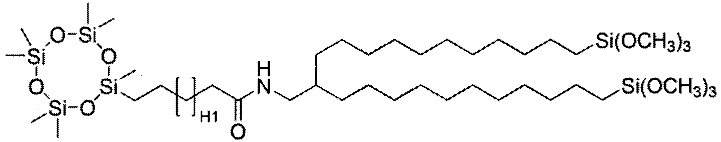

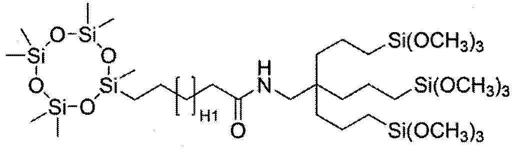

CH₃CH₂CH₂CH₂-[Si(CH₃)₂O]ₙ₁Si(CH₃)₂-(CH₂)_{H1}-O-(CH₂)_{H2}- C(CH₂CH₃)[CH₂OC(=O)NHCH₂CH₂CH₂Si(OCH₃)₃]₂

CH₃-[Si(CH₃)₂O]ₙ₁Si(CH₃)₂-(CH₂)_{H1}-O-(CH₂)_{H2}- C(CH₂CH₃)[CH₂OC(=O)NHCH₂CH₂CH₂Si(OCH₃)₃]₂

CH₃CH₂CH₂CH₂-[Si(CH₃)₂O]ₙ₁Si(CH₃)₂-(CH₂)_{H1}-O-(CH₂)_{H2}- C(CH₂CH₃)[CH₂OC(=O)NHCH₂CH₂OC(=O)CH(CH₃)CH₂Si(OCH₃)₃]₂

CH₃-[Si(CH₃)₂O]ₙ₁Si(CH₃)₂-(CH₂)_{H1}-O-(CH₂)_{H2}- C(CH₂CH₃)[CH₂OC(=O)NHCH₂CH₂OC(=O)CH(CH₃)CH₂Si(OCH₃)₃]₂

CH₃CH₂CH₂CH₂-[Si(CH₃)₂O]ₙ₁Si(CH₃)₂--(CH₂)_{H1}-O-(CH₂)_{H2}- C[CH₂O_{C}(=O)NHCH₂CH₂CH₂Si(OCH₃)₃]₃

CH₃-[(Si(CH₃)₂O)]ₙ₁Si(CH₃)₂-(CH₂)_{H1}-O-(CH₂)_{H2}- C[CH₂OC(=O)NHCH₂CH₂CH₂Si(OCH₃)₃]₃

[CH₃CH₂CH₂CH₂-[(Si(CH₃)₂O)]ₙ₁Si(CH₃)₂-(CH₂)_{H1}-O-(CH₂)ₕ₂-]₂- C[CH₂OC(=O)NHCH₂CH₂CH₂Si(OCH₃)₃]₂

[CH₃-[(Si(CH₃)₂O)]ₙ₁Si(CH₃)₂-(CH₂)_{H1}-O-(CH₂)_{H2}-]₂- C[CH₂OC(=O)NHCH₂CH₂CH₂Si(OCH₃)₃]₂

CH₃CH₂CH₂CH₂-[Si(CH₃)₂O]ₙ₁Si(CH₃)₂-(CH₂)_{H1}-O-(CH₂)_{H2}- OC(=O)NHCH₂CH₂CH₂Si(OCH₃)₃

CH₃-[Si(CH₃)₂O]ₙ₁Si(CH₃)₂-(CH₂)_{H1}-O-(CH₂)_{H2}-OC(=O)NHCH₂CH₂CH₂Si(OCH₃)₃

CH₃CH₂CH₂CH₂-[Si(CH₃)₂O]ₙ₁Si(CH₃)₂-(CH₂)_{H1}-O-(CH₂)_{H2}- OC(=O)NHCH₂CH₂OC(=O)CH(CH₃)CH₂Si(OCH₃)₃

CH₃-[Si(CH₃)₂O]ₙ₁Si(CH₃)₂-(CH₂)_{H1}-O-(CH₂)_{H2}- OC(=O)NHCH₂CH₂OC(=O)CH(CH₃)CH₂Si(OCH₃)₃

[CH₃CH₂CH₂CH₂-[Si(CH₃)₂O]ₙ₁Si(CH₃)₂-(CH₂)_{H1}-O-(CH₂)_{H2}-]₃C- CH₂OC(=O)NHCH₂CH₂CH₂Si(OCH₃)₃

[CH₃-[Si(CH₃)₂O]ₙ₁Si(CH₃)₂-(CH₂)_{H1}-O-(CH₂)_{H2}-]₃C- CH₂OC(=O)NHCH₂CH₂CH₂Si(OCH₃)₃

[CH₃CH₂CH₂CH₂-[(Si(CH₃)₂O)]ₙ₁Si(CH₃)₂-(CH₂)_{H1}-O- (CH₂)_{H2}-]₂C(CH₂CH₃)[CH₂OC(=O)NHCH₂CH₂CH₂Si(OCH₃)₃]

[CH₃-[(Si(CH₃)₂O)]ₙ₁Si(CH₃)₂-(CH₂)_{H1}-O- (CH₂)_{H2}-]₂C(CH₂CH₃)[CH₂OC(=O)NHCH₂CH₂CH₂Si(OCH₃)₃]

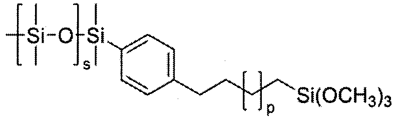

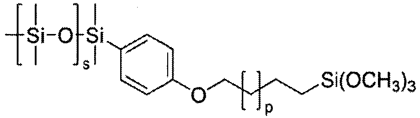

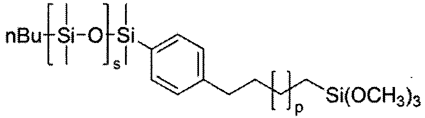

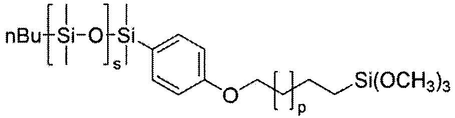

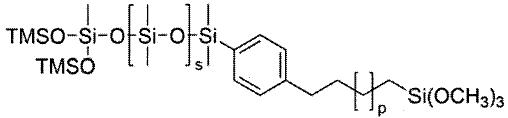

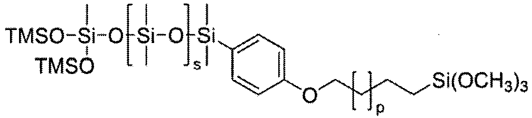

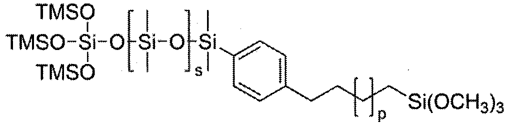

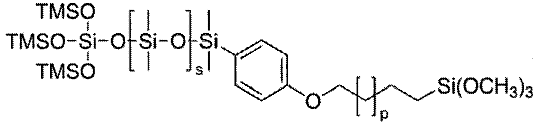

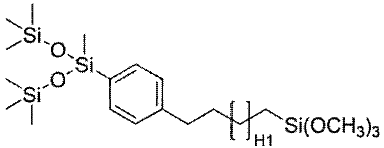

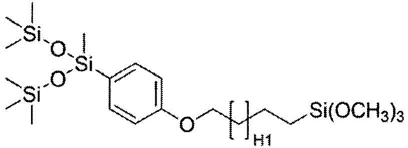

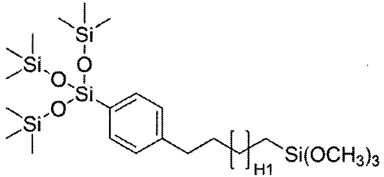

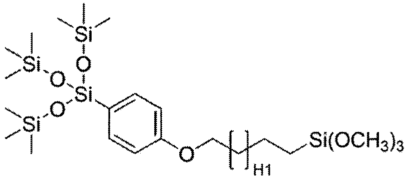

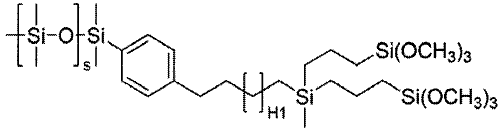

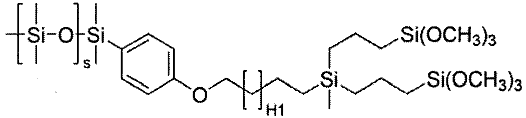

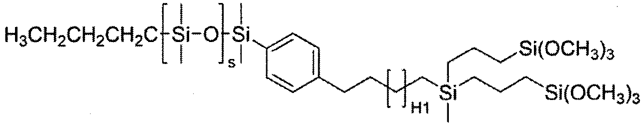

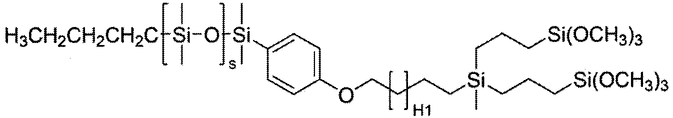

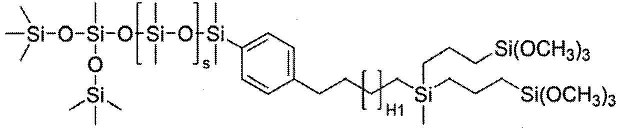

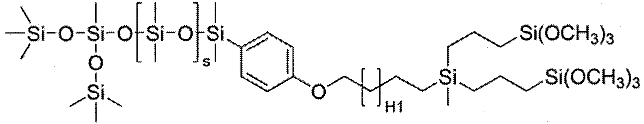

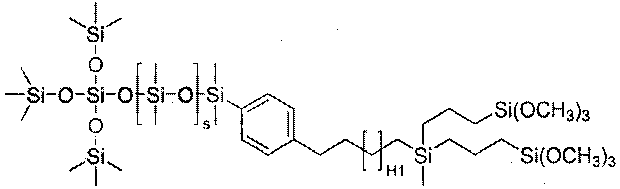

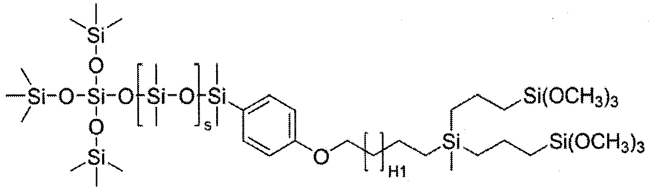

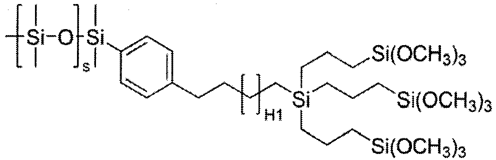

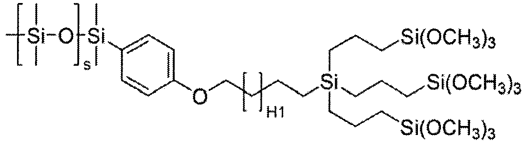

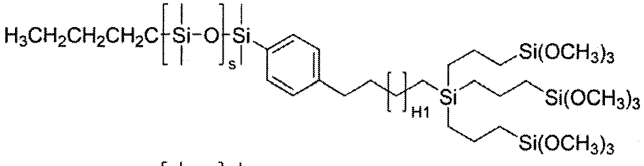

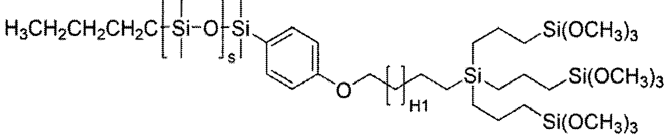

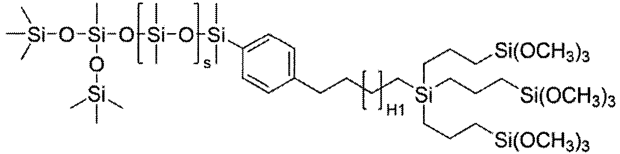

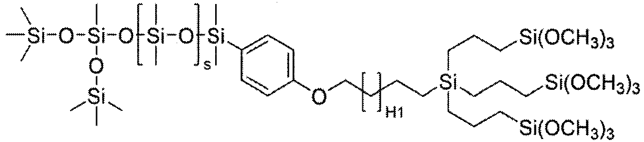

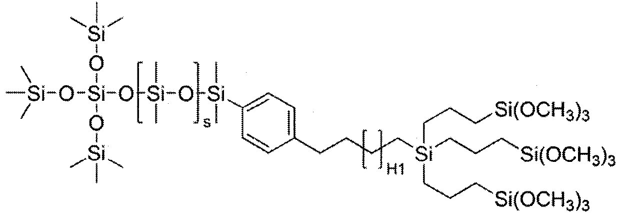

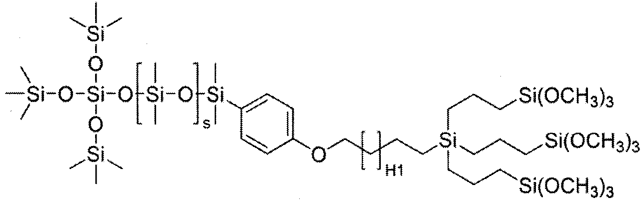

wherein TMS is a trimethylsilyl group, n1 and s are each independently 0 to 150, and H1 and H2 are each independently 1 to 50.

In one embodiment, n1 and s are each independently 0 or 1,
p and H1 are each independently 8 to 40, and
H2 is each independently 1 to 10.

In one embodiment, n1 and s are each independently preferably 5 to 150, and more preferably 50 to 100,
p and H1 are each independently 8 to 40, and
H2 is each independently 1 to 10.

The compound represented by the formula (1) preferably includes one or more compounds selected from the following group (I):
(CH₃)₃Si-(OSi(CH₃)₂)_{nI}-(CH₂)₁₀-CON[CH₂CH₂CH₂Si(OCH₃)₃]₂ (wherein nI is 10 to 80, preferably 10 to 30, and more preferably 19);
(CH₃)₃Si-(OSi(CH₃)₂)_{nI}-(CH₂)₂₂-CON[CH₂CH₂CH₂)₃Si(OCH₃)₃]₂ (wherein nI is 10 to 80, preferably 10 to 30, and more preferably 34);
(CH₃)₃Si-(OSi(CH₃)₂)_{nI}-(CH₂)₁₀-CONH-CH₂C[CH₂CH₂CH₂Si(OCH₃)₃]₃ (wherein nI is 10 to 80, preferably 10 to 30, and more preferably 19);
[(CH₃)₃SiO]₂CH₃SiO(Si(CH₃)₂O)_{nI}Si-(CH₃)₂-(CH₂)₂₂-CONHCH₂CH[CH₂CH₂CH₂Si(OCH₃)₃]₂ (wherein nI is 10 to 80, preferably 10 to 40, and more preferably 26); and
CH₃(Si(CH₃)₂O)_{nI}Si(CH₃)₂(CH₂)₃₄CON((CH₂)₃Si(OCH₃)₃)₂ (wherein nI is 10 to 80, preferably 20 to 60, and more preferably 48).

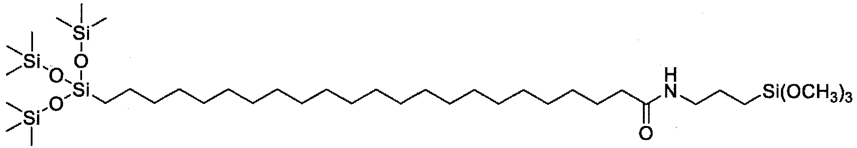

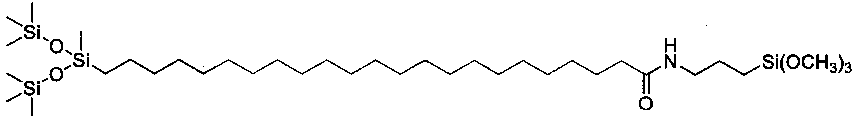

The composition comprises a silane compound represented by the following formula (2):

R⁷⁰-CH=CH-X²-R⁷¹ (2)

wherein
X² is a divalent group,
R⁷⁰ is a hydrogen atom or a methyl group,
R⁷¹ is R^{Si2} or R^{A}, and
R^{Si} is a monovalent group comprising a Si atom to which a hydroxyl group or a hydrolyzable group is bonded.

In one embodiment, R⁷¹ is R^{Si2}. In another embodiment, R⁷¹ is R^{A}.

R^{A} has the same meaning as above. In groups described as examples of X², the right side may bind to R⁷⁰-CH=CH-, or the left side may bind to R⁷⁰-CH=CH-.

X² is understood as a linker that connects CH₃-CH=CH-, which can contribute to friction durability, and the silane moiety (R^{Si}), which provides binding ability to a substrate. Accordingly, X² is not limited as long as the silane compound represented by the formula (2) can stably exist.

In one embodiment, X² may be two groups each independently including - CO-, -COO-, -OCO-, -NR⁴¹-, -CONR⁴¹-, -NR⁴¹CO-, -OCONR⁴¹-, -NR⁴¹COO-, - NR⁴¹-CO-NR⁴¹-, -O-, -S-, -CON=, or R^{S}. R⁴¹ and R^{S} have the same meaning as above.

In a preferable embodiment, X² is each independently a group represented by the following formula:

-(X¹²¹)ₐ₀-[(X¹¹¹)ₐ₁-(X¹¹²)ₐ₂]-

wherein
X¹²¹ is R⁶¹_{b1}R⁶²_{3-b1}C-, R⁶³_{b2}R⁶⁴_{3-b2}Si-, or R⁶⁵₂N-,
   R⁶¹ is a divalent organic group,
   R⁶² is a hydrogen atom or a monovalent organic group,
   R⁶³ is a divalent organic group,
   R⁶⁴ is a hydrogen atom or a monovalent organic group,
   R⁶⁵ is a divalent organic group,
   b1 is 2 or 3,
   b2 is 2 or 3,
X¹¹¹ is a single bond or a divalent organic group,
X¹¹² is -CO-, -COO-, -OCO-, -NR⁴¹-, -CONR⁴¹-, -NR⁴¹CO-, -OCONR⁴¹-, - NR⁴¹COO-, -NR⁴¹-CO-NR⁴¹-, -O-, -S-, or R^{S},
   R⁴¹ is a hydrogen atom, an oxyalkylene-containing group, or a C₁₋₆ alkyl group,
   R^{S} is a group represented by the following formula: 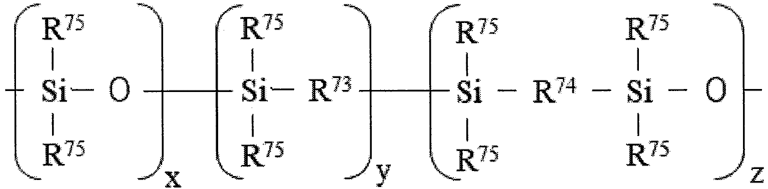 wherein
R⁷³ is each independently a single bond, a C₁₋₁₂ alkylene group, -R⁷⁶-O-R⁷⁶-, - R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁴ is each independently a C₁₋₁₂ alkylene group, -R⁷⁶-O-R⁷⁶-, -R⁷⁸-R⁷⁷-R⁷⁸-, - R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
   R⁷⁶ is each independently a C₁₋₆ alkylene group,
   R⁷⁷ is each independently an optionally substituted phenylene group or naphthylene group,
   R⁷⁸ is each independently a single bond or a C₁₋₆ alkylene group,
   R⁷⁹ is each independently a single bond or an oxygen atom,
R⁷⁵ is each independently a hydrocarbon group,
x is an integer of 0 to 500,
y is an integer of 0 to 500,
z is an integer of 0 to 500,
x + y + z is 1 or more, and
the occurrence order of the respective repeating units enclosed in parentheses provided with x, y, or z is not limited in the formula,
a0 is 0 or 1,
a1 is an integer of 1 to 5,
a2 is an integer of 0 to 5, and
the occurrence order of the respective repeating units enclosed in parentheses provided with a1 or a2 is not limited in the formula; or
a group represented by the following formula (X^{A1}): 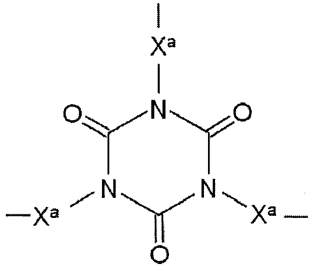
wherein X^{a} is each independently a single bond or a divalent linking group. The left side of the group X² binds to CH₃-CH=CH-, and the right side binds to R^{Si}.

X¹²¹, X¹¹¹, X¹¹², a0, a1, a2, R⁶¹, R⁶², R⁶⁴, R⁶⁵, b1, b2, R⁴¹, R^{S}, R⁷³, R⁷⁴, R⁷⁵, R⁷⁶, R⁷⁷, R⁷⁸, R⁷⁹, x, y, z, and X^{a} have the same meaning as above.

In one embodiment, X¹ and X² are each independently a di- to decavalent group, such as a di- or trivalent group, comprising a partial structure selected from a single bond, a C₁₋₆₀ alkylene group, -CO-, -COO-, -NR⁴¹-, -CONR⁴¹-, -R⁴¹-, -NR⁴¹-CO-NR⁴¹-, -O-, -S-, -CON=, and R^{S}, and x is an integer of 1 to 20.

Examples of the combination of the partial structures comprised in X¹ and X² include the same or different two groups selected from a single bond, a C₁₋₆₀ alkylene group, -CO-, -COO-, -NR⁴¹-, -CONR⁴¹-, -OCONR⁴¹-, -NR⁴¹-CO-NR⁴¹-, -O-, -S-, - CON=, and R^{S}.

In one embodiment, the partial structures comprised in X¹ and X² are the same, and in another embodiment, the partial structures comprised in X¹ and X² are different.

Examples of the combination of the partial structure comprised in X¹ and that comprised in X², or the combination of the partial structure comprised in X² and that comprised in X¹ include:
a single bond and a single bond; a single bond and a C₁₋₆₀ alkylene group; a single bond and -CO-; a single bond and -COO-; a single bond and -NR⁴¹-; a single bond and -O-CO-NR⁴¹-; a single bond and -NR⁴¹-CO-NR⁴¹-; a single bond and - CONR⁴¹-; a single bond and -O-; a single bond and -S-; a single bond and -CON=; a single bond and R^{S};
a C₁₋₆₀ alkylene group and a C₁₋₆₀ alkylene group; a C₁₋₆₀ alkylene group and - CO-; a C₁₋₆₀ alkylene group and -COO-; a C₁₋₆₀ alkylene group and -NR⁴¹-; a C₁₋₆₀ alkylene group and -O-CO-NR⁴¹-; a C₁₋₆₀ alkylene group and -NR⁴¹-CO-NR⁴¹-; a C₁₋₆₀ alkylene group and -CONR⁴¹-; a C₁₋₆₀ alkylene group and -O-; a C₁₋₆₀ alkylene group and -S-; a C₁₋₆₀ alkylene group and -CON=; a C₁₋₆₀ alkylene group and R^{S};
-CO- and -CO-; -CO- and -COO-; -CO- and -NR⁴¹-; -CO- and -O-CO-NR⁴¹-; -CO- and -NR⁴¹-CO-NR⁴¹-; -CO- and -CONR⁴¹-; -CO- and -O-; -CO- and -S-; -CO- and -CON=; -CO- and R^{S};
-COO- and -COO-; -COO- and -NR⁴¹-; -COO- and -O-CO-NR⁴¹-; -COO- and -NR⁴¹-CO-NR⁴¹-; -COO- and -CONR⁴¹-; -COO- and -O-; -COO- and -S-; -COO- and -CON=; -COO- and R^{S};
-NR⁴¹- and -NR⁴¹-; -NR⁴¹- and -O-CO-NR⁴¹-; -NR⁴¹- and -NR⁴¹-CO-NR⁴¹-; - NR⁴¹- and -CONR⁴¹-; -NR⁴¹- and -O-; -NR⁴¹- and -S-; -NR⁴¹- and -CON=; -NR⁴¹- and R^{S};
-O-CO-NR⁴¹- and -O-CO-NR⁴¹-; -O-CO-NR⁴¹- and -NR⁴¹-CO-NR⁴¹-; -O-CO-NR⁴¹- and -CONR⁴¹-; -O-CO-NR⁴¹- and -O-; -O-CO-NR⁴¹- and -S-; -O-CO-NR⁴¹- and -CON=; -O-CO-NR⁴¹- and R^{S};
-NR⁴¹-CO-NR⁴¹- and -NR⁴¹-CO-NR⁴¹-; -NR⁴¹-CO-NR⁴¹- and -CONR⁴¹-; - NR⁴¹-CO-NR⁴¹- and -O-; -NR⁴¹-CO-NR⁴¹- and -S-; -NR⁴¹-CO-NR⁴¹- and -CON=; - NR⁴¹-CO-NR⁴¹- and R^{S};
-CONR⁴¹- and -CONR⁴¹-; -CONR⁴¹- and -O-; -CONR⁴¹- and -S-; -CONR⁴¹- and -CON=; -CONR⁴¹- and R^{S};
-O- and -O-; -O- and -S-; -O- and -CON=; -O- and R^{S};
-S- and -S-; -S- and -CON=; -S- and R^{S};
-CON= and -CON=; -CON= and R^{S}; and
R^{S} and R^{S}.

In a preferable embodiment, in the formula (2), X² comprises an amide bond. In other words, X² is each independently a di- to decavalent group, such as a di- or trivalent group, comprising -CONR⁴¹-, -OCONR⁴¹-, or -NR⁴¹-CO-NR⁴¹-.

R⁷⁰ is a hydrogen atom or a methyl group. In one embodiment, R⁷⁰ is a hydrogen atom. In another embodiment, R⁷⁰ is a methyl group.

R^{Si2} is a monovalent group comprising a Si atom to which a hydroxyl group or a hydrolyzable group is bonded.

In a preferable embodiment, R^{Si2} is each independently preferably a group represented by the formula (S1), (S2), (S3), (S4), or (S5).

In one embodiment, R^{Si} is a group represented by the formula (S2), (S3), (S4), or (S5).

In one embodiment, R^{Si2} is a group represented by the formula (S2), (S3), or (S4).

In one embodiment, R^{Si2} is a group represented by the formula (S3), (S4), or (S5).

In one embodiment, R^{Si2} is a group represented by the formula (S3) or (S4).

In one embodiment, R^{Si2} is a group represented by the formula (S4), or (S5).

In one embodiment, R^{Si2} is a group represented by the formula (S1). In a preferable embodiment, n1 is 1 to 3, preferably 2 to 3, and more preferably 3.

In one embodiment, R^{Si2} is a group represented by the formula (S2). In a preferable embodiment, the formula (S2) is any of the following formulae, wherein * represents a bonding site to X².

* -Si(OCH₃)₃

* -Si(OCH₂CH₃)₃

In one embodiment, R^{Si2} is a group represented by the formula (S3). In a preferable embodiment, the formula (S3) is -SiR^{a1}₂R^{c1} or -SiR^{a1}₃, R^{a1} is -Z¹-SiR²²_{q1}R²³ᵣ₁, Z¹ is a C₁₋₁₅ alkylene group, -(CH₂)_{z1}-O-(CH₂)_{z2}- (wherein z1 is an integer of 0 to 6 such as an integer of 1 to 6, and z2 is an integer of 0 to 6 such as an integer of 1 to 6), or -(CH₂)_{z3}-phenylene-(CH₂)_{z4}- (wherein z3 is an integer of 0 to 6 such as an integer of 1 to 6, and z4 is an integer of 0 to 6 such as an integer of 1 to 6), preferably a C₁₋₁₅ alkylene group, and q1 is 1 to 3, preferably 2 to 3, and more preferably 3.

In a preferable embodiment, the formula (S3) is any of the following formulae. In the following formulae, * represents a bonding site to X².

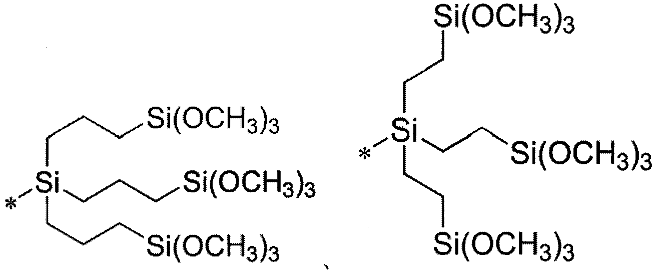

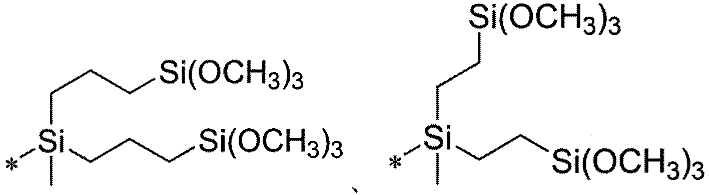

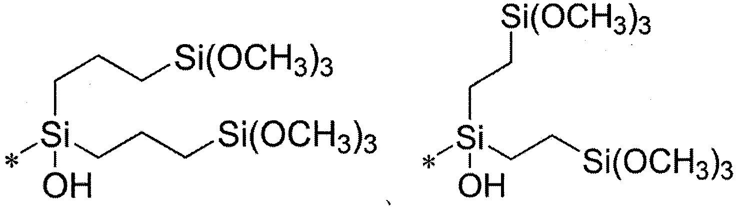

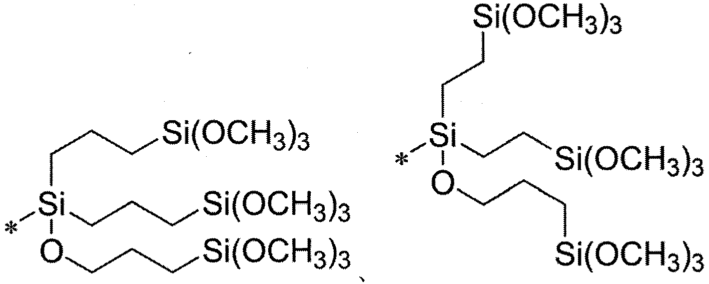

In one embodiment, R^{Si2} is a group represented by the formula (S4). In a preferable embodiment, the formula (S4) is -CR^{e1}₂R^{f1} or -CR^{e1}₃, R^{e1} is -Z³-SiR³⁴ₙ₂R³⁵₃₋ₙ₂, Z³ is a C₁₋₁₅ alkylene group, -(CH₂)_{z5"}-O-(CH₂)_{z6"}- (wherein z5" is an integer of 0 to 6 such as an integer of 1 to 6, and z6" is an integer of 0 to 6 such as an integer of 1 to 6), or -(CH₂)_{z7"}-phenylene-(CH₂)_{z8"}- (wherein z7" is an integer of 0 to 6 such as an integer of 1 to 6, and z8" is an integer of 0 to 6 such as an integer of 1 to 6), preferably a C₁₋₁₅ alkylene group, and n2 is 1 to 3, preferably 2 to 3, and more preferably 3.

In a preferable embodiment, the formula (S4) is any of the following formulae. In the following formulae, * represents a bonding site to X².

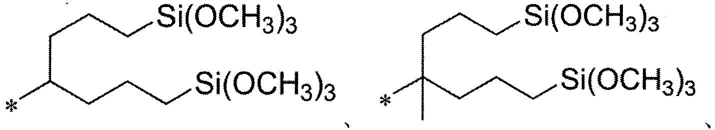

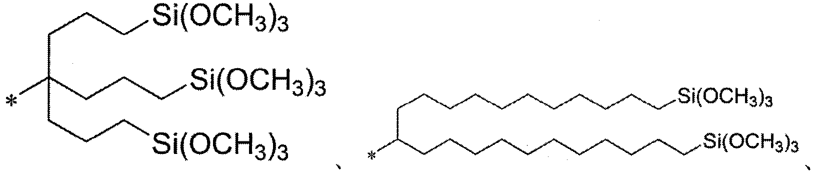

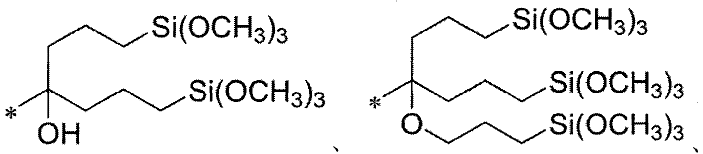

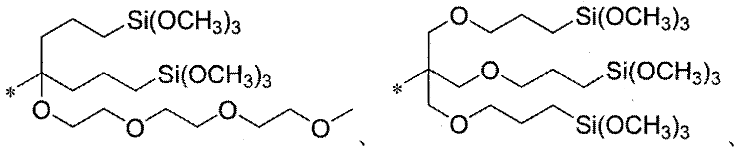

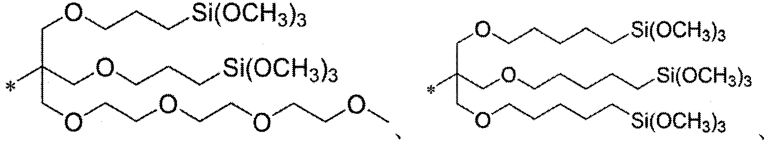

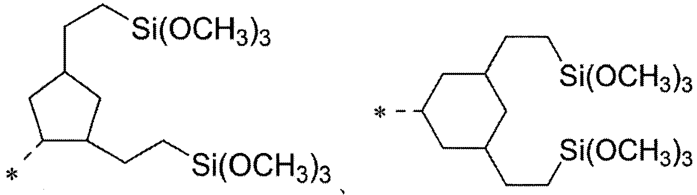

In one embodiment, R^{Si2} is a group represented by the formula (S5). In a preferable embodiment, R^{g1} and R^{h1} are -z⁴-SiR¹¹ₙ₁R¹²₃₋ₙ₁, Z⁴ is a C₁₋₁₅ alkylene group, -(CH₂)_{z5"}-O-(CH₂)_{z6"}- (wherein z5" is an integer of 0 to 6 such as an integer of 1 to 6, and z6" is an integer of 0 to 6 such as an integer of 1 to 6), or -(CH₂)_{z7"}-phenylene-(CH₂)_{z8"}- (wherein z7" is an integer of 0 to 6 such as an integer of 1 to 6, and z8" is an integer of 0 to 6 such as an integer of 1 to 6), preferably a C₁₋₁₅ alkylene group, and n1 is 1 to 3, preferably 2 to 3, and more preferably 3.

In a preferable embodiment, the formula (S5) is any of the following formulae. In the following formulae, * represents a bonding site to X².

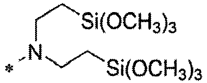

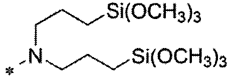

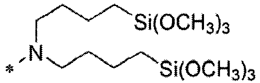

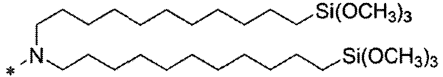

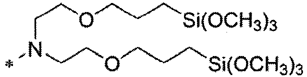

Examples of the compound represented by the formula (2) include those having the following structures:
· CH₃CH=CH-(CH₂)_{H2}-C(=O)NHCH₂CH₂CH₂Si(OCH₃)₃ (wherein H2 is an integer of 1 to 30); and
. CH₂=CH-(CH₂)_{H2}-C(=O)NHCH₂CH₂CH₂Si(OCH₃)₃ (wherein H2 is an integer of 1 to 30).

In one embodiment, the compound represented by the formula (2) has any of the following structures:
· CH₃CH=CH-(CH₂)_{H2}-C(=O)NHCH₂CH₂CH₂Si(OCH₃)₃ (wherein H2 is an integer of 7 to 25); and
· CH₂=CH-(CH₂)_{H2}-C(=O)NHCH₂CH₂CH₂Si(OCH₃)₃ (wherein H2 is an integer of 7 to 25).

In one embodiment, the compound represented by the formula (2) has any of the following structures:
· CH₃CH=CH-(CH₂)₇-C(=O)NHCH₂CH₂CH₂Si(OCH₃)₃; and
· CH₂=CH-(CH₂)₈-C(=O)NHCH₂CH₂CH₂Si(OCH₃)₃.

In one embodiment, the compound represented by the formula (2) has any of the following structures:
· CH₃CH=CH-(CH₂)₇-C(=O)NHCH₂CH₂CH₂Si(OCH₃)₃; and
· CH₂=CH-(CH₂)₈-C(=O)NHCH₂CH₂CH₂Si(OCH₃)₃.

In one embodiment, the compound represented by the formula (2) has any of the following structures:
· CH₃CH=CH-(CH₂)₁₉-C(=O)NHCH₂CH₂CH₂Si(OCH₃)₃; and
· CH₂=CH-(CH₂)₂₀-C(=O)NHCH₂CH₂CH₂Si(OCH₃)₃.

The content of the silane compound represented by the formula (2) is preferably smaller than the content of the silane compound represented by the formula (1). The content of the silane compound represented by the formula (2) is preferably 0.01 mol or more and 99.9 mol or less, more preferably 0.01 mol or more and 50.0 mol or less, and even more preferably 0.01 mol or more and 10.0 mol or less per 100 mol of the silane compound represented by the formula (1). When the content of the silane compound represented by the formula (2) is within this range, the friction durability and fingerprint removability by wiping of the resultant surface-treating layer are good.

The content of the compound represented by the formula (2) is preferably 0.1 to 30% by mass, more preferably 0.5 to 10% by mass, even more preferably 1 to 3% by mass, and particularly preferably 1 to 2% by mass based on the total content of the compound represented by the formula (1) and the compound represented by the formula (2).

In one embodiment, the value of the integer H1 in the compound represented by the formula (1) is the same as the value of the integer H2 in the compound represented by the formula (2).

In one embodiment, the value of the integer H1 in the compound represented by the formula (1) is different from the value of the integer H2 in the compound represented by the formula (2).

The compound represented by the formula (2) preferably comprises one or more compounds (wherein nII is an integer of 10 to 80), selected from the following group (II):
[(CH₃)₃SiO]₂CH₃Si-(OSi(CH₃)₂)_{nII}-(CH₂)₂₂-CONH-CH₂CH(CH₂CH=CH₂)₂ (wherein nII is an integer of 10 to 80, preferably 10 to 40, and more preferably 26);
(CH₃)₃Si-(OSi(CH₃)₂)_{nII}-(CH₂)₁₀-CON(CH₂CH=CH₂)₂ (wherein nII is an integer of 10 to 80, preferably 10 to 30, and more preferably 19);
(CH₃)₃Si-(OSi(CH₃)₂)_{nII}-(CH₂)₁₀-CONH-CH₂C(CH₂CH=CH₂)₃ (wherein nII is an integer of 10 to 80, preferably 10 to 30, and more preferably 19);
(CH₃)₃Si-(OSi(CH₃)₂)ₙ₁₁-(CH₂)₂₂-CONH-CH₂CH(CH₂CH=CH₂)₂ (wherein nII is an integer of 10 to 80, preferably 40 to 80, and more preferably 57); and 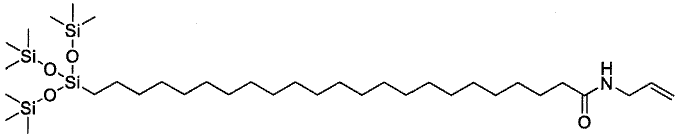 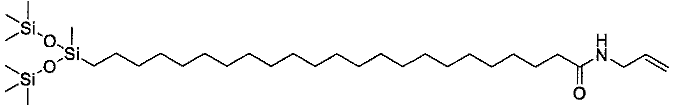 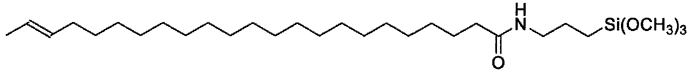 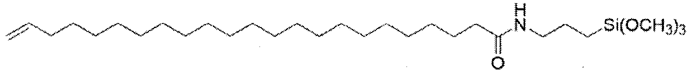 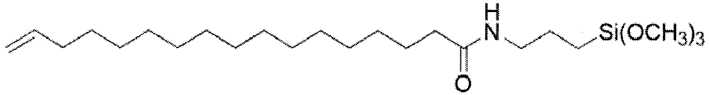 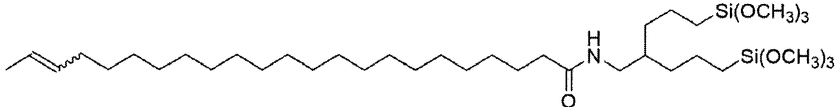 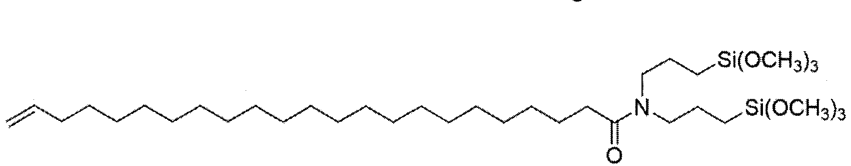 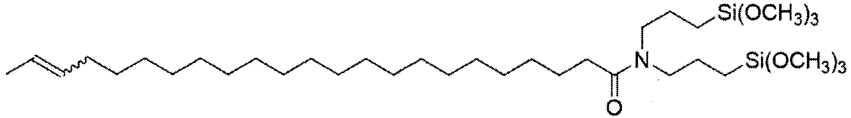 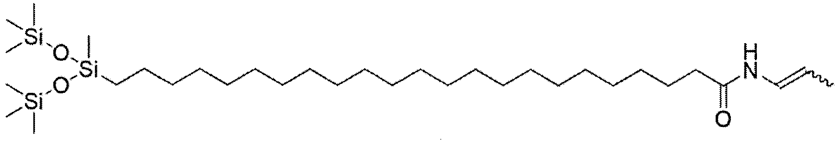
nII is preferably 12 to 70, and more preferably 15 to 60.

Next, a surface-treating agent of the present invention will be described.

The surface-treating agent of the present disclosure comprises a silane compound represented by the formula (1), and a silane compound represented by the formula (2). The surface-treating agent of the present disclosure is usable for coating, and the surface-treating agent used for coating is sometimes referred to simply as a coating liquid.

In one embodiment, the surface-treating agent (coating liquid) of the present disclosure is a composition itself comprising a silane compound represented by the formula (1), and a silane compound represented by the formula (2).

In one embodiment, the total content of the silane compound represented by the formula (1) and the silane compound represented by the formula (2) may be preferably 0.1 to 50.0% by mass, more preferably 1.0 to 30.0% by mass, even more preferably 5.0 to 25.0% by mass, and particularly preferably 10.0 to 20.0% by mass based on the entirety of the surface-treating agent.

In another embodiment, the total content of the silane compound represented by the formula (1) and the silane compound represented by the formula (2) is preferably 0.001 to 30% by mass, more preferably 0.01 to 10% by mass, even more preferably 0.05 to 5% by mass, and particularly preferably 0.05 to 2% by mass based on the entirety of the surface-treating agent.

In one embodiment, the surface-treating agent (coating liquid) of the present disclosure may comprise the above-described composition, and at least one compound comprising a condensate in which at least a part of the silane compound comprised in the composition is condensed. In other words, the surface-treating agent of the present disclosure may comprise the silane compound, and the condensed product in which at least a part of the silane compound is condensed.

In the above embodiment, the content of the condensate may be preferably 40% by mass or less and more preferably 30% by mass or less based on the sum of the silane compound and the condensate of the silane compound. Here, the content of the condensate can be determined from, for example, the abundance ratio of the peak position to the area in GPC (gel permeation chromatography).

The surface-treating agent (coating liquid) of the present disclosure may further comprise a solvent, a (non-reactive) silicone compound that may be understood as a silicone oil (hereinafter, referred to as "silicone oil"), an amine compound, an alcohol, a catalyst, a surfactant, a polymerization inhibitor, a sensitizer, and the like.

In one embodiment, the surface-treating agent (coating liquid) of the present disclosure further comprises a compound represented by R⁹⁰-OH.

R⁹⁰ is a monovalent organic group and is preferably a C₁₋₂₀ alkyl group or a C₃₋₂₀ alkylene group, and these groups may be substituted with one or more substituents. Examples of substituents include a hydroxyl group and -OR⁹¹ wherein R⁹¹ is a C₁₋₁₀ alkyl group, and preferably a C₁₋₃ alkyl group, such as a methyl group.

In one embodiment, the surface-treating agent (coating liquid) of the present disclosure may further comprise a solvent selected from the compounds represented by R⁸¹OR⁸², R⁸³ₙ₈C₆H₆₋ₙ₈, R⁸⁴R⁸⁵R⁸⁶Si-(O-SiR⁸⁷R⁸⁸)ₘ₈-R⁸⁹, and (OSiR⁸⁷R⁸⁸)ₘ₉, wherein
R⁸¹ to R⁸⁹ are each independently a monovalent organic group having 1 to 10 carbon atoms,
m8 is an integer of 1 to 6,
m9 is an integer of 3 to 8, and
n8 is an integer of 0 to 6.

The monovalent organic group having 1 to 10 carbon atoms may be linear or branched, and may further comprise a cyclic structure.

In one embodiment, the monovalent organic group having 1 to 10 carbon atoms may comprise an oxygen atom, a nitrogen atom, or a halogen atom.

In another embodiment, the monovalent organic group having 1 to 10 carbon atoms does not comprise a halogen atom.

In a preferable embodiment, the monovalent organic group having 1 to 10 carbon atoms is a hydrocarbon group optionally substituted with a halogen, and preferably a hydrocarbon group not substituted with a halogen.

In one embodiment, the hydrocarbon group is linear.

In another embodiment, the hydrocarbon group is branched.

In another embodiment, the hydrocarbon group comprises a cyclic structure.

In one embodiment, the solvent is R⁸¹OR⁸².

R⁸¹ and R⁸² may be, each independently, preferably a hydrocarbon group having 1 to 8 carbon atoms, and more preferably a C₁₋₆ alkyl group or a C₅₋₈ cycloalkyl group.

In one embodiment, the solvent is R⁸³ₙ₈C₆H₆₋ₙ₈.

C₆H₆₋ₙ₈ is an n8-valent benzene ring. That is to say, R⁸³ₙ₈C₆H₆₋ₙ₈ is benzene substituted with n8 R⁸³.

R⁸³ may be each independently a halogen, or a C₁₋₆ alkyl group optionally substituted with a halogen.

n8 is preferably an integer of 1 to 3.

In one embodiment, the solvent is R⁸⁴R⁸⁵R⁸⁶Si-(O-SiR⁸⁷R88)ₘ₈-R⁸⁹.

In one embodiment, the solvent is (OSiR⁸⁷R⁸⁸)ₘ₉. (OSiR⁸⁷R⁸⁸)ₘ₉ is a cyclic siloxane formed of multiple OSiR⁸⁷R⁸⁸ units bonded in a cyclic form.

R⁸⁴ to R⁸⁹ are each independently a hydrogen atom or a C₁₋₆ alkyl group, preferably a C₁₋₆ alkyl group, more preferably a C₁₋₃ alkyl group, and even more preferably a methyl group.

m8 is preferably an integer of 1 to 6, more preferably an integer of 1 to 5, and even more preferably 1 to 2.

m9 is preferably an integer of 3 to 6, and more preferably an integer of 3 to 5.

In one embodiment, examples of the solvent include aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide, N,N-dimethylacetamide, and N-methylpyrrolidone; ether alcohols such as methyl cellosolve, cellosolve, isopropyl cellosolve, butyl cellosolve, and diethylene glycol monomethyl ether; diethylene glycol monoethyl ether acetate; polyfluoroaromatic hydrocarbons (for example, 1,3-bis(trifluoromethyl)benzene); polyfluoroaliphatic hydrocarbons (for example, C₆F₁₃CH₂CH₃ (for example, ASAHIKLIN(R) AC-6000 manufactured by AGC Inc.), C₆F₁₃H (for example, ASAHIKLIN(R) AC-2000 manufactured by AGC Inc.), and 1,1,2,2,3,3,4-heptafluorocyclopentane (for example, Zeorolla(R) H manufactured by ZEON Corporation); fluorine-containing hydrocarbons such as 1,1,2-trichloro-1,2,2-trifluoroethane, 1,2-dichloro-1,1,2,2-tetrafluoroethane, 1,1-dichloro-1,2,2,3,3-pentafluoropropane (HCFC 225), and 1,3-bis(trifluoromethyl)benzene; fluorine-containing alcohols such as CF₃CH₂OH, CF₃CF₂CH₂OH, and (CF₃)₂CHOH; alkyl perfluoroalkyl ethers (the perfluoroalkyl group and the alkyl group may be linear or branched) such as hydrofluoroethers (HFE) (for example, perfluoropropyl methyl ether (C₃F₇OCH₃) (for example, Novec(TM) 7000 manufactured by SUMITOMO 3M), perfluorobutyl methyl ether (C₄F₉OCH₃) (for example, Novec(TM) 7100 manufactured by SUMITOMO 3M), perfluorobutyl ethyl ether (C₄F₉OC₂H₅) (for example, Novec(TM) 7200 manufactured by SUMITOMO 3M), and perfluorohexyl methyl ether (C₂F₅CF(OCH₃)C₃F₇) (for example, Novec(TM) 7300 manufactured by SUMITOMO 3M), or CF₃CH₂OCF₂CHF₂ (for example, ASAHIKLIN(R) AE-3000 manufactured by AGC Inc.)), hydrofluoroolefins; ethers such as CF₃CH=CHCl (for example, CELEFIN(R) 1233Z manufactured by Central Glass Co., Ltd.), CHF₂CF=CHCl (for example, AMOLEA(R) AS-300 manufactured by AGC Inc.), and cyclopentyl methyl ether; siloxanes such as hexamethyldisiloxane, hexaethyldisiloxane, octamethyltrisiloxane, octamethylcyclotetrasiloxane, octamethylcyclopentasiloxane, decamethylcyclopentasiloxane, decamethyltetrasiloxane, dodecamethylpentasiloxane, and tetradecamethylhexasiloxane; and dimethylsulfoxide. Alternatively, the solvent may be a mixed solvent or the like of two or more of such solvents. In particular, preferable are aliphatic hydrocarbons, aromatic hydrocarbons, esters, glycol ethers, alcohols, ether alcohols, and siloxanes. For example, preferable are hexane, cyclohexane, heptane, octane, nonane, decane, undecane, dodecane, mineral spirits, benzene, toluene, xylene, naphthalene, methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, ethyl 2-hydroxyisobutyrate, propylene glycol monomethyl ether, propylene glycol monoethyl ether, propylene glycol monobutyl ether, methanol, ethanol, iso-propanol, n-butanol, isobutanol, tert-butanol, sec-butanol, diethylene glycol monomethyl ether, hexamethyldisiloxane, hexaethyldisiloxane, octamethyltrisiloxane, decamethyltetrasiloxane, dodecamethylpentasiloxane, tetradecamethylhexasiloxane, octamethylcyclotetrasiloxane, and octamethylcyclopentasiloxane.

Examples of the silicone oil include, but are not limited to, compounds represented by the following general formula (3a):

R^{101a}-(SiR^{103a}₂-O)ₐ₁-SiR^{103a}₂-R^{101a} (3a)

wherein
R^{101a} is each independently a hydrogen atom or a hydrocarbon group,
R^{103a} is each independently a hydrogen atom or a hydrocarbon group, and
a1 is 2 to 3,000.

R^{103a} is each independently a hydrogen atom or a hydrocarbon group. Such a hydrocarbon group may be substituted.

R^{103a} is, each independently, preferably an unsubstituted hydrocarbon group or a hydrocarbon group substituted with a halogen atom. Such a halogen atom is preferably a fluorine atom.

R^{103a} is, each independently, preferably a C₁₋₆ alkyl group or an aryl group optionally substituted with a halogen atom, and more preferably a C₁₋₆ alkyl group or an aryl group.

The C₁₋₆ alkyl group may be linear or may be branched, and is preferably linear.
The C₁₋₆ alkyl group is preferably a C₁₋₃ alkyl group, and more preferably a methyl group.

The aryl group is preferably a phenyl group.

In one embodiment, R^{103a} is each independently a C₁₋₆ alkyl group, preferably a C₁₋₃ alkyl group, and more preferably a methyl group.

In another embodiment, R^{103a} is a phenyl group.

In another embodiment, R^{103a} is a methyl group or a phenyl group, and preferably a methyl group.

In another embodiment, R^{103a} is a n-butyl group.

R^{101a} is each independently a hydrogen atom or a hydrocarbon group, and has the same meaning as R^{3a}.

R^{101a} is each independently preferably a C₁₋₆ alkyl group or aryl group that is optionally substituted with a halogen atom, and more preferably a C₁₋₆ alkyl group or aryl group.

In one embodiment, R^{101a} is each independently a C₁₋₆ alkyl group, preferably a C₁₋₃ alkyl group, and more preferably a methyl group.

In another embodiment, R^{101a} is a n-butyl group.

In another embodiment, R^{101a} is a phenyl group.

In another embodiment, R^{101a} is a methyl group or a phenyl group, and preferably a methyl group.

al is 2 to 1,500. a1 may be preferably 5 or more, more preferably 10 or more, and even more preferably 15 or more, such as 30 or more or 50 or more. a1 may be preferably 1,000 or less, more preferably 500 or less, even more preferably 200 or less, and yet more preferably 150 or less, such as 100 or less or 80 or less.

a1 may be preferably 5 to 1,000, more preferably 10 to 500, even more preferably 15 to 200, and yet more preferably 15 to 150.

Other examples of the silicone oil include compounds represented by (3b) below:

R^{101a}-R^{SO2}-R^{103a} (3b)

wherein
R^{101a} is each independently a hydrocarbon group,
R^{103a} is each independently a hydrocarbon group, and
R^{SO2} is -R^{S}-SiR⁵₂-, wherein R^{S} and R⁵ have the same meanings as above.

The silicone oil may have an average molecular weight of 500 to 1,000,000, and preferably 1,000 to 100,000. The molecular weight of the silicone oil may be measured using GPC.

The silicone oil may be, for example, a linear or cyclic silicone oil in which a1 in -(SiR^{3a}₂-O)ₐ₁- is 30 or less. The linear silicone oil may be a so-called straight silicone oil or modified silicone oil. Examples of the straight silicone oil include dimethyl silicone oil, methyl phenyl silicone oil, and methyl hydrogen silicone oil. Examples of the modified silicone oil include those obtained by modifying a straight silicone oil with alkyl, aralkyl, polyether, higher fatty acid ester, fluoroalkyl, amino, epoxy, carboxyl, alcohol, or the like. The cyclic silicone oil may be, for example, cyclic dimethylsiloxane oil.

The silicone oil may be comprised in an amount of, for example, 0 to 50% by mass, preferably 0.001 to 30% by mass, and more preferably 0.1 to 5% by mass, based on the surface-treating agent (coating liquid) of the present disclosure.

In the surface-treating agent (coating liquid) of the present disclosure, such a silicone oil may be comprised in an amount of, for example, 0 to 300 parts by mass, preferably 0 to 100 parts by mass, more preferably 0 to 50 parts by mass, and even more preferably 0 to 10 parts by mass, based on total 100 parts by mass of the compound comprised in the composition of the present disclosure (in the case of two or more kinds, the total thereof, and the same applies below).

The silicone oil contributes to increasing the surface lubricity of the surface-treating layer.

Examples of the alcohol include methanol, ethanol, iso-propanol, n-butanol, isobutanol, tert-butanol, sec-butanol, 3-pentanol, octyl alcohol, 3-methyl-3-methoxybutanol, and tert-amyl alcohol. Such an alcohol added to the composition improves the stability of the composition.

Examples of the catalyst include acids (for example, acetic acid, hydrochloric acid, nitric acid, sulfuric acid, phosphoric acid, sulfonic acid, p-toluenesulfonic acid, trifluoroacetic acid, and the like), bases (for example, sodium hydroxide, potassium hydroxide, ammonia, triethylamine, diethylamine, and the like), transition metals (for example, Ti, Ni, Sn, Zr, Al, B, Si, Ta, Nb, Mo, W, Cr, Hf, V, and the like), and sulfur-containing compounds or nitrogen-containing compounds having an unshared electron pair in the molecular structure (for example, sulfoxide compounds, aliphatic amine compounds, aromatic amine compounds, phosphoric acid amide compounds, amide compounds, and urea compounds).

Examples of the aliphatic amine compound include diethylamine and triethylamine. Examples of the aromatic amine compound include aniline and pyridine.

In a preferable embodiment, the transition metal is comprised as a transition metal compound represented by M-R, wherein M is a transition metal atom and R is a hydrolyzable group. By using a compound obtained by bonding a transition metal and a hydrolyzable group as the transition metal compound, the transition metal atom can be comprised in the surface-treating layer more efficiently, and the abrasion durability and the chemical resistance of the surface-treating layer can be more increased.

The hydrolyzable group means a group that can undergo a hydrolysis reaction in the same manner as the hydrolyzable group concerning the above compound, i.e., means a group that can be removed from the transition metal atom by a hydrolysis reaction. Examples of the hydrolyzable group include -OR^{m}, -OCOR^{m}, -ON=CR^{m}₂, -NR^{m}₂, -NHR^{m}, -NCO, and a halogen (in these formulae, R^{m} represents a substituted or unsubstituted C₁₋₄ alkyl group).

In a preferable embodiment, the hydrolyzable group is -OR^{m}, and preferably methoxy or ethoxy. By using an alkoxy group as the hydrolyzable group, the transition metal atom can be comprised in the surface-treating layer more efficiently, and the abrasion durability and the chemical resistance of the surface-treating layer can be more increased.

In one embodiment, the hydrolyzable group may be the same as the hydrolyzable group comprised in the above compound. By causing the hydrolyzable groups in the compound and in the transition metal compound to be the same group, the influence of such hydrolyzable groups being mutually exchanged, if ever, can be minimized.

In another embodiment, the hydrolyzable group may be different from the hydrolyzable group comprised in the above compound. By causing the hydrolyzable groups in the above compound and in the transition metal compound to be different, the reactivity of hydrolysis can be controlled.

In one embodiment, the above hydrolyzable group and the hydrolyzable group comprised in the above compound may be mutually exchanged in the composition.

In a preferable embodiment, the transition metal compound may be Ta(OR^{m})₅ (wherein R^{m} is a substituted or unsubstituted C₁₋₄ alkyl group), preferably Ta(OCH₂CH₃)₅ or Si(OR^{m})₁₋ₘ₁R^{m'}ₘ₁ (wherein R^{m} is a substituted or unsubstituted C₁₋₄ alkyl group, R^{m'} is a C₁₋₄ alkyl group, and m1 is 0 or 1), and preferably tetraethoxysilane, methyltrimethoxysilane, methyltriethoxysilane, tetraisopropoxysilane, dimethyldiethoxysilane, or dimethyldimethoxysilane.

The catalyst may be comprised in an amount of, for example, 0.0002% by mass or more based on the entirety of the surface-treating agent (coating liquid). The catalyst may be comprised in an amount of preferably 0.02% by mass or more, and more preferably 0.04% by mass or more, based on the entirety of the surface-treating agent (coating liquid). The catalyst may be comprised in an amount of, for example, 10% by mass or less based on the entirety of the surface-treating agent (coating liquid) and, in particular, is comprised in an amount of 1% by mass or less. The surface-treating agent (coating liquid) of the present disclosure can contribute to the formation of a surface-treating layer having better durability when the catalyst is comprised in the concentration as described above.

The content of the catalyst is preferably 0 to 10% by mass, more preferably 0 to 5% by mass, and particularly preferably 0 to 1% by mass, based on the compound comprised in the composition of the present disclosure.

The catalyst promotes hydrolysis and dehydrative condensation of the compound comprised in the composition of the present disclosure, and promotes formation of a layer formed of the composition of the present disclosure.

Examples of other components include, in addition to those described above, tetraethoxysilane, methyltrimethoxysilane, 3-aminopropyltrimethoxysilane, 3-glycidoxypropyltrimethoxysilane, and methyltriacetoxysilane.

The surface-treating agent (coating liquid) of the present disclosure may comprise, in addition to the components described above, trace amounts of Pt, Rh, Ru, 1,3-divinyltetramethyldisiloxane, triphenylphosphine, NaCl, KCl, silane condensates, and the like as impurities.

In one embodiment, the surface-treating agent (coating liquid) of the present disclosure is for a dry coating method, and preferably for vacuum deposition.

In one embodiment, the surface-treating agent (coating liquid) of the present disclosure is for a wet coating method, and preferably for dip coating.

The surface-treating agent (coating liquid) of the present disclosure can be formed into pellets by impregnating a porous material such as a porous ceramic material or a metal fiber such as a fiber obtained by, for example, solidifying steel wool in a cotton-like form with composition. Such pellets can be used in, for example, vacuum deposition.

The composition of the present disclosure is preferably used as a surface-treating agent or as a component of a surface-treating agent.

Below, the article of the present disclosure will now be described.

The article of the present disclosure includes a substrate and a layer (a surface-treating layer) on the substrate surface, the layer being formed of the surface-treating agent (coating liquid) of the present disclosure.

The substrate usable in the present disclosure may be composed of any suitable material such as glass, resin (which may be natural or synthetic resin such as a commonly used plastic material), metal, ceramics, semiconductors (such as silicon and germanium), fiber (such as woven fabric and nonwoven fabric), fur, leather, wood, pottery, stone, building materials, and sanitary articles.

For example, when the article to be produced is an optical member, the material constituting the surface of the substrate may be a material for an optical member, such as glass or a transparent plastic. When the article to be produced is an optical member, some layer (or film), such as a hard coat layer or an antireflection layer, may be formed on the surface (the outermost layer) of the substrate. The antireflection layer may be any of a single-layer antireflection layer and a multi-layer antireflection layer. Examples of inorganic substances usable in the antireflection layer include SiO₂, SiO, ZrO₂, TiO₂, TiO, Ti₂O₃, Ti₂O₅, Al₂O₃, Ta₂O₅, Ta₃O₅, Nb₂O₅, HfO₂, Si₃N₄, CeO₂, MgO, Y₂O₃, SnO₂, MgF₂, and WO₃. One of these inorganic substances may be used singly, or two or more kinds thereof may be used in combination (for example, as a mixture). In the case of a multi-layer antireflection layer, SiO₂ and/or SiO is preferably used in the outermost layer thereof. When the article to be produced is an optical glass component for a touch panel, a part of the surface of the substrate (glass) may have a transparent electrode such as a thin film in which indium tin oxide (ITO), indium zinc oxide, or the like is used. The substrate, according to its specific configuration or the like, may have an insulating layer, an adhesive layer, a protecting layer, a decorated frame layer (I-CON), an atomizing film layer, a hard coating layer, a polarizing film, a phase difference film, a liquid crystal display module, or the like.

The form of the substrate is not limited, and may be, for example, a plate, a film, or the like. The surface region of the substrate on which a surface-treating layer is to be formed may be at least a portion of the substrate surface, and may be suitably determined according to the application, specific configuration, and the like of an article to be produced.

In one embodiment, the substrate, or at least the surface portion thereof, may be composed of a material originally having a hydroxyl group. Examples of the material include glass, as well as metal (in particular, base metal) that forms a natural oxidized film or a thermal oxidized film on its surface, ceramics, and semiconductors. Alternatively, when the substrate has an insufficient amount of hydroxyl groups or when the substrate originally has no hydroxyl group as in resin and the like, a pre-treatment may be performed on the substrate to thereby introduce or increase hydroxyl groups on the surface of the substrate. Examples of such a pre-treatment include a plasma treatment (for example, corona discharge) and ion beam irradiation. The plasma treatment can be suitably utilized to not only introduce or increase hydroxyl groups on the substrate surface, but also clean the substrate surface (remove foreign matter and the like). Another example of such a pre-treatment is a method wherein a monolayer of a surface adsorbent having a carbon-carbon unsaturated bonding group is formed on the surface of the substrate by a LB method (a Langmuir-Blodgett method), a chemical adsorption method, or the like beforehand, and thereafter cleaving the unsaturated bond under an atmosphere comprising oxygen, nitrogen, or the like.

In another embodiment, the substrate, or at least the surface portion thereof, may be composed of a material comprising another reactive group such as a silicone compound having one or more Si-H groups or alkoxysilane.

In a preferable embodiment, the substrate is glass. Such glass is preferably sapphire glass, soda-lime glass, alkali aluminosilicate glass, borosilicate glass, alkali-free glass, crystal glass, quartz glass, or crystallized glass, and is particularly preferably chemically strengthened soda-lime glass, chemically strengthened alkali aluminosilicate glass, or chemically bonded borosilicate glass.

In one embodiment, the article of the present disclosure may include a silicon oxide-containing intermediate layer between glass and the surface-treating layer. By providing such an intermediate layer, adhesion between glass and the surface-treating layer is increased, and durability is increased.

In a preferable embodiment, the intermediate layer may comprise an alkali metal in addition to silicon oxide.

Examples of the alkali metal include lithium, sodium, and potassium. The alkali metal is preferably sodium.

The thickness of the intermediate layer is not limited, and is preferably 1 to 200 nm and particularly preferably 1 to 20 nm. By causing the thickness of the intermediate layer to be at the lower limit of the above range or greater, the effect of increasing adhesion provided by the intermediate layer is more increased.

The concentration of alkali metal atoms in the intermediate layer can be measured by various surface analysis apparatuses such as TOF-SIMS, XPS, and XRF.

The proportion of alkali metal atoms to all atoms in the entirety of the intermediate layer can be obtained by XPS depth profile analysis using ion sputtering, wherein measurement by XPS and surface etching by ion sputtering using an ion gun provided in an XPS apparatus are alternately performed.

In the intermediate layer, the average alkali metal concentration in a region having a depth of 1 nm or less from the surface that is in contact with the surface-treating layer is determined by obtaining a depth profile of the alkali metal atom concentration by TOF-SIMS (time-of-flight secondary ion mass spectrometry) depth analysis using ion sputtering, and then calculating the average alkali metal atom concentration in the profile. TOF-SIMS depth profile analysis by ion sputtering is performed by alternately repeating measurement by TOF-SIMS and surface etching by ion sputtering using an ion gun provided in a TOF-SIMS apparatus.

The article of the present disclosure can be produced by forming a layer of the surface-treating agent of the present disclosure on the surface of the substrate and post-treating this layer as necessary, thereby forming a layer from the surface-treating agent of the present disclosure.

The layer of the surface-treating agent of the present disclosure can be formed by applying the surface-treating agent to the surface of the substrate so as to coat the surface. The coating method is not limited. For example, a wet coating method and a dry coating method can be used.

Examples of the wet coating method include dip coating, spin coating, flow coating, spray coating, roll coating, gravure coating, wipe coating, squeegee coat method, die coat, inkjet, cast method, Langmuir-Blodgett method, and similar methods.

Examples of the dry coating method include deposition (usually, vacuum deposition), sputtering, CVD, and similar methods. Specific examples of the deposition method (usually, a vacuum deposition method) include resistive heating, high-frequency heating using electron beam, microwave, or the like, ion beam, and similar methods. Specific examples of the CVD method include plasma-CVD, optical CVD, thermal CVD, and similar methods.

Furthermore, coating by an atmospheric pressure plasma method can be performed.

When using the wet coating method, the surface-treating agent of the present disclosure can be applied to the substrate surface after being diluted with a solvent. From the viewpoint of the stability of the composition of the present disclosure and the volatility of the solvent, the following solvents are preferably used: aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide, N,N-dimethylacetamide, and N-methylpyrrolidone; ether alcohols such as methyl cellosolve, cellosolve, isopropyl cellosolve, butyl cellosolve, and diethylene glycol monomethyl ether; diethylene glycol monoethyl ether acetate; polyfluoroaromatic hydrocarbons (for example, 1,3-bis(trifluoromethyl)benzene); polyfluoroaliphatic hydrocarbons (for example, C₆F₁₃CH₂CH₃ (for example, ASAHIKLIN(R) AC-6000 manufactured by AGC Inc.), C₆F₁₃H (for example, ASAHIKLIN(R) AC-2000 manufactured by AGC Inc.), and 1,1,2,2,3,3,4-heptafluorocyclopentane (for example, Zeorolla(R) H manufactured by ZEON Corporation); fluorine-containing hydrocarbons such as 1,1,2-trichloro-1,2,2-trifluoroethane, 1,2-dichloro-1,1,2,2-tetrafluoroethane, 1,1-dichloro-1,2,2,3,3-pentafluoropropane (HCFC 225), and 1,3-bis(trifluoromethyl)benzene; fluorine-containing alcohols such as CF₃CH₂OH, CF₃CF₂CH₂OH, and (CF₃)₂CHOH; alkyl perfluoroalkyl ethers (the perfluoroalkyl group and the alkyl group may be linear or branched) such as hydrofluoroethers (HFE) (for example, perfluoropropyl methyl ether (C₃F₇OCH₃) (for example, Novec(TM) 7000 manufactured by SUMITOMO 3M), perfluorobutyl methyl ether (C₄F₉OCH₃) (for example, Novec(TM) 7100 manufactured by SUMITOMO 3M), perfluorobutyl ethyl ether (C₄F₉OC₂H₅) (for example, Novec(TM) 7200 manufactured by SUMITOMO 3M), and perfluorohexyl methyl ether (C₂F₅CF(OCH₃)C₃F₇) (for example, Novec(TM) 7300 manufactured by SUMITOMO 3M), or CF₃CH₂OCF₂CHF₂ (for example, ASAHIKLIN(R) AE-3000 manufactured by AGC Inc.)), hydrofluoroolefins; ethers such as CF₃CH=CHCl (for example, CELEFIN(R) 1233Z manufactured by Central Glass Co., Ltd.), CHF₂CF=CHCl (for example, AMOLEA(R) AS-300 manufactured by AGC Inc.), and cyclopentyl methyl ether; siloxanes such as hexamethyldisiloxane, hexaethyldisiloxane, octamethyltrisiloxane, octamethylcyclotetrasiloxane, octamethylcyclopentasiloxane, decamethylcyclopentasiloxane, decamethyltetrasiloxane, dodecamethylpentasiloxane, and tetradecamethylhexasiloxane; and dimethylsulfoxide. Alternatively, the solvent may be a mixed solvent or the like of two or more of such solvents. In particular, preferable are aliphatic hydrocarbons, aromatic hydrocarbons, esters, glycol ethers, alcohols, ether alcohols, and siloxanes. For example, preferable are hexane, cyclohexane, heptane, octane, nonane, decane, undecane, dodecane, mineral spirits, benzene, toluene, xylene, naphthalene, methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, ethyl 2-hydroxyisobutyrate, propylene glycol monomethyl ether, propylene glycol monoethyl ether, propylene glycol monobutyl ether, methanol, ethanol, iso-propanol, n-butanol, isobutanol, tert-butanol, sec-butanol, diethylene glycol monomethyl ether, hexamethyldisiloxane, hexaethyldisiloxane, octamethyltrisiloxane, decamethyltetrasiloxane, dodecamethylpentasiloxane, tetradecamethylhexasiloxane, octamethylcyclotetrasiloxane, and octamethylcyclopentasiloxane.

In one embodiment, the solvent when the wet coating method is used may be, for example, a compound represented by R⁹⁰-OH. R⁹⁰ is a monovalent organic group and is preferably a C₁₋₂₀ alkyl group or a C₃₋₂₀ alkylene group, and these groups may be substituted with one or more substituents. Examples of substituents include a hydroxyl group and -OR⁹¹ wherein R⁹¹ is a C₁₋₁₀ alkyl group, and preferably a C₁₋₃ alkyl group, such as a methyl group.

When using the dry coating method, the surface-treating agent of the present disclosure may be directly subjected to the dry coating method, or may be diluted with the solvent before being subjected to the dry coating method.

A layer of the surface-treating agent is preferably formed such that the surface-treating agent of the present disclosure coexists in the layer with a catalyst for hydrolysis and dehydrative condensation. Conveniently, in the case of a wet coating method, the surface-treating agent of the present disclosure is diluted with a solvent, and then, immediately before application to the substrate surface, a catalyst may be added to the diluted solution of the surface-treating agent of the present disclosure. In the case of a dry coating method, the surface-treating agent of the present disclosure to which a catalyst has been added is directly used in a deposition (usually vacuum deposition) treatment, or a pellet-like material may be used in a deposition (usually vacuum deposition) treatment, wherein pellets are obtained by impregnating a porous body of metal such as iron or copper with the surface-treating agent of the present disclosure to which the catalyst has been added.

The catalyst may be any suitable acid or base, transition metal (such as Ti, Ni, Sn, Zr, Al, or B), sulfur-containing compound or nitrogen-containing compound having an unshared electron pair in the molecular structure (such as a sulfoxide compound, an aliphatic amine compound, an aromatic amine compound, a phosphoric acid amide compound, an amide compound, or an urea compound), or the like. The acid catalyst may be, for example, acetic acid, formic acid, trifluoroacetic acid, hydrochloric acid, nitric acid, sulfuric acid, phosphoric acid, sulfonic acid, methanesulfonic acid, or p-toluenesulfonic acid. Also, the base catalyst may be, for example, ammonia, sodium hydroxide, potassium hydroxide, or an organic amine such as triethylamine or diethylamine. Examples of the transition metal, the aliphatic amine compound, and the aromatic amine compound include those described above.

The surface-treating layer comprised in the article of the present disclosure may have high abrasion durability. Moreover, the surface-treating layer may have not only high abrasion durability but also have, depending on the composition of the surface-treating agent used, water-repellency, oil-repellency, antifouling properties (e.g., preventing grime such as fingerprints from adhering), waterproof properties (preventing water from entering electronic components and the like), surface lubricity (or lubricity, for example, such as removability by wiping of grime such as fingerprints, and excellent tactile sensations to the fingers), chemical resistance, and the like, and may be suitably used as a functional thin film.

Accordingly, the present disclosure further relates to an optical material having the surface-treating layer as the outermost layer.

The optical material preferably includes a wide variety of optical materials, in addition to optical materials relating to displays and the like as exemplified below: for example, displays such as cathode ray tubes (CRTs; for example, PC monitors), liquid crystal displays, plasma displays, organic EL displays, inorganic thin-film EL dot matrix displays, rear projection displays, vacuum fluorescent displays (VFDs), field emission displays (FEDs); protective plates for such displays; and those obtained by performing an antireflection film treatment on their surfaces.

The article of the present disclosure may be, but is not limited to, an optical member. Examples of the optical member include lenses of glasses or the like; front surface protective plates, antireflection plates, polarizing plates, and anti-glare plates for displays such as PDPs and LCDs; touch panel sheets for equipment such as cell phones and portable information terminals; disc surfaces of optical discs such as Blu-ray(R) discs, DVD discs, CD-Rs, and MOs; optical fibers; and display surfaces of watches and clocks.

The article of the present disclosure may be medical equipment or a medical material. The article having a layer that is obtained according to the present disclosure may be an automobile interior or exterior member. Examples of the exterior material are as follows: windows, light covers, and external camera covers. Examples of the interior material are as follows: instrument panel covers, navigation system touch panels, and decorative interior materials.

The thickness of the layer is not limited. The thickness of the layer in the case of an optical member may be in the range of, for example, 1 to 50 nm, preferably 1 to 30 nm, and more preferably 1 to 15 nm, from the viewpoint of optical performance, abrasion durability, and antifouling properties.

The apparatus for performing X-ray photoelectron spectroscopy for measuring the atomic composition and the ratio of constitutional atoms of the surface-treating layer may be XPS or PHI 5000 VersaProbe II manufactured by ULVAC-PHI, Inc. Usable measurement conditions for XPS analysis may be an X-ray source of 25 W monochromatic AlKα radiation, a photoelectron detection surface of 1,400 µm × 300 µm, a photoelectron detection angle in a range of 20° to 90° (for example, 20°, 45°, 90°), a pass energy of 23.5 eV, and sputtering with a gas cluster ion beam or Ar ions. The compositions of the surface-treating layer and the intermediate layer can be determined by observing the peak areas of C1s, O1s, and Si2p under the above apparatus and measurement conditions, and calculating the atomic ratio of carbon, oxygen, and silicon.

Also, depth profile analysis may be performed as well. Usable measurement conditions for XPS analysis may be an X-ray source of 25 W monochromatic AlKα radiation, a photoelectron detection surface of 1,400 µm × 300 µm, a photoelectron detection angle in a range of 20° to 90° (for example, 20°, 45°, 90°), a pass energy of 23.5 eV, and Ar ions, gas cluster ions, C60 ions, or the like as sputtering ions. Etching may be performed to 1 to 100 nm by sputtering, and the composition in the coating film at each etching depth may be obtained as well.

By adjusting the photoelectron detection angle of the XPS analysis, the detection depth can be suitably adjusted. For example, a shallow angle close to 20 degrees allows a detection depth of about 3 nm, while a deep angle close to 90 degrees allows a detection depth of about 10 nm.

The silicon oxide-containing intermediate layer described above can be formed by applying a silicon oxide precursor to the substrate surface. When the intermediate layer comprises an alkali metal, the intermediate layer can be formed by applying a composition comprising a silicon oxide precursor and an alkali metal source to the substrate surface.

Examples of the silicon oxide precursor include silicic acid, a partial condensate of silicic acid, an alkali metal silicate, a silane compound having a hydrolyzable group that is bonded to a silicon atom, and a partially hydrolyzed condensate of such a silane compound. Silicic acid and a partial condensate thereof can be converted to silicon oxide by dehydrative condensation, and an alkali metal silicate can be converted to silicon oxide by being converted first to silicic acid or a partial condensate thereof with an acid or a cation exchange resin and then dehydratively condensing the resulting silicic acid or partial condensate thereof. Examples of the hydrolyzable group in the silane compound having a hydrolyzable group that is bonded to a silicon atom include an alkoxy group and a chlorine atom. The hydrolyzable group of the silane compound can be hydrolyzed to give a hydroxyl group, and the resulting silanol compound can be dehydratively condensed to give silicon oxide. Examples of the silane compound having a hydrolyzable group that is bonded to a silicon atom include alkoxysilanes such as tetraalkoxysilane and alkyltrialkoxysilane, and tetrachlorosilane.

The alkali metal source includes alkali metal hydroxides, water-soluble alkali metal salts, and the like. Examples of the water-soluble alkali metal salts include alkali metal carbonates, alkali metal hydrogen carbonates, alkali metal hydrochlorides, and alkali metal nitrates. The alkali metal source is preferably an alkali metal hydroxide or an alkali metal carbonate, more preferably an alkali metal hydroxide, and even more preferably Na.

Note that the alkali metal silicate can be used as a silicon oxide precursor and an alkali metal source. The alkali metal silicate can be converted to silicon oxide via silicic acid, and in this process, a small amount of alkali metal may remain in the produced silicon oxide. Accordingly, regulating the amount of the remaining alkali metal enables silicon oxide comprising a predetermined amount of alkali metal atoms to be obtained.

The thickness of the intermediate layer is not limited, and is in the range of, for example, 1 to 50 nm, preferably 1 to 30 nm, more preferably 2 to 15 nm, and even more preferably 3 to 10 nm.

So far, the compound, the composition, and the article of the present disclosure have been described in detail. The compound, the composition, the article, and the like of the present disclosure are not limited to those exemplified above.

### Examples

Hereinafter, the present invention will now be described by way of the following Examples, but the present invention is not limited to these Examples.

### (Synthetic Example 1)

After addition of 5.00 g of 22-tricosenoic acid, 43 mL of toluene, and 28 mL of methanol, 31 mL of trimethylsilyldiazomethane (10% hexane solution) was added dropwise, and the resultant mixture was stirred at room temperature for 3 hours. Thereafter, the mixture was concentrated under reduced pressure to give 5.04 g of a compound (1).
¹H NMR (CDCl3, 400 MHz) δ [ppm]: 1.249-1.649 (m), 2.005-2.061 (m), 2.279-2.316 (t), 1.567-1.622 (m), 3.662 (s), 4.904-5.015 (m), 5.760-5.862 (m)

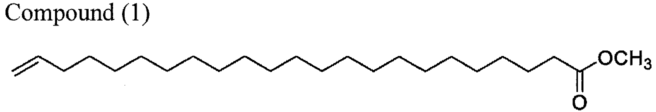

### (Synthetic Example 2)

After addition of 1.25 g of the compound (1), 20.0 mL of toluene, 0.1 mL of pyridine, and 0.65 mL of a xylene solution comprising a 2% Pt complex of 1,3-divinyl-1,1,3,3-tetramethyldisiloxane, 1.01 g of tris(trimethylsilyloxy)silane was added dropwise. After stirring the resultant at room temperature for 16 hours, the mixture was purified to give 1.36 g of a compound (2).
¹H NMR (CDCl₃, 400 MHz) δ [ppm]: 0.013-0.142 (m), 0.408 (t), 1.137-1.378 (m), 1.591 (quin), 2.275 (t), 3.639 (s)

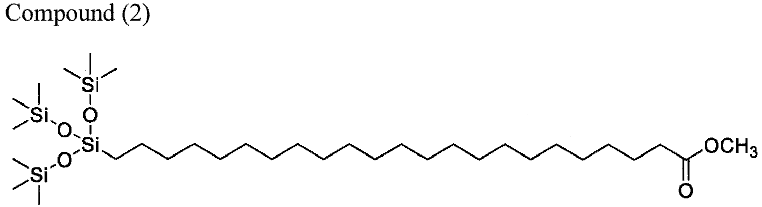

### (Synthetic Example 3)

After addition of 0.64 g of the compound (2), 2.8 mL of allylamine, and 0.12 g of 1,5,7-triazabicyclo[4.4.0]dec-5-ene, the resultant mixture was stirred at 75°C for 3 hours. Thereafter, the mixture was washed with an aqueous hydrochloric acid solution, dehydrated over magnesium sulfate, and concentrated under reduced pressure to give 0.68 g of a compound (3).
¹H NMR (CDCl₃, 400 MHz) δ [ppm]: 0.011-0.217 (m), 0.407 (t), 1.153-1.378 (m), 1.612 (quin),2.163 (t), 3.865(tt), 5.090-5.182(m), 5.409 (br), 5.770-5.866 (m)

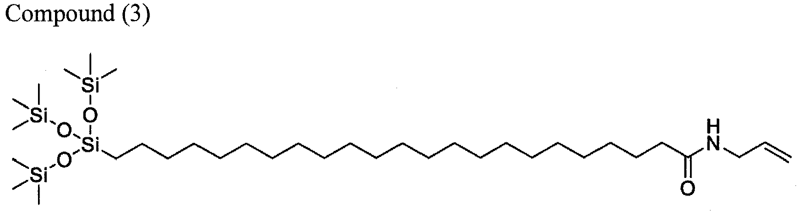

### (Synthetic Example 4)

After addition of 0.56 g of the compound (3), 10.0 mL of toluene, 0.22 mL of aniline, and 0.46 mL of a xylene solution comprising a 2% Pt complex of 1,3-divinyl-1,1,3,3-tetramethyldisiloxane, 0.2 mL of trimethoxysilane was added, and the resultant mixture was stirred at 45°C for 2 hours. Thereafter, the mixture was purified to give 0.57 g of a compound (4).
¹H NMR (CDCl₃, 400 MHz) δ [ppm]: 0.010-0.141 (m), 0.408 (t), 0.629 (t), 1.150-1.376 (m), 1.519-1.652(m), 2.121 (t), 3.172 (q), 3.516-3.589 (m), 5.607 (br)

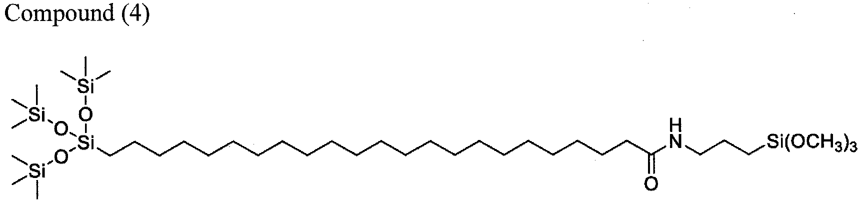

### (Synthetic Example 5)

After addition of 4.50 g of the compound (1), 61.4 mL of toluene, 0.4 mL of pyridine and 1.4 mL of a xylene solution comprising a 2% Pt complex of 1,3-divinyl-1,1,3,3-tetramethyldisiloxane, 10.0 mL of 1,1,1,3,5,5,5-heptamethyltrisiloxane was added dropwise. The resultant mixture was then stirred at room temperature for 16 hours, and then purified to give 7.01 g of a compound (5).
1H NMR (CDCl3, 400 MHz) δ [ppm]: 0.033-0.241 (m), 0.438-0.550 (m), 1.191-1.413 (m), 1.607-1.642 (m), 2.242-2.325 (m), 3.669 (s)

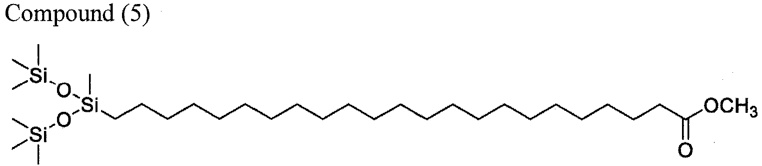

### (Synthetic Example 6)

After addition of 6.00 g of the compound (5), 38.3 mL of allylamine, 1.42 g of 1,5,7-triazabicyclo[4.4.0]dec-5-ene, the resultant mixture was stirred at 75°C for 3 hours. Thereafter, the mixture was washed with an aqueous hydrochloric acid solution, dehydrated over magnesium sulfate, and concentrated under reduced pressure to give 4.88 g of a compound (6).
1H NMR (CDCl3, 400 MHz) δ [ppm]: 0.076-0.128 (m), 0.413-0.465 (t), 1.183-1.1.404 (m), 1.604-1.677 (m), 2.173-2.248 (t), 3.841-3.942(m), 5.122-5.210(m), 5.809-5.877 (m)

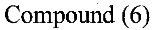

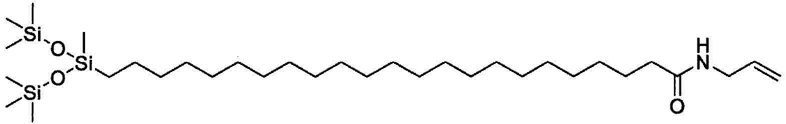

### (Synthetic Example 7)

After addition of 4.00 g of the compound (6) obtained in Synthetic Example 6, 11.6 mL of toluene, 0.2 mL of aniline, and 0.41 mL of a xylene solution comprising a 2% Pt complex of 1,3-divinyl-1,1,3,3-tetramethyldisiloxane, 1.85 mL of trimethoxysilane was added, and the resultant mixture was stirred at 45°C for 2 hours. Thereafter, the mixture was purified to give 4.80 g of a compound (7).
1H NMR (CDCl3, 400 MHz) δ [ppm]: 0.054-0.149 (m), 0.425-0.464 (t), 0.628-0.681 (m), 1.181-1.402 (m), 1.544-1.768(m), 2.125-2.164 (t), 3.558-3.646 (m)

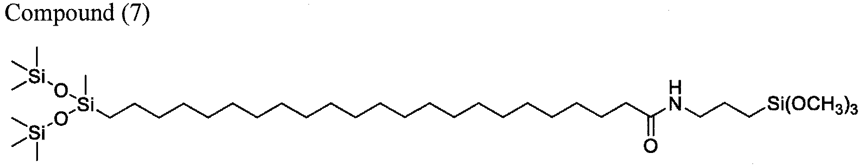

### (Synthetic Example 8)

The following compound (8) having a terminal trimethoxysilyl group was obtained in the same manner as in Synthetic Examples 3 to 4 except that the raw material was changed to use methyl tricos-21-enoate.
1H NMR (CDCl3, 400 MHz) δ [ppm]:0.652 (t), 0.882 (t), 1.107-1.1.404 (m), 1.529-1.679 (m), 2.148 (t), 3.237 (q), 3.538-3.617(m), 5.331-5.416 (m), 5.630 (br)

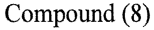

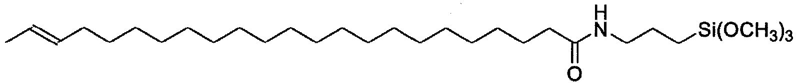

### (Synthetic Example 9)

After addition of 2.11 g of 22-tricosenoic acid: CH₂=CH(CH₂)₂₀COOH, 95 ml of toluene, and 1.26 g of 1,1'-carbonyldiimidazole, the resultant mixture was stirred at room temperature for 1 hour. Thereafter, the mixture was purified to give a compound (9): CH₂=CH(CH₂)₂₀CO(C₃H₄N₂), 1-(1H-imidazol-1-yl)tricos-22-en-1-one (2.22 g).
¹H-NMR (CDCl₃, 400 MHz) δ [ppm]: 1.250 (s), 1.333-1.426 (m), 1.761-1.836 (m), 2.007-2.061 (dd), 2.837-2.875 (t), 4.909-5.016 (m), 5.761-5.863 (m), 7.104 (s), 7.481 (s), 8.174 (s)

### Compound (9): 1-(1H-imidazol-1-yl)tricos-22-en-1-one

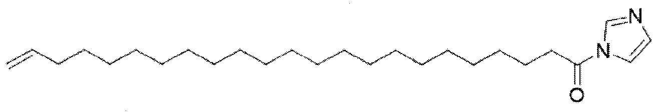

### (Synthetic Example 10)

After adding and stirring 2.20 g of the compound (9) and 26 ml of toluene, 1.01 ml of 3-aminopropyltrimethoxysilane was added dropwise to the resultant mixture, and the mixture was stirred at room temperature for 16 hours. Thereafter, the mixture was purified to give 2.70 g of the following compound (10).
¹H-NMR (CDCl₃, 400 MHz) δ [ppm]: 0.648 (t), 1.249 (s), 1.337-1.1.388 (m), 1.582-1.640 (m), 2.000-2.064 (m), 2.146 (t), 3.213-3.264 (m), 3.524-3.600 (m), 4.909-5.018 (m), 5.762-5.864 (m)

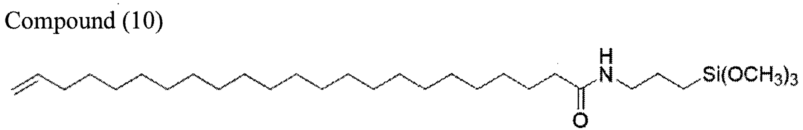

### (Synthetic Example 11)

The following compound (11) having a terminal trimethoxysilyl group was obtained in the same manner as in Synthetic Examples 10 to 11 except that the raw material was changed to use 16-heptadecenoic acid.
¹H-NMR (CDCl₃, 400 MHz) δ [ppm]: 0.647 (t), 1.250 (s), 1.333-1.1.376 (m), 1.582-1.642 (m), 2.013-2.069 (m), 2.146 (t), 3.202-3.301 (m), 3.512-3.699 (m), 4.900-5.016 (m), 5.760-5.864 (m)

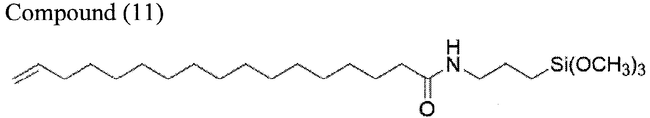

### (Synthetic Example 12)

After adding and stirring 2.00 g of a compound (12-1): [(CH₃)₃SiO]₂CH₃SiO(Si(CH₃)₂O)ₙSi(CH₃)₂CH₂CH₂CH₂CH₂CH₂CH₂CH₂CH₂CH₂C H₂CH₂CH₂CH₂CH₂CH₂CH₂CH₂CH₂CH₂CH₂CH₂CH₂CONHCH₂CH(CH₂CH=CH₂)₂ (wherein n ≈ 26), 10 ml of toluene, 0.05 ml of a xylene solution comprising a 2% Pt complex of 1,3-divinyl-1,1,3,3-tetramethyldisiloxane, and 0.01 ml of aniline, 0.24 ml of trimethoxysilane was added dropwise to the resultant mixture, and the mixture was then heated to 45°C and stirred for 2 hours. Thereafter, volatile components were distilled off, and the resultant was purified to give 2.0 g of a compound (12): [(CH₃)₃SiO]₂CH₃SiO(Si(CH₃)₂O)ₙSi(CH₃)₂CH₂CH₂CH₂CH₂CH₂CH₂CH₂CH₂CH₂C H₂CH₂CH₂CH₂CH₂CH₂CH₂CH₂CH₂CH₂CH₂CH₂CH₂CONHCH₂CH[CH₂CH₂CH₂Si (OCH₃)₃]₂ (wherein n ≈ 26).
¹H-NMR (CDCl₃, 400 MHz) δ [ppm]: -0.089-0.207 (m), 0.492-0.531 (m), 0.595-0.635 (t), 1.200-1.308 (m), 1.378-1.681 (m), 2.123-2.160 (t), 3.157-3.187 (t), 3.517-3.592 (m), 3.494-3.602 (m), 5.465-5.492 (m)

### (Synthetic Example 13)

After adding and stirring 4.03 g of perfluorophenyl 22-tricosenoate, and 5.0 ml of THF, 1.30 ml of dimethylchlorosilane, and 0.080 ml of a xylene solution comprising a 2% Pt complex of 1,3-divinyl-1,1,3,3-tetramethyldisiloxane were added to the resultant mixture, and the mixture was stirred at room temperature for 16 hours. Thereafter, volatile components were distilled off, and the resultant was purified to give 4.6 g of a compound (13-1): chlorodimethylsilyl tricosenoic acid ester.

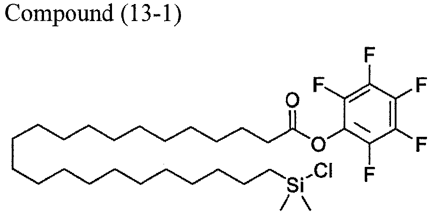

To a separate reactor, 1.33 g of hexamethyldisiloxane and 10 ml of THF were added and stirred, and to the resultant mixture, 2.57 ml of a solution of 15% n-butyllithium in hexane was added under a water bath at 30°C. After cooling the mixture in an ice bath, 17.79 g of hexamethylcyclotrisiloxane and 20 ml of THF were added to the solution, followed by stirring further for 8 hours. While cooling the mixture in an ice bath, a solution of 2.3 g of the previously synthesized compound (13-1), chlorodimethylsilyltricosenoic acid ester, in 10 ml of THF was added, and the resultant mixture was stirred for 1 hour. To the resultant, 1.50 g of 2-allylpent-4-en-1-amine was added, and the resultant was kept immersed in the ice bath and stirred for 16 hours. A part of the reaction solution was then purified to give 2.8 g of a compound (13-2): CH₃[Si(CH₃)₂O]ₙSi(CH₃)₂(CH₂)₂₂CONH-CH₂CH[CH₂CH=CH₂]₂. Note that the average of n was 57.
¹H NMR (CDCl₃, 400 MHz) δ [ppm]: -0.089 - 0.211 (m), 0.494 - 0.533 (t), 1.242 - 1.335 (m), 1.586 - 1.623 (m), 1.692 - 1.758 (m), 2.000 - 2.160 (m), 3.193 - 3.224 (t), 5.023 - 5.077 (m), 5.455 (br), 5.728 - 5.832 (m)

### (Synthetic Example 14)

After addition of 2.74 g of the compound (13-2), 5.5 mL of toluene, 14 µL of pyridine, and 70 µL of a xylene solution comprising a 2% Pt complex of 1,3-divinyl-1,1,3,3-tetramethyldisiloxane, 0.29 mL of trimethoxysilane was further added, and the resultant mixture was stirred at room temperature for 16 hours. Thereafter, the resultant was purified to give 2.63 g of a compound (14): CH₃[Si(CH₃)₂O]ₙSi(CH₃)₂(CH₂)₂₂CONH-CH₂CH[CH₂CH₂CH₂Si(OCH₃)₃]₂. Note that the average of repeating units of dimethylsiloxane was 57.
¹H NMR (CDCl₃, 400 MHz) δ [ppm]: -0.104-0.196 (m), 0.498(t), 0.604 (t), 1.226-1.339 (m), 1.404(quin), 1.568-1.664 (m), 2.130 (t), 3.160(t), 3.496-3.584 (m), 5.471 (br)

### (Synthetic Example 15)

After addition of 2.01 g of an amide compound: CH₃CH=CH(CH₂)₁₉CONHCH₂CH(CH₂CH=CH₂)₂, 11.3 g of toluene, and 0.39 ml of a xylene solution comprising a 2% Pt complex of 1,3-divinyl-1,1,3,3-tetramethyldisiloxane, 1.66 mL of trimethoxysilane was further added, and the resultant mixture was heated to 60°C and stirred for 3 hours. Thereafter, the resultant was purified to give 2.98 g of a compound (15): CH₃CH=CH(CH₂)₁₉CONHCH₂CH((CH₂)₃Si(OCH₃)₃)₂.
¹H NMR (CDCl₃, 400 MHz) δ [ppm]: 0.558-0.610 (t), 1.247 (br s), 1.601-1.661 (m), 2.256-2.293 (t), 3.181-3.221 (t), 3.262-3.300 (t), 3.555 (s), 3.574 (s), 5.401-5.420 (m)

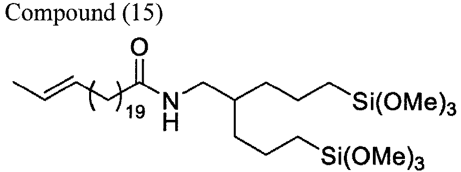

### (Synthetic Example 16)

After addition of 2.11 g of 22-tricosenoic acid, 95 ml of toluene, and 1.26 g of 1,1'-carbonyldiimidazole, the resultant mixture was stirred at room temperature for 1 hour. Thereafter, the mixture was purified to give 2.22 g of a compound (16): CH₂=CH(CH₂)₂₀CO(C₃H₄N₂).
¹H NMR (CDCl₃, 400 MHz) δ [ppm]: 1.250 (s), 1.333-1.426 (m), 1.761-1.836 (m), 2.007-2.061 (dd), 2.837-2.875 (t), 4.909-5.016 (m), 5.761-5.863 (m), 7.104 (s), 7.481 (s), 8.174 (s)

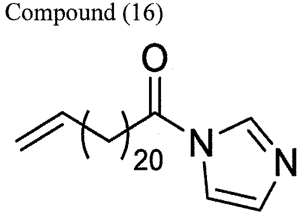

### (Synthetic Example 17)

After addition of 1.38 g of the compound (16): CH₂=CH(CH₂)₂₀CO(C₃H₄N₂), 24.9 g of toluene, and 6.12 g of CH₃[Si(CH₃)₂O]ₙSi(CH₃)₂H, 0.56 ml of a xylene solution comprising a 2% Pt complex of 1,3-divinyl-1,1,3,3-tetramethyldisiloxane was further added, and the resultant mixture was heated to 60°C and stirred for 12 hours. Thereafter, the resultant was purified to give 6.86 g of a compound (17): CH₃[Si(CH₃)₂O]ₙSi(CH₃)₂(CH₂)₂₂CO(C₃H₄N₂). Note that the average of n was 26.
¹H NMR (CDCl₃, 400 MHz) δ [ppm]: -0.076-0.223 (m), 0.505-0.543 (t), 1.253 (br s), 1.767-1.841 (m), 2.857-2.894 (t), 7.124 (s), 7.497 (s), 8.273 (s)

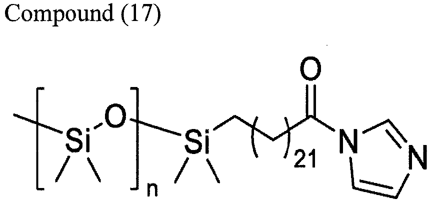

### (Synthetic Example 18)

After addition of 6.86 g of the compound (17): CH₃[Si(CH₃)₂O]ₙSi(CH₃)₂(CH₂)₂₂CO(C₃H₄N₂), 6.86 g of heptane, and 1.48 g of bis[3-(trimethoxysilyl)propyl]amine, the resultant mixture was stirred at 60°C for 3 hours. Thereafter, the resultant was purified to give 6.71 g of a compound (18): CH₃[Si(CH₃)₂O]ₙSi(CH₃)₂(CH₂)₂₂CON[CH₂CH₂CH₂Si(OCH₃)₃]₂. Note that the average of n was 26.
¹H NMR (CDCl₃, 400 MHz) δ [ppm]: -0.109-0.216 (m), 0.499-0.537 (t), 0.559-0.612 (m), 1.245 (br s), 1.570-1.630 (m), 2.256-2.295 (t), 3.182-3.221 (t), 3.264-3.301 (t),3.556 (br s),3.575 (br s)

### (Synthetic Example 19)

A compound (19): CH₃(Si(CH₃)₂O)ₙSi(CH₃)₂(CH₂)₂₂CON[CH₂CH₂CH₂)₃Si(OCH₃)₃]₂ was obtained in the same manner as in Synthetic Examples 17 to 18 except that the raw material was changed to use CH₃(Si(CH₃)₂O)ₙSi(CH₃)₂H. Note that the average of n was 34.
¹H NMR (CDCl3, 400 MHz) δ [ppm]: -0.109-0.216 (m), 0.499-0.537 (t), 0.559-0.612 (m), 1.245 (br s), 1.570-1.630 (m), 2.256-2.295 (t), 3.182-3.221 (t), 3.264-3.301 (t),3.556 (br s),3.575 (br s)

### (Synthetic Example 20)

A compound (20): CH₃(Si(CH₃)₂O)₄₈Si(CH₃)₂(CH₂)₃₄CON((CH₂)₃Si(OCH₃)₃)₂ was obtained in the same manner as in Synthetic Examples 17 to 18 except that the raw material was changed to use CH₃(Si(CH₃)₂O)₄₈Si(CH₃)₂H. Note that the average of n was 48.

### (Synthetic Example 21)

After addition of 2.22 g of the amide compound (16): CH₂=CH(CH₂)₂₀CO(C₃H₄N₂), 2.22 g of toluene, and 2.82 g of bis[3-(trimethoxysilyl)propyl]amine, the resultant mixture was stirred at 60°C for 3 hours. Thereafter, the resultant was purified to give 3.49 g of the following compound (21): CH₂=CH(CH₂)₂₀CON((CH₂)₃Si(OCH₃)₃)₂.
¹H NMR (CDCl₃, 400 MHz) δ [ppm]: 0.559-0.612 (m), 1.248 (br s), 1.570-1.630 (m), 2.005-2.059 (m), 2.256-2.295 (t), 3.182-3.221 (t), 3.264-3.301 (t),3.556 (br s),3.575 (br s), 4.905-5.014 (m), 5.759-5.861 (m)

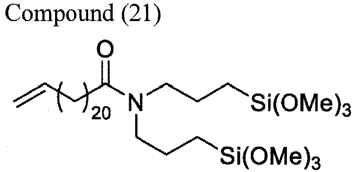

### (Synthetic Example 22)

After addition of 2.30 g of an amide compound: CH₃CH=CH(CH₂)₁₉CO(C₃H₄N₂), 2.30 g of toluene, and 2.93 g of bis[3-(trimethoxysilyl)propyl]amine, the resultant mixture was stirred at 60°C for 3 hours. Thereafter, the resultant was purified to give 3.66 g of a compound (22): CH₃CH=CH(CH₂)₁₉CON((CH₂)₃Si(OCH₃)₃)₂.
¹H NMR (CDCl₃, 400 MHz) δ [ppm]: 0.559-0.612 (m), 1.245 (br s), 1.570-1.630 (m), 2.256-2.295 (t), 3.182-3.221 (t), 3.264-3.301 (t),3.556 (br s),3.575 (br s), 5.397-5.422 (m)

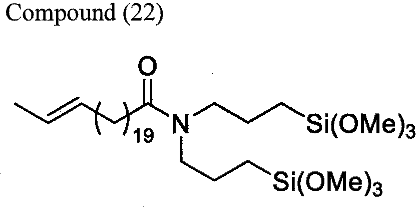

### (Synthetic Example 23)

After mixing (CH₃)₃Si-(OSi(CH₃)₂)ₙ-(CH₂)₁₀-COOH (10 g), diallylamine (2.01 g), 1-(3-dimethylaminopropyl)-3-ethylcarbodiimide hydrochloride (1.98 g), 4-dimethylaminopyridine (84 mg), and dichloromethane (30 mL), the resultant mixture was stirred at room temperature for 16 hours. The mixture was diluted with dichloromethane, washed with hydrochloric acid and water, and then concentrated under reduced pressure to give a compound (23): (CH₃)₃Si-(OSi(CH₃)₂)ₙ-(CH₂)₁₀-CON(CH₂CH=CH₂)₂ (9.00 g). Note that the average of the number n of repeating units was 19.
¹H NMR (CDCl₃, 400 MHz) δ [ppm]: -0.25-0.30 (m), 1.45-1.59 (m, 2H), 1.20-1.40 (m, 14H), 1.55-1.68 (m, 2H), 2.30 (t, 2H, 7.2Hz), 3.86 (d, 2H, 5.2Hz), 3.98 (d, 2H, 6.0Hz), 5.05-5.23 (m, 4H), 5.68-5.84 (m, 2H).

### (Synthetic Example 24)

After mixing the compound (23): (CH₃)₃Si-(OSi(CH₃)₂)ₙ-(CH₂)₁₀-CON(CH₂CH=CH₂)₂ (2 g), toluene (10 mL), a xylene solution of Karstedt's catalyst (2%, 0.20 mL), aniline (32 mg), and trimethoxysilane (1.00 mL), the resultant mixture was stirred at room temperature for 16 hours, and then concentrated under reduced pressure to give a compound (24): (CH₃)₃Si-(OSi(CH₃)₂)ₙ-(CH₂)₁₀-CON{CH₂CH₂CH₂Si(OCH₃)₃}₂ (2.23 g). Note that the average of the number n of repeating units was 19.
¹H NMR (CDCl₃, 400 MHz) δ [ppm]: -0.20-0.31 (m), 0.42-0.65 (m, 6H), 1.10-1.40 (m, 14H), 1.63-1.71 (m, 6H), 2.26 (t, 2H, 7.2 Hz), 3.19 (t, 2H, 7.6 Hz), 3.27 (t, 2H, 7.6 Hz), 3.45-3.65 (m, 18H).

### (Synthetic Example 25)

After mixing (CH₃)₃Si-(OSi(CH₃)₂)ₙ-(CH₂)₁₀-COOH (10 g), 2,2-diallyl-4-pentene-1-amine (1.71 g), 1-(3-dimethylaminopropyl)-3-ethylcarbodiimide hydrochloride (1.98 g), triethylamine (1.44 mL), 4-dimethylaminnopyridine (84 mg), and dichloromethane (30 mL), the resultant mixture was stirred at room temperature for 16 hours. The mixture was diluted with dichloromethane, washed with hydrochloric acid and water, and then concentrated under reduced pressure to give a compound (25): (CH₃)₃Si-(OSi(CH₃)₂)ₙ-(CH₂)₁₀-CONH-CH₂C(CH₂CH=CH₂)₃ (8.88 g). Note that the average of the number n of repeating units was 19.
¹H NMR (CDCl₃, 400 MHz) δ [ppm]: -0.20-0.25 (m), 1.45-1.59 (m, 2H), 1.20-1.48 (m, 14H), 1.53-1.65 (m, 2H), 2.03 (d, 2H, 7.6Hz), 2.16 (t, 2H, 7.6Hz), 3.20 (d, 2H, 6.4Hz), 5.05-5.14 (m, 6H), 5.51-5.60 (m, 1H), 5.80-5.93 (m, 3H).
¹³C NMR (CDCl₃, 133 MHz) δ [ppm]: 0.2, 1.0, 1.8, 18.3, 23.2, 29.3, 29.4, 29.6, 30.3, 33.5, 37.1, 40.0, 40.1, 45.0, 118.1, 134.2, 172.9.

### (Synthetic Example 26)

The compound (25): (CH₃)₃Si-(OSi(CH₃)₂)ₙ-(CH₂)₁₀-CONH-CH₂C(CH₂CH=CH₂)₃ (2 g), toluene (10 mL), a xylene solution of Karstedt's catalyst (2%, 0.29 mL), aniline (46 mg), and trimethoxysilane (1.43 mL) were mixed. The resultant mixture was stirred at room temperature for 16 hours, and then concentrated under reduced pressure to give a compound (26): (CH₃)₃Si-(OSi(CH₃)₂)ₙ-(CH₂)₁₀-CONH-CH₂C{CH₂CH₂CH₂Si(OCH₃)₃}₃ (2.21 g). Note that the average of the number n of repeating units was 19.
¹H NMR (CDCl₃, 400 MHz) δ [ppm]: -0.2-0.21 (m), 0.41-0.65 (m, 8H), 1.10-1.50 (m, 26H), 1.55-1.65 (m, 2H), 2.14 (t, 2H, 7.2 Hz), 3.09 (d, 2H, 6.0 Hz), 3.45-3.62 (m, 27H), 5.67-5.75 (m, 1H)

### (Synthetic Example 27)

After addition of 2.60 g of a siloxane compound: ((CH₃)₃SiO)₂SiCH₃(CH₂)₂₂CO(C₃H₄N₂)), 7.80 g of toluene, and 0.36 g of prop-1-en-1-amine, the resultant mixture was stirred at room temperature for 3 hours. Thereafter, the mixture was purified to give 2.45 g of the following siloxane compound (27): ((CH₃)₃SiO)₂SiCH₃(CH₂)₂₂CONHCH=CHCH₃.
¹H NMR (CDCl₃, 400 MHz) δ [ppm]: -0.014 (s), 0.078 (s), 0.420-0.458 (t), 1.247 (br s), 1.578-1.654 (m), 2.166-2.204 (t), 5.397-5.422 (m)

### Siloxane compound (27)

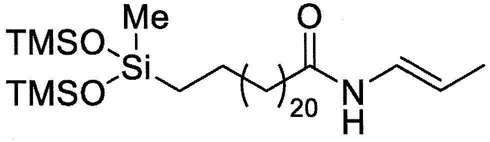

### <Preparation of surface-treating agent>

Surface-treating agents were prepared by combining compounds of components (A), components (B), and a solvent as shown in Table 1. Heptane was used as the solvent, and a total concentration of the components (A) and (B) relative to the solvent was set to 20% by weight.

For sufficiently mixing the components (A) and (B), these components were stirred at room temperature for 30 minutes, and allowed to stand still for 12 hours.

**[Table 1]**

| **Surface-treating agent No.** | **Component A** | | **Component B** | |
|---|---|---|---|---|
| | **Compound No.** | **% by mass** | **Compound No.** | **% by mass** |
| **1** | **Compound 4** | **100** | **-** | **0** |
| **2** | **Compound 4** | **90** | **Compound 8** | **10** |
| **3** | **Compound 4** | **80** | **Compound 8** | **20** |
| **4** | **Compound 4** | **98** | **Compound 8** | **2** |
| **5** | **Compound 4** | **94** | **Compound 8** | **6** |
| **6** | **Compound 4** | **50** | **Compound 8** | **50** |
| **7** | **Compound 7** | **100** | **-** | **0** |
| **8** | **Compound 7** | **90** | **Compound 8** | **10** |
| **9** | **Compound 7** | **80** | **Compound 8** | **20** |
| **10** | **Compound 7** | **98** | **Compound 8** | **2** |
| **11** | **Compound 7** | **94** | **Compound 8** | **6** |
| **12** | **Compound 7** | **50** | **Compound 8** | **50** |
| **13** | **Compound 4** | **90** | **Compound 10** | **10** |
| **14** | **Compound 4** | **80** | **Compound 10** | **20** |
| **15** | **Compound 4** | **98** | **Compound 10** | **2** |
| **16** | **Compound 4** | **50** | **Compound 10** | **50** |
| **17** | **Compound 7** | **90** | **Compound 10** | **10** |
| **18** | **Compound 7** | **80** | **Compound 10** | **20** |
| **19** | **Compound 7** | **98** | **Compound 10** | **2** |
| **20** | **Compound 7** | **50** | **Compound 10** | **50** |
| **21** | **Compound 4** | **90** | **Compound 11** | **10** |
| **22** | **Compound 4** | **80** | **Compound 11** | **20** |
| **23** | **Compound 4** | **98** | **Compound 11** | **2** |
| **24** | **Compound 4** | **50** | **Compound 11** | **50** |
| **25** | **Compound 7** | **90** | **Compound 11** | **10** |
| **26** | **Compound 7** | **80** | **Compound 11** | **20** |
| **27** | **Compound 7** | **98** | **Compound 11** | **2** |
| **28** | **Compound 7** | **50** | **Compound 11** | **50** |
| **29** | **Compound 7** | **90** | **Compound 6** | **10** |
| **30** | **Compound 7** | **90** | **Compound 27** | **10** |
| **31** | **Compound 4** | **90** | **Compound 3** | **10** |
| **32** | **Compound 12** | **90** | **Compound 15** | **10** |
| **33** | **Compound 12** | **90** | **Compound 12-1** | **10** |
| **34** | **Compound 12** | **90** | **Compound 15** | **10** |
| **35** | **Compound 12** | **90** | **Compound 13-2** | **10** |
| **36** | **Compound 19** | **90** | **Compound 21** | **10** |
| **37** | **Compound 19** | **90** | **Compound 22** | **10** |
| **38** | **Compound 20** | **90** | **Compound 21** | **10** |
| **39** | **Compound 24** | **90** | **Compound 23** | **10** |
| **40** | **Compound 26** | **90** | **Compound 25** | **10** |

### <Na-containing intermediate layer forming material>

First, 2.2 g of sodium hydroxide (manufactured by Fujifilm Wako Pure Chemical Corporation) was dissolved in 24 g of distilled water to give a 8.4% by mass aqueous sodium hydroxide solution. Then, 24 g of this 8.4% by mass aqueous sodium hydroxide solution and 20 g of MS gel (M.S. GEL D-100-60A (manufactured by AGC Si-Tech Co., Ltd.)) were mixed so that the aqueous sodium hydroxide solution was absorbed into the MS gel. The MS gel that had absorbed the aqueous sodium hydroxide solution was dried at 25°C for 8 hours, then molded with a tableting machine (4 MPa for 1 minute), and fired at 1,000°C for 1 hour to give a formed article 1 (pellets).

### <Formation of surface-treating layer>

### (Na-containing intermediate layer)

The surface-treating agents 1 to 13 prepared above were vacuum-deposited onto chemically tempered glass (Gorilla Glass, manufactured by Corning Incorporated, thickness 0.7 mm). Specifically, a molybdenum boat in a vacuum deposition system was filled with 0.1 g of a surface-treating agent, and the vacuum deposition system was evacuated to a pressure of 3.0 × 10⁻³ Pa or lower. Thereafter, vapor deposition by the electron beam deposition scheme was performed using the formed article 1 to form a Na-containing silicon dioxide film having a thickness of 5 nm, followed by heating the boat by the resistance heating scheme to form a surface-treating layer. Thereafter, heat treatment was performed in an oven at 150°C for 2 hours to give a surface-treating layer.

### (SiO₂ intermediate layer)

The surface-treating agents 1, 4, 13 prepared above were vacuum-deposited onto chemically tempered glass (Gorilla Glass, manufactured by Corning Incorporated, thickness 0.7 mm). Specifically, a molybdenum boat in a vacuum deposition system was filled with 0.1 g of a surface-treating agent, and the vacuum deposition system was evacuated to a pressure of 3.0 × 10-3 Pa or lower. Thereafter, a silicon dioxide film having a thickness of 5 nm was formed, followed by heating the boat by the resistance heating scheme to form a surface-treating layer. Thereafter, heat treatment was performed in an oven at 150°C for 2 hours to give a surface-treating layer.

### <Evaluation>

### [Abrasion resistance evaluation]

### (Abrasion Method)

A friction block as described below was brought into contact with the formed surface-treating layer, a 5 N load was applied thereto, and the friction block was moved back and forth at a speed of 40 mm/sec, with the load being applied. The static water contact angle (°) after 100 times of abrasion was measured.

### - Friction block

The surfaces of an article obtained by processing silicone rubber as described below were covered with cotton soaked with artificial sweat having the following composition, and the article was used as a friction block.
Composition of artificial sweat:
   Anhydrous disodium hydrogen phosphate: 2 g
   Sodium chloride: 20 g
   85% Lactic acid: 2 g
   Histidine hydrochloride: 5 g
   Distilled water: 1 kg
Article obtained by processing silicone rubber:
   Obtained by processing Silicone Rubber Stopper SR-51 manufactured by Tigers Polymer Corporation into a cylinder having a diameter of 1 cm and a thickness of 1 cm.

### (Measurement of contact angle)

For contact angle measurement, a fully automatic contact angle meter DropMaster 700 (manufactured by Kyowa Interface Science Co., Ltd.) was used under an environment of 25°C. Specifically, a substrate having the measurement target, i.e., the surface-treating layer, was placed horizontally, 2 µL of water was dripped from a microsyringe onto the surface, and a static image was taken with a video microscope one second after the drip to measure the static contact angle. The static contact angle was measured at five different points on the surface-treating layer of the substrate, and the average value calculated therefrom was used.

Evaluation criteria for the water contact angle measurement were as follows:
(Water contact angle after 100 times of abrasion)
90° or more: excellent (double circle)
75° or more and less than 90°: good (circle)
60° or more and less than 75°: fair (triangle)
less than 60°: poor (cross mark)

### [Evaluation of fingerprint removability by wiping]

The surface-treating layers formed as described above were evaluated for the fingerprint removability by wiping as follows.

### (Adhesion of artificial fingerprint stamp)

After forming the surface-treating layer, the excess material on the surface was wiped off with ethanol. An artificial fingerprint solution was then stamped onto the surface of the surface-treating layer.

The composition and stamping conditions of the artificial fingerprint solution were as follows.

### (Method for preparing artificial fingerprint solution)

The artificial fingerprint solution was prepared as follows, with reference to JP 2006-120317 A.

1.6 g of Kanto loam (JIS test powder 1 (Class 11), The Association of Powder Process Industry and Engineering, Japan) and 32 g of methoxypropanol (manufactured by Tokyo Chemical Industry Co., Ltd.) were mixed together. Then, 4 g of triolein (manufactured by Tokyo Chemical Industry Co., Ltd.) was added, followed by stirring.

### (Method for producing artificial fingerprint sheet)

A glass plate (Gorilla Glass, manufactured by Corning Incorporated, thickness: 0.7 mm) was UV-cleaned for 10 minutes. 1.1 mL of the artificial fingerprint solution prepared above was spin-coated onto the glass plate (5,000 rpm, 10 seconds). The resultant glass was then heated in a drying oven at 60°C for 3 minutes.

### (Stamping conditions)

### Stamp: silicone rubber (stamping surface: Φ16 mm)

The stamp was pressed onto the artificial fingerprint sheet prepared above under a load of 5 kgw for 10 seconds to transfer the artificial fingerprint. The stamp carrying the transferred artificial fingerprint was pressed onto a sample to be evaluated for removability under a load of 5 kgw for 10 seconds to adhere the artificial fingerprint thereto.

### (Method for wiping artificial fingerprint)

The surface-treating layer onto which the artificial fingerprint had been stamped was subjected to a wiping operation 10 times under the conditions shown below, using a rubbing tester (manufactured by Imoto machinery Co., LTD).

### · Wiping method:

Friction block: Bemcot M-3II (product name, manufactured by Asahi Kasei Corp.)
Stroke length (one-way): 60 mm
Wiping speed: 8,400 mm/min
Load: 1,000 g/3 cm²

After performing the wiping operation, the degree of artificial fingerprint adhesion on the stamped area was visually inspected and scored.

The evaluation criteria for fingerprint removability by wiping were as follows:

### (Evaluation of fingerprint wiping property: criteria)

5: Not observed at all
4: Almost unobserved
3: Only vaguely visible
2: Visible
1: Distinctly observed

Table 2 below shows the results of the evaluation of abrasion resistance and fingerprint removability by wiping.

**[Table 2]**

| **Example/ Comparative Example No.** | **Surface-treating agent No.** | **Underlayer** | **Fingerprint removability by wiping** | **Water contact angle after 100 times of abrasion** |
|---|---|---|---|---|
| **Example 1** | **2** | **Na-containing silicon dioxide film** | **4** | ○ |
| **Example 2** | **3** | **Na-containing silicon dioxide film** | **4** | ○ |
| **Example 3** | **4** | **Na-containing silicon dioxide film** | **4** | ○ |
| **Example 4** | **5** | **Na-containing silicon dioxide film** | **4** | ○ |
| **Example 5** | **6** | **Na-containing silicon dioxide film** | **2** | ⊚ |
| **Example 6** | **8** | **Na-containing silicon dioxide film** | **4** | ○ |
| **Example 7** | **9** | **Na-containing silicon dioxide film** | **4** | ⊚ |
| **Example 8** | **10** | **Na-containing silicon dioxide film** | **5** | Δ |
| **Example 9** | **11** | **Na-containing silicon dioxide film** | **4** | ○ |
| **Example 10** | **12** | **Na-containing silicon dioxide film** | **2** | ⊚ |
| **Comparative Example 1** | **1** | **Na-containing silicon dioxide film** | **4** | Δ |
| **Comparative Example 2** | **7** | **Na-containing silicon dioxide film** | **5** | Δ |
| **Example 11** | **2** | **Silicon dioxide film** | **4** | ○ |
| **Example 12** | **3** | **Silicon dioxide film** | **4** | ○ |
| **Example 13** | **4** | **Silicon dioxide film** | **4** | Δ |
| **Example 14** | **5** | **Silicon dioxide film** | **4** | ○ |
| **Example 15** | **6** | **Silicon dioxide film** | **2** | ○ |
| **Example 16** | **8** | **Silicon dioxide film** | **4** | ○ |
| **Example 17** | **9** | **Silicon dioxide film** | **4** | ○ |
| **Example 18** | **10** | **Silicon dioxide film** | **5** | × |
| **Example 19** | **11** | **Silicon dioxide film** | **4** | ○ |
| **Example 20** | **12** | **Silicon dioxide film** | **2** | ○ |
| **Comparative Example 3** | **1** | **Silicon dioxide film** | **4** | × |
| **Comparative Example 4** | **7** | **Silicon dioxide film** | **5** | × |
| **Example 21** | **13** | **Na-containing silicon dioxide film** | **4** | ○ |
| **Example 22** | **14** | **Na-containing silicon dioxide film** | **3** | ○ |
| **Example 23** | **15** | **Na-containing silicon dioxide film** | **4** | ○ |
| **Example 23** | **15** | **Silicon dioxide film** | **4** | ○ |
| **Example 24** | **16** | **Na-containing silicon dioxide film** | **2** | ⊚ |
| **Example 25** | **17** | **Na-containing silicon dioxide film** | **4** | ○ |
| **Example 26** | **18** | **Na-containing silicon dioxide film** | **4** | ⊚ |
| **Example 27** | **19** | **Silicon dioxide film** | **5** | **○** |
| **Example 28** | **19** | **Na-containing silicon dioxide film** | **5** | **○** |
| **Example 29** | **20** | **Na-containing silicon dioxide film** | **2** | ⊚ |
| **Example 30** | **21** | **Na-containing silicon dioxide film** | **4** | ○ |
| **Example 31** | **22** | **Na-containing silicon dioxide film** | **4** | ○ |
| **Example 32** | **23** | **Na-containing silicon dioxide film** | **4** | ○ |
| **Example 33** | **24** | **Na-containing silicon dioxide film** | **2** | ⊚ |
| **Example 34** | **25** | **Na-containing silicon dioxide film** | **4** | ○ |
| **Example 35** | **26** | **Na-containing silicon dioxide film** | **4** | ⊚ |
| **Example 36** | **27** | **Na-containing silicon dioxide film** | **5** | Δ |
| **Example 37** | **28** | **Na-containing silicon dioxide film** | **2** | ⊚ |
| **Example 38** | **29** | **Na-containing silicon dioxide film** | **4** | O |
| **Example 39** | **30** | **Na-containing silicon dioxide film** | **4** | ○ |
| **Example 40** | **31** | **Na-containing silicon dioxide film** | **4** | ○ |
| **Example 41** | **32** | **Na-containing silicon dioxide film** | **4** | ⊚ |
| **Example 42** | **33** | **Na-containing silicon dioxide film** | **4** | ⊚ |
| **Example 43** | **34** | **Na-containing silicon dioxide film** | **4** | ⊚ |
| **Example 45** | **35** | **Na-containing silicon dioxide film** | **4** | ⊚ |
| **Example 46** | **36** | **Na-containing silicon dioxide film** | **3** | ⊚ |
| **Example 47** | **37** | **Na-containing silicon dioxide film** | **3** | ⊚ |
| **Example 48** | **38** | **Na-containing silicon dioxide film** | **3** | ⊚ |
| **Example 49** | **39** | **Na-containing silicon dioxide film** | **3** | ○ |
| **Example 50** | **40** | **Na-containing silicon dioxide film** | **3** | ○ |

### Industrial Applicability

According to the composition of the present disclosure, a surface-treating layer exhibiting both friction durability and high fingerprint removability by wiping can be formed. Therefore, the composition of the present disclosure can be suitably utilized in a wide variety of applications.

## Claims

1. A compound comprising:
a silane compound represented by the following formula (1):
R^{A}_{α}-X¹-R^{Si1}_{β} (1)
wherein
R^{A} is R¹ₙₐR²₃₋ₙₐSi-(O)ₚₐ-
R¹ is each independently a group represented by -(R⁴-SiR³₂)ₘₐ-R³,
R⁴ is each independently an oxygen atom or a C₁₋₆ alkylene group,
R³ is each independently a hydrocarbon group or R^{1'},
R^{1'} has the same meaning as R¹,
ma is each independently an integer of 1 to 5,
provided that the number of R^{1'} in R¹ is 20 or less,
R² is each independently a hydrocarbon group,
na is an integer of 1 to 3,
pa is 0 or 1,
X¹ is a di- to decavalent group,
R^{Si1} is a monovalent group comprising a Si atom to which a hydroxyl group or a hydrolyzable group is bonded,
α is an integer of 1 to 9, and
β is an integer of 1 to 9; and
a silane compound represented by the following formula (2):
R⁷⁰-CH=CH-X²-R⁷¹ (2)
wherein
X² is a divalent group,
R⁷⁰ is a hydrogen atom or a methyl group,
R⁷¹ is R^{Si2} or R^{A}, and
R^{Si2} is a monovalent group comprising a Si atom to which a hydroxyl group or a hydrolyzable group is bonded.

2. The composition according to claim 1,
wherein X¹ is a di- to decavalent group comprising -CO-, -COO-, -OCO-, - NR⁴¹-, -CONR⁴¹-, -NR⁴¹CO-, -OCONR⁴¹-, -NR⁴¹COO-, NR⁴¹-CO-NR⁴¹-, -O-, -S-, - CON=, or R^{S},
R⁴¹ is a hydrogen atom, an oxyalkylene-containing group, or a C₁₋₆ alkyl group,
R^{S} is a group represented by the following formula: 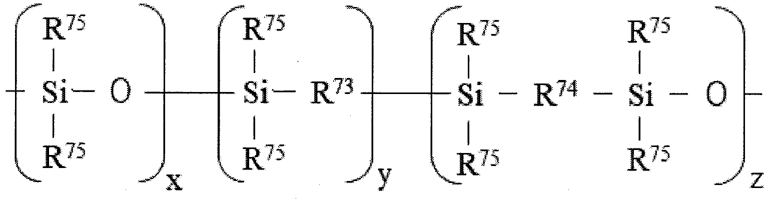 wherein
R⁷³ is each independently a single bond, a C₁₋₁₂ alkylene group, -R⁷⁶-O-R⁷⁶-, - R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁴ is each independently a C₁₋₁₂ alkylene group, -R⁷⁶-O-R⁷⁶-, -R⁷³-R⁷⁷-R⁷⁸-, - R⁷⁸-R⁷⁷-R⁷⁹-R⁷⁷ -R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁶ is each independently a C₁₋₆ alkylene group,
R⁷⁷ is each independently an optionally substituted arylene group,
R⁷⁸ is each independently a single bond or a C₁₋₆ alkylene group,
R⁷⁹ is each independently a single bond or an oxygen atom,
R⁷⁵ is each independently a hydrocarbon group,
x is an integer of 0 to 500,
y is an integer of 0 to 500,
z is an integer of 0 to 500,
x + y + z is 1 or more, and
the occurrence order of the respective repeating units enclosed in parentheses provided with x, y, or z is not limited in the formula.

3. The composition according to claim 1 or 2,
wherein X² is a divalent group comprising -CO-, -COO-, -OCO-, -NR⁴¹-, - CONR⁴¹-, -NR⁴¹CO-, -OCONR⁴¹-, -NR⁴¹COO-, -NR⁴¹-CO-NR⁴¹-, -O-, -S-, -CON=, or R^{S},
R⁴¹ is a hydrogen atom, an oxyalkylene-containing group, or a C₁₋₆ alkyl group,
R^{S} is a group represented by the following formula: 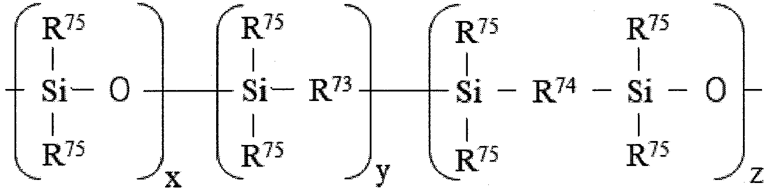 wherein
R⁷³ is each independently a single bond, a C₁₋₁₂ alkylene group, -R⁷⁶-O-R⁷⁶-, - R⁷⁸-R⁷⁷-R⁷⁸-, -R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁴ is each independently a C₁₋₁₂ alkylene group, -R⁷⁶-O-R⁷⁶-, -R⁷⁸-R⁷⁷-R⁷⁸-, - R⁷⁸-R⁷⁷-R⁷⁹-R⁷⁷-R⁷⁸-, -R⁷⁸-R⁷⁷-R⁷⁹-R⁷⁶-R⁷⁹-R⁷⁷-R⁷⁸-, or -R⁷⁹-R⁷⁶-R⁷⁹-R⁷⁷-R⁷⁹-R⁷⁶-R⁷⁹-,
R⁷⁶ is each independently a C₁₋₆ alkylene group,
R⁷⁷ is each independently an optionally substituted arylene group,
R⁷⁸ is each independently a single bond, or a C₁₋₆ alkylene group,
R⁷⁹ is each independently a single bond, or an oxygen atom,
R⁷⁵ is each independently a hydrocarbon group,
x is an integer of 0 to 500,
y is an integer of 0 to 500,
z is an integer of 0 to 500,
x + y + z is 1 or more, and
the occurrence order of the respective repeating units enclosed in parentheses provided with x, y, or z is not limited in the formula.

4. The composition according to any one of claims 1 to 3,
wherein in the formula (1), R^{Si1} is each independently a group represented by the following formula (S1), (S2), (S3), (S4), or (S5): 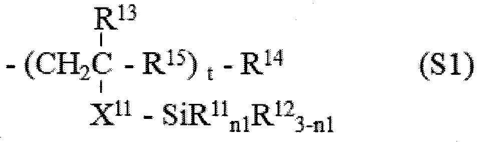
- SiR¹¹ₙ₁R¹²₃₋ₙ₁ (S2)
- SiR^{a1}ₖ₁R^{b1}ₗ₁R^{c1}ₘ₁ (S3)
- CR^{d1}ₖ₂R^{e1}ₗ₂R^{f1}ₘ₂ (S4)
- NR^{g1}R^{h1} (S5)
wherein
R¹¹ is each independently a hydroxyl group or a hydrolyzable group,
R¹² is each independently a monovalent organic group,
n1 is each independently an integer of 0 to 3 for each (SiR¹¹ₙ₁R¹²₃₋ₙ₁) unit,
X¹¹ is each independently a single bond or a divalent organic group,
R¹³ is each independently a hydrogen atom or a monovalent organic group,
t is each independently an integer of 2 or more,
R¹⁴ is each independently a hydrogen atom, a halogen atom, or -X¹¹-SiR¹¹ₙ₁R¹²₃₋ₙ₁,
R¹⁵ is each independently a single bond, an oxygen atom, an alkylene group having 1 to 6 carbon atoms, or an alkyleneoxy group having 1 to 6 carbon atoms,
R^{a1} is each independently -Z¹-SiR²¹ₚ₁R²²_{q1}R²³ᵣ₁;
Z¹ is each independently a divalent organic group,
R²¹ is each independently -Z^{1'}-SiR^{21'}_{p1'}R^{22'}_{q1'}R^{23'}_{r1'};
R²² is each independently a hydroxyl group or a hydrolyzable group,
R²³ is each independently a monovalent organic group,
p1 is each independently an integer of 0 to 3,
q1 is each independently an integer of 0 to 3,
r1 is each independently an integer of 0 to 3,
Z^{1'} is each independently a divalent organic group,
R^{21'} is each independently -Z^{1"}-SiR^{22"}_{q1"}R^{23"}_{r1"};
R^{22'} is each independently a hydroxyl group or a hydrolyzable group,
R^{23'} is each independently a monovalent organic group,
p1' is each independently an integer of 0 to 3,
q1' is each independently an integer of 0 to 3,
r1' is each independently an integer of 0 to 3,
Z^{1"} is each independently a divalent organic group,
R^{22"} is each independently a hydroxyl group or a hydrolyzable group,
R^{23"} is each independently a monovalent organic group,
q1" is each independently an integer of 0 to 3,
r1" is each independently an integer of 0 to 3,
R^{b1} is each independently a hydroxyl group or a hydrolyzable group,
R^{c1} is each independently a monovalent organic group,
k1 is each independently an integer of 0 to 3,
11 is each independently an integer of 0 to 3,
m1 is each independently an integer of 0 to 3,
provided that, in the formula (S3), at least two Si atoms to which a hydroxyl group or a hydrolyzable group is bonded are present,
R^{d1} is each independently -Z²-CR³¹ₚ₂R³²_{q2}R³³ᵣ₂,
Z² is each independently a single bond, an oxygen atom, or a divalent organic group,
R³¹ is each independently -Z^{2'}-CR^{32'}_{q2'}R^{33'}_{r2'},
R³² is each independently -Z³-SiR³⁴ₙ₂R³⁵₃₋ₙ₂,
R³³ is each independently a hydrogen atom, a hydroxyl group, or a monovalent organic group,
p2 is each independently an integer of 0 to 3,
q2 is each independently an integer of 0 to 3,
r2 is each independently an integer of 0 to 3,
Z^{2'} is each independently a single bond, an oxygen atom, or a divalent organic group,
R^{32'} is each independently -Z³-SiR³⁴ₙ₂R³⁵₃₋ₙ₂,
R^{33'} is each independently a hydrogen atom, a hydroxyl group, or a monovalent organic group,
q2' is each independently an integer of 0 to 3,
r2' is each independently an integer of 0 to 3,
Z³ is each independently a single bond, an oxygen atom, or a divalent organic group;
R³⁴ is each independently a hydroxyl group or a hydrolyzable group,
R³⁵ is each independently a monovalent organic group,
n2 is each independently an integer of 0 to 3,
R^{e1} is each independently -Z³-SiR³⁴ₙ₂R³⁵₃₋ₙ₂,
R^{f1} is each independently a hydrogen atom, a hydroxyl group, or a monovalent organic group,
k2 is each independently an integer of 0 to 3,
l2 is each independently an integer of 0 to 3,
m2 is each independently an integer of 0 to 3,
provided that, in the formula (S4), at least two Si atoms to which a hydroxyl group or a hydrolyzable group is bonded are present,
R^{g1} and R^{h1} are each independently -Z⁴-SiR¹¹ₙ₁R¹²₃₋ₙ₁, -Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂, and
Z⁴ is each independently a single bond, an oxygen atom, or a divalent organic group,
provided that, in the formula (S5), at least two Si atoms to which a hydroxyl group or a hydrolyzable group is bonded are present.

5. The composition according to any one of claims 1 to 4,
wherein in the formula (2), R^{Si2} is each independently a group represented by the following formula (S1), (S2), (S3), (S4), or (S5): 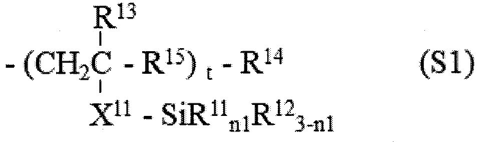
- SiR¹¹ₙ₁R¹²₃₋ₙ₁ (S2)
- SiR^{a1}ₖ₁R^{b1}ₗ₁R^{c1}ₘ₁ (S3)
- CR^{d1}ₖ₂R^{e1}ₗ₂R^{f1}ₘ₂ (S4)
- NR^{g1}R^{h1} (S5)
wherein
R¹¹ is each independently a hydroxyl group or a hydrolyzable group,
R¹² is each independently a monovalent organic group,
n1 is each independently an integer of 0 to 3 for each (SiR¹¹ₙ₁R¹²₃₋ₙ₁) unit,
X¹¹ is each independently a single bond or a divalent organic group,
R¹³ is each independently a hydrogen atom or a monovalent organic group,
t is each independently an integer of 2 or more,
R¹⁴ is each independently a hydrogen atom, a halogen atom, or -X¹¹-SiR¹¹ₙ₁R¹²₃₋ₙ₁,
R¹⁵ is each independently a single bond, an oxygen atom, an alkylene group having 1 to 6 carbon atoms, or an alkyleneoxy group having 1 to 6 carbon atoms,
R^{a1} is each independently -Z¹-SiR²¹ₚ₁R²²_{q1}R²³ᵣ₁;
Z¹ is each independently a divalent organic group,
R²¹ is each independently -Z^{1'}-SiR^{21'}_{p1'}R^{22'}_{q1'}R^{23'}_{r1'};
R²² is each independently a hydroxyl group or a hydrolyzable group,
R²³ is each independently a monovalent organic group,
p1 is each independently an integer of 0 to 3,
q1 is each independently an integer of 0 to 3,
r1 is each independently an integer of 0 to 3,
Z^{1'} is each independently a divalent organic group,
R^{21'} is each independently -Z^{1"}-SiR^{22"}_{q1"}R^{23"}_{r1"};
R^{22'} is each independently a hydroxyl group or a hydrolyzable group,
R^{23'} is each independently a monovalent organic group,
p1' is each independently an integer of 0 to 3,
q1' is each independently an integer of 0 to 3,
r1' is each independently an integer of 0 to 3,
Z^{1"} is each independently a divalent organic group,
R^{22"} is each independently a hydroxyl group or a hydrolyzable group,
R^{23"} is each independently a monovalent organic group,
q1" is each independently an integer of 0 to 3,
r1" is each independently an integer of 0 to 3,
R^{b1} is each independently a hydroxyl group or a hydrolyzable group,
R^{c1} is each independently a monovalent organic group,
k1 is each independently an integer of 0 to 3,
11 is each independently an integer of 0 to 3,
m1 is each independently an integer of 0 to 3,
provided that, in the formula (S3), at least two Si atoms to which a hydroxyl group or a hydrolyzable group is bonded are present,
R^{d1} is each independently -Z²-CR³¹ₚ₂R³²_{q2}R³³ᵣ₂,
Z² is each independently a single bond, an oxygen atom, or a divalent organic group,
R³¹ is each independently -Z^{2'}-CR^{32'}_{q2'}R^{33'}_{r2'},
R³² is each independently -Z³-SiR³⁴ₙ₂R³⁵₃₋ₙ₂,
R³³ is each independently a hydrogen atom, a hydroxyl group, or a monovalent organic group,
p2 is each independently an integer of 0 to 3,
q2 is each independently an integer of 0 to 3,
r2 is each independently an integer of 0 to 3,
Z^{2'} is each independently a single bond, an oxygen atom, or a divalent organic group,
R^{32'} is each independently -Z³-SiR³⁴ₙ₂R³⁵₃₋ₙ₂,
R^{33'} is each independently a hydrogen atom, a hydroxyl group, or a monovalent organic group,
q2' is each independently an integer of 0 to 3,
r2' is each independently an integer of 0 to 3,
Z³ is each independently a single bond, an oxygen atom, or a divalent organic group;
R³⁴ is each independently a hydroxyl group or a hydrolyzable group,
R³⁵ is each independently a monovalent organic group,
n2 is each independently an integer of 0 to 3,
R^{e1} is each independently -Z³-SiR³⁴ₙ₂R³⁵₃₋ₙ₂,
R^{f1} is each independently a hydrogen atom, a hydroxyl group, or a monovalent organic group,
k2 is each independently an integer of 0 to 3,
l2 is each independently an integer of 0 to 3,
m2 is each independently an integer of 0 to 3,
provided that, in the formula (S4), at least two Si atoms to which a hydroxyl group or a hydrolyzable group is bonded are present,
R^{g1} and R^{h1} are each independently -Z⁴-SiR¹¹ₙ₁R¹²₃₋ₙ₁, -Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂, and
Z⁴ is each independently a single bond, an oxygen atom, or a divalent organic group,
provided that, in the formula (S5), at least two Si atoms to which a hydroxyl group or a hydrolyzable group is bonded are present.

6. The composition according to any one of claims 1 to 5, wherein the silane compound represented by the formula (1) compriss an amide bond in X¹.

7. The composition according to any one of claims 1 to 6, wherein the silane compound represented by the formula (2) compriss an amide bond in X².

8. The composition according to any one of claims 1 to 7,
wherein the compound represented by the formula (1) includes one or more compounds selected from the following group (I):
CH₃-[Si(CH₃)₂O]ₙ₁Si(CH₃)₂-(CH₂)_{H1}-C(=O)NHCH₂CH₂CH₂Si(OCH₃)₃
CH₃CH₂CH₂CH₂-[Si(CH₃)₂O]ₙ₁Si(CH₃)₂-(CH₂)_{H1}-C(=O)NHCH₂CH₂CH₂Si(OCH₃)₃
[(CH₃)₃SiO)]₂(CH₃)Si-O-[Si(CH₃)₂O]ₙ₁Si(CH₃)₂-(CH₂)_{H1}- C(=O)NHCH₂CH₂CH₂Si(OCH₃)₃
[(CH₃)₃SiO)]₃Si-O-[Si(CH₃)₂O]ₙ₁Si(CH₃)₂-(CH₂)_{H1}- C(=O)NHCH₂CH₂CH₂Si(OCH₃)₃
CH₃-[Si(CH₃)₂O]ₙ₁Si(CH₃)₂-(CH₂)_{H1}-O-(CH₂)_{H2}-C(=O)NHCH₂CH₂CH₂Si(OCH₃)₃
CH₃CH₂CH₂CH₂-[Si(CH₃)₂O]ₙ₁Si(CH₃)₂-(CH₂)_{H1}-O-(CH₂)_{H2}- C(=O)NHCH₂CH₂CH₂Si(OCH₃)₃
CH₃-[Si(CH₃)₂O]ₙ₁Si(CH₃)₂-(CH₂)_{H1}-Si(OCH₃)₃
CH₃CH₂CH₂CH₂-[Si(CH₃)₂O]ₙ₁Si(CH₃)₂-(CH₂)_{H1}-Si(OCH₃)₃
[(CH₃)₃SiO)]₂(CH₃)Si-O-[Si(CH₃)₂O]ₙ₁Si(CH₃)₂-(CH₂)_{H1}-Si(OCH₃)₃
[(CH₃)₃SiO)]₃Si-O-[Si(CH₃)₂O]ₙ₁Si(CH₃)₂-(CH₂)_{H1}-Si(OCH₃)₃
CH₃-[Si(CH₃)₂O]ₙ₁Si(CH₃)₂-(CH₂)_{H1}-C(=O)NHCH₂CH[CH₂CH₂CH₂Si(OCH₃)₃]₂ CH₃CH₂CH₂CH₂-[Si(CH₃)₂O]ₙ₁Si(CH₃)₂-(CH₂)_{H1}-
C(=O)NHCH₂CH[CH₂CH₂CH₂Si(OCH₃)₃]₂
[(CH₃)₃SiO)]₂(CH₃)Si-O-[Si(CH₃)₂O]ₙ₁Si(CH₃)₂-(CH₂)_{H1}- C(=O)NHCH₂CH[CH₂CH₂CH₂Si(OCH₃)₃]₂
[(CH₃)₃SiO)]₃Si-O-[Si(CH₃)₂O]ₙ₁Si(CH₃)₂-(CH₂)_{H1}- C(=O)NHCH₂CH[CH₂CH₂CH₂Si(OCH₃)₃]₂
CH₃-[Si(CH₃)₂O]ₙ₁Si(CH₃)₂-(CH₂)_{H1}-O-(CH₂)_{H2}- C(=O)NHCH₂CH[CH₂CH₂CH₂Si(OCH₃)₃]₂
CH₃CH₂CH₂CH₂-[Si(CH₃)₂O]ₙ₁Si(CH₃)₂-(CH₂)_{H1}-O-(CH₂)_{H2}- C(=O)NHCH₂CH[CH₂CH₂CH₂Si(OCH₃)₃]₂
CH₃-[Si(CH₃)₂O]ₙ₁Si(CH₃)₂-(CH₂)_{H1}-CH[CH₂CH₂CH₂Si(OCH₃)₃]₂
CH₃CH₂CH₂CH₂-[Si(CH₃)₂O]ₙ₁Si(CH₃)₂-(CH₂)_{H1}-CH[CH₂CH₂CH₂Si(OCH₃)₃]₂
[(CH₃)₃SiO)]₂(CH₃)Si-O-[Si(CH₃)₂O]ₙ₁Si(CH₃)₂-(CH₂)_{H1}- CH[CH₂CH₂CH₂Si(OCH₃)₃]₂
[(CH₃)₃SiO)]₃Si-O-[Si(CH₃)₂O]ₙ₁Si(CH₃)₂-(CH₂)_{H1}-CH[CH₂CH₂CH₂Si(OCH₃)₃]₂
CH₃-[Si(CH₃)₂O]ₙ₁Si(CH₃)₂-(CH₂)_{H1}- C(=O)NHCH₂CH[CH₂CH₂CH₂CH₂CH₂CH₂CH₂CH₂CH₂CH₂CH₂Si(OCH₃)₃]₂
CH₃CH₂CH₂CH₂-[Si(CH₃)₂O]ₙ₁Si(CH₃)₂-(CH₂)_{H1}- C(=O)NHCH₂CH[CH₂CH₂CH₂CH₂CH₂CH₂CH₂CH₂CH₂CH₂CH₂Si(OCH₃)₃]₂
[(CH₃)₃SiO)]₂(CH₃)Si-O-[Si(CH₃)₂O]ₙ₁Si(CH₃)₂-(CH₂)_{H1}- C(=O)NHCH₂CH[CH₂CH₂CH₂CH₂CH₂CH₂CH₂CH₂CH₂CH₂CH₂Si(OCH₃)₃]₂
[(CH₃)₃SiO)]₃Si-O-[Si(CH₃)₂O]ₙ₁Si(CH₃)₂-(CH₂)_{H1}- C(=O)NHCH₂CH[CH₂CH₂CH₂CH₂CH₂CH₂CH₂CH₂CH₂CH₂CH₂Si(OCH₃)₃]₂
CH₃-[Si(CH₃)₂O]ₙ₁Si(CH₃)₂-(CH₂)_{H1}-O-(CH₂)_{H2}- C(=O)NHCH₂CH[CH₂CH₂CH₂CH₂CH₂CH₂CH₂CH₂CH₂CH₂CH₂Si(OCH₃)₃]₂
CH₃CH₂CH₂CH₂-[Si(CH₃)₂O]ₙ₁Si(CH₃)₂-(CH₂)_{H1}-O-(CH₂)_{H2}- C(=O)NHCH₂CH[CH₂CH₂CH₂CH₂CH₂CH₂CH₂CH₂CH₂CH₂CH₂Si(OCH₃)₃]₂
CH₃-[Si(CH₃)₂O]ₙ₁Si(CH₃)₂-(CH₂)_{H1}- CH[CH₂CH₂CH₂CH₂CH₂CH₂CH₂CH₂CH₂CH₂CH₂Si(OCH₃)₃]₂
CH₃CH₂CH₂CH₂-[Si(CH₃)₂O]ₙ₁Si(CH₃)₂-(CH₂)_{H1}- CH[CH₂CH₂CH₂CH₂CH₂CH₂CH₂CH₂CH₂CH₂CH₂Si(OCH₃)₃]₂
[(CH₃)₃SiO)]₂(CH₃)Si-O-[Si(CH₃)₂O]ₙ₁Si(CH₃)₂-(CH₂)_{H1}- CH[CH₂CH₂CH₂CH₂CH₂CH₂CH₂CH₂CH₂CH₂CH₂Si(OCH₃)₃]₂
[(CH₃)₃SiO)]₃Si-O-[Si(CH₃)₂O]ₙ₁Si(CH₃)₂-(CH₂)_{H1}- CH[CH₂CH₂CH₂CH₂CH₂CH₂CH₂CH₂CH₂CH₂CH₂Si(OCH₃)₃]₂
CH₃-[Si(CH₃)₂O]ₙ₁Si(CH₃)₂-(CH₂)_{H1}-C(=O)N[CH₂CH₂CH₂Si(OCH₃)₃]₂
CH₃CH₂CH₂CH₂-[Si(CH₃)₂O]ₙ₁Si(CH₃)₂-(CH₂)_{H1}-C(=O)N[CH₂CH₂CH₂Si(OCH₃)₃]₂
[(CH₃)₃SiO)]₂(CH₃)Si-O-[Si(CH₃)₂O]ₙ₁Si(CH₃)₂-(CH₂)_{H1}- C(=O)N[CH₂CH₂CH₂Si(OCH₃)₃]₂
[(CH₃)₃SiO)]₃Si-O-[Si(CH₃)₂O]ₙ₁Si(CH₃)₂-(CH₂)_{H1}- C(=O)N[CH₂CH₂CH₂Si(OCH₃)₃]₂
CH₃-[Si(CH₃)₂O]ₙ₁Si(CH₃)₂-(CH₂)_{H1}-O-(CH₂)_{H2}-C(=O)N[CH₂CH₂CH₂Si(OCH₃)₃]₂
CH₃CH₂CH₂CH₂-[Si(CH₃)₂O]ₙ₁Si(CH₃)₂-(CH₂)_{H1}-O-(CH₂)_{H2}- C(=O)N[CH₂CH₂CH₂Si(OCH₃)₃]₂
CH₃-[Si(CH₃)₂O]ₙ₁Si(CH₃)₂-(CH₂)_{H1}-N[CH₂CH₂CH₂Si(OCH₃)₃]₂
CH₃CH₂CH₂CH₂-[Si(CH₃)₂O]ₙ₁Si(CH₃)₂-(CH₂)_{H1}-N[CH₂CH₂CH₂Si(OCH₃)₃]₂
[(CH₃)₃SiO)]₂(CH₃)Si-O-[Si(CH₃)₂O]ₙ₁Si(CH₃)₂-(CH₂)_{H1}- N[CH₂CH₂CH₂Si(OCH₃)₃]₂
[(CH₃)₃SiO)]₃Si-O-[Si(CH₃)₂O]ₙ₁Si(CH3)2-(CH₂)_{H1}-N[CH₂CH₂CH₂Si(OCH₃)₃]₂
CH₃-[Si(CH₃)₂O]ₙ₁Si(CH₃)₂-(CH₂)_{H1}-C(=O)NHCH₂C[CH₂CH₂CH₂Si(OCH₃)₃]₃
CH₃CH₂CH₂CH₂-[Si(CH₃)₂O]ₙ₁Si(CH₃)₂-(CH₂)_{H1}- C(=O)NHCH₂C[CH₂CH₂CH₂Si(OCH₃)₃]₃
[(CH₃)₃SiO)]₂(CH₃)Si-O-[Si(CH₃)₂O]ₙ₁Si(CH₃)₂-(CH₂)_{H1}- C(=O)NHCH₂C[CH₂CH₂CH₂Si(OCH₃)₃]₃
[(CH₃)₃SiO)]₃Si-O-[Si(CH₃)₂O]ₙ₁Si(CH₃)₂-(CH₂)_{H1}- C(=O)NHCH₂C[CH₂CH₂CH₂Si(OCH₃)₃]₃
CH₃-[Si(CH₃)₂O]ₙ₁Si(CH₃)₂-(CH₂)_{H1}-O-(CH₂)_{H2}- C(=O)NHCH₂C[CH₂CH₂CH₂Si(OCH₃)₃]₃
CH₃CH₂CH₂CH₂-[Si(CH₃)₂O]ₙ₁Si(CH₃)₂-(CH₂)_{H1}-O-(CH₂)_{H2}- C(=O)NHCH₂C[CH₂CH₂CH₂Si(OCH₃)₃]₃
CH₃-[Si(CH₃)₂O]ₙ₁Si(CH₃)₂-(CH₂)_{H1}-C[CH₂CH₂CH₂Si(OCH₃)₃]₃
CH₃CH₂CH₂CH₂-[Si(CH₃)₂O]ₙ₁Si(CH₃)₂-(CH₂)_{H1}-C[CH₂CH₂CH₂Si(OCH₃)₃]₃
[(CH₃)₃SiO)]₂(CH₃)Si-O-[Si(CH₃)₂O]ₙ₁Si(CH₃)₂-(CH₂)_{H1}- C[CH₂CH₂CH₂Si(OCH₃)₃]₃
[(CH₃)₃SiO)]₃Si-O-[Si(CH₃)₂O]ₙ₁Si(CH₃)₂-(CH₂)_{H1}-C[CH₂CH₂CH₂Si(OCH₃)₃]₃
[(CH₃)₃SiO)]₂(CH₃)Si-(CH₂)_{H1}-C(=O)NHCH₂CH₂CH₂Si(OCH₃)₃
[(CH₃)₃SiO)]₃Si-(CH₂)_{H1}-C(=O)NHCH₂CH₂CH₂Si(OCH₃)₃
[(CH₃)₃SiO)]₂(CH₃)Si-(CH₂)_{H1}-Si(OCH₃)₃
[(CH₃)₃SiO)]₃Si-(CH₂)_{H1}-Si(OCH₃)₃
[(CH₃)₃SiO)]₂(CH₃)Si-(CH₂)_{H1}-C(=O)NHCH₂CH[CH₂CH₂CH₂Si(OCH₃)₃]₂
[(CH₃)₃SiO)]₃Si-(CH₂)_{H1}-C(=O)NHCH₂CH[CH₂CH₂CH₂Si(OCH₃)₃]₂
[(CH₃)₃SiO)]₂(CH₃)Si-(CH₂)_{H1}-CH[CH₂CH₂CH₂Si(OCH₃)₃]₂
[(CH₃)₃SiO)]₃Si-(CH₂)_{H1}-CH[CH₂CH₂CH₂Si(OCH₃)₃]₂
[(CH₃)₃SiO)]₂(CH₃)Si-(CH₂)_{H1}- C(=O)NHCH₂CH[CH₂CH₂CH₂CH₂CH₂CH₂CH₂CH₂CH₂CH₂CH₂Si(OCH₃)₃]₂
[(CH₃)₃SiO)]₃Si-(CH₂)_{H1}- C(=O)NHCH₂CH[CH₂CH₂CH₂CH₂CH₂CH₂CH₂CH₂CH₂CH₂CH₂Si(OCH₃)₃]₂
[(CH₃)₃SiO)]₂(CH₃)Si-(CH₂)_{H1}- CH[CH₂CH₂CH₂CH₂CH₂CH₂CH₂CH₂CH₂CH₂CH₂Si(OCH₃)₃]₂
[(CH₃)₃SiO)]₃Si-(CH₂)_{H1}- CH[CH₂CH₂CH₂CH₂CH₂CH₂CH₂CH₂CH₂CH₂CH₂Si(OCH₃)₃]₂
[(CH₃)₃SiO)]₂(CH₃)Si-(CH₂)_{H1}-C(=O)N[CH₂CH₂CH₂Si(OCH₃)₃]₂
[(CH₃)₃SiO)]₃Si-(CH₂)_{H1}-C(=O)N[CH₂CH₂CH₂Si(OCH₃)₃]₂
[(CH₃)₃SiO)]₂(CH₃)Si-(CH₂)_{H1}-N[CH₂CH₂CH₂Si(OCH₃)₃]₂
[(CH₃)₃SiO)]₃Si-(CH₂)_{H1}-N[CH₂CH₂CH₂Si(OCH₃)₃]₂
[(CH₃)₃SiO)]₂(CH₃)Si-(CH₂)_{H1}-C(=O)NHCH₂C[CH₂CH₂CH₂Si(OCH₃)₃]₃
[(CH₃)₃SiO)]₃Si-(CH₂)_{H1}-C(=O)NHCH₂C[CH₂CH₂CH₂Si(OCH₃)₃]₃
[(CH₃)₃SiO)]₂(CH₃)Si-(CH₂)_{H1}-C[CH₂CH₂CH₂Si(OCH₃)₃]₃
[(CH₃)₃SiO)]₃Si-(CH₂)_{H1}-C[CH₂CH₂CH₂Si(OCH₃)₃]₃ 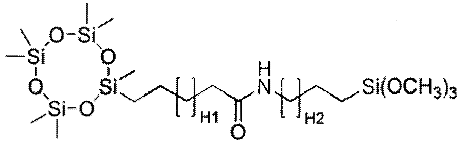 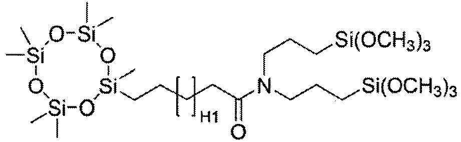 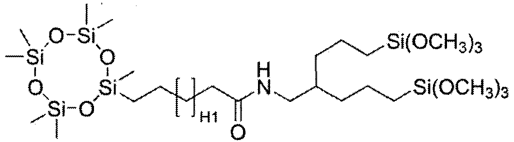 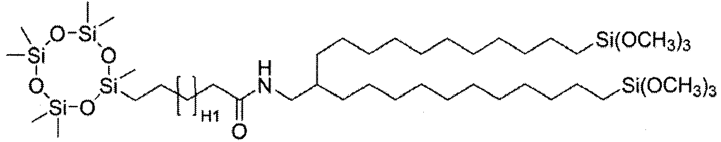 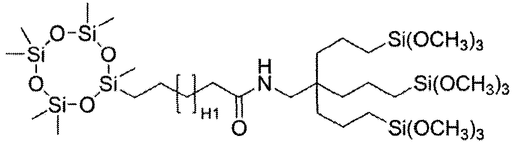
CH₃CH₂CH₂CH₂-[Si(CH₃)₂O]ₙ₁Si(CH₃)₂-(CH₂)_{H1}-O-(CH₂)_{H2}- C(CH₂CH₃)[CH₂OC(=O)NHCH₂CH₂CH₂Si(OCH₃)₃]₂
CH₃-[Si(CH₃)₂O]ₙ₁Si(CH₃)₂-(CH₂)_{H1}-O-(CH₂)_{H2}- C(CH₂CH₃)[CH₂OC(=O)NHCH₂CH₂CH₂Si(OCH₃)₃]₂
CH₃CH₂CH₂CH₂-[Si(CH₃)₂O]ₙ₁Si(CH₃)₂-(CH₂)_{H1}-O-(CH₂)_{H2}- C(CH₂CH₃)[CH₂OC(=O)NHCH₂CH₂OC(=O)CH(CH₃)CH₂Si(OCH₃)₃]₂
CH₃-[Si(CH₃)₂O]ₙ₁Si(CH₃)₂-(CH₂)_{H1}-O-(CH₂)_{H2}- C(CH₂CH₃)[CH₂OC(=O)NHCH₂CH₂OC(=O)CH(CH₃)CH₂Si(OCH₃)₃]₂
CH₃CH₂CH₂CH₂-[Si(CH₃)₂O]ₙ₁Si(CH₃)₂--(CH₂)_{H1}-O-(CH₂)_{H2}- C[CH₂OC(=O)NHCH₂CH₂CH₂Si(OCH₃)₃]₃
CH₃-[(Si(CH₃)₂O)]ₙ₁Si(CH₃)₂-(CH₂)_{H1}-O-(CH₂)_{H2}- C[CH₂OC(=O)NHCH₂CH₂CH₂Si(OCH₃)₃]₃
[CH₃CH₂CH₂CH₂-[(Si(CH₃)₂O)]n₁Si(CH₃)₂-(CH₂)ₙ₁-O-(CH₂)ₘ₂-]₂- C[CH₂OC(=O)NHCH₂CH₂CH₂Si(OCH₃)₃]₂
[CH₃-[(Si(CH₃)₂O)]ₙ₁Si(CH₃)₂-(CH₂)_{H1}-O-(CH₂)_{H2}-]₂- C[CH₂OC(=O)NHCH₂CH₂CH₂Si(OCH₃)₃]₂
CH₃CH₂CH₂CH₂-[Si(CH₃)₂O]ₙ₁Si(CH₃)₂-(CH₂)_{H1}-O-(CH₂)_{H2}- OC(=O)NHCH₂CH₂CH₂Si(OCH₃)₃
CH₃-[Si(CH₃)₂O]ₙ₁Si(CH₃)₂-(CH₂)_{H1}-O-(CH₂)_{H2}-OC(=O)NHCH₂CH₂CH₂Si(OCH₃)₃
CH₃CH₂CH₂CH₂-[Si(CH₃)₂O]ₙ₁Si(CH₃)₂-(CH₂)_{H1}-O-(CH₂)_{H2}- OC(=O)NHCH₂CH₂OC(=O)CH(CH₃)CH₂Si(OCH₃)₃
CH₃-[Si(CH₃)₂O]ₙ₁Si(CH₃)₂-(CH₂)_{H1}-O-(CH₂)_{H2}- OC(=O)NHCH₂CH₂OC(=O)CH(CH₃)CH₂Si(OCH₃)₃
[CH₃CH₂CH₂CH₂-[Si(CH₃)₂O]ₙ₁Si(CH₃)₂-(CH₂)_{H1}-O-(CH₂)_{H2}-]₃C- CH₂OC(=O)NHCH₂CH₂CH₂Si(OCH₃)₃
[CH₃-[Si(CH₃)₂O]ₙ₁Si(CH₃)₂-(CH₂)_{H1}-O-(CH₂)_{H2}-]₃C- CH₂OC(=O)NHCH₂CH₂CH₂Si(OCH₃)₃
[CH₃CH₂CH₂CH₂-[(Si(CH₃)₂O)]ₙ₁Si(CH₃)₂-(CH₂)_{H1}-O- (CH₂)_{H2}-]₂C(CH₂CH₃)[CH₂OC(=O)NHCH₂CH₂CH₂Si(OCH₃)₃]
[CH₃-[(Si(CH₃)₂O)]ₙ₁Si(CH₃)₂-(CH₂)_{H1}-O- (CH₂)_{H2}-]₂C(CH₂CH₃)[CH₂OC(=O)NHCH₂CH₂CH₂Si(OCH₃)₃] 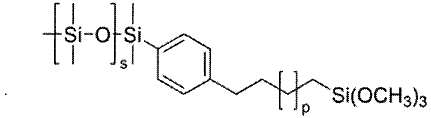 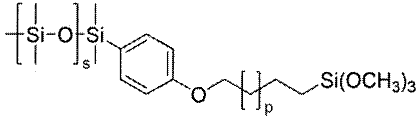 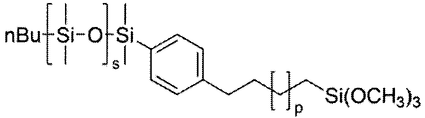 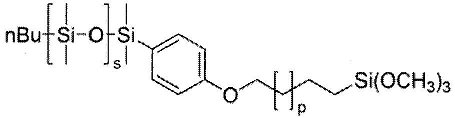 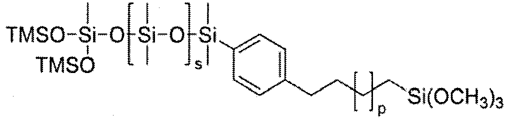 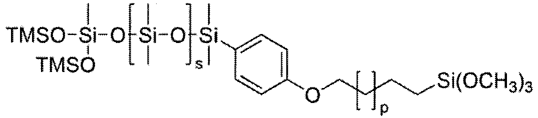 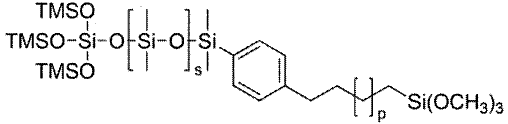 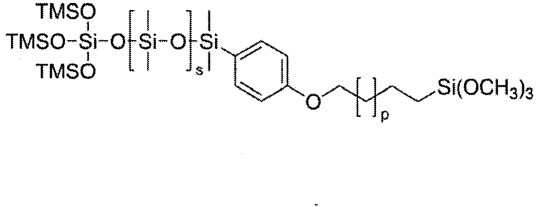 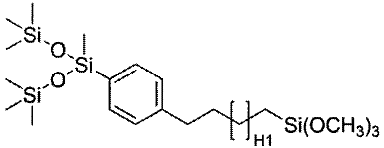 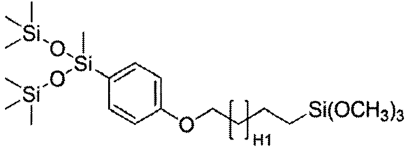 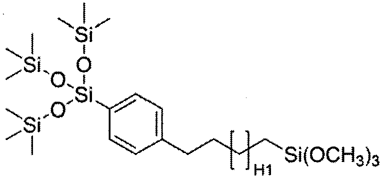 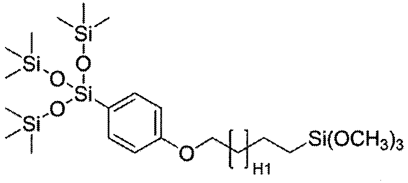 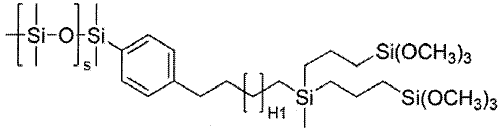 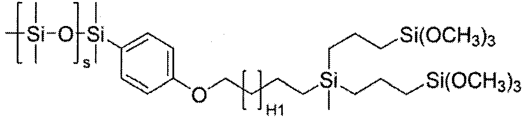 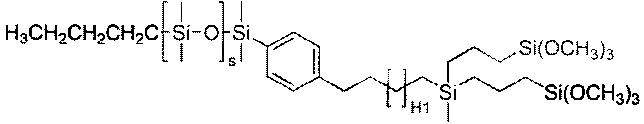 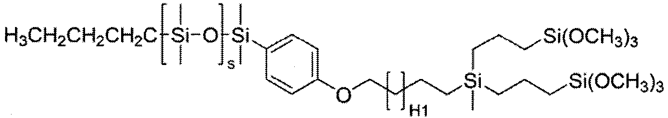 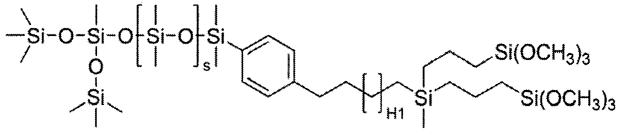 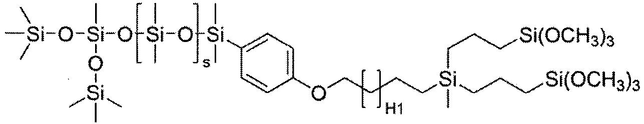 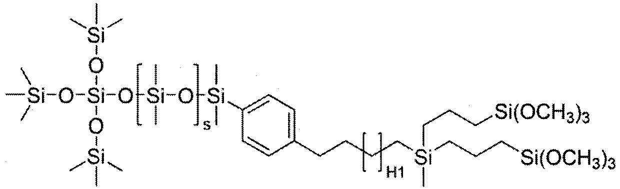 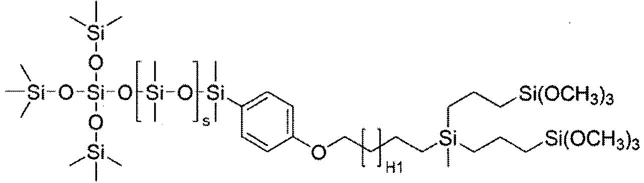 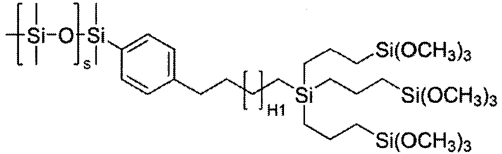 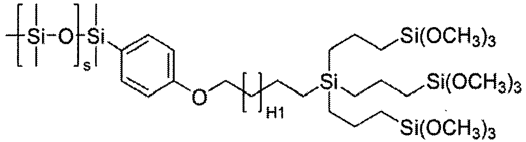 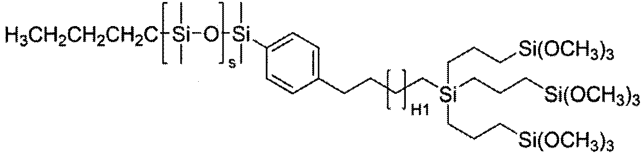 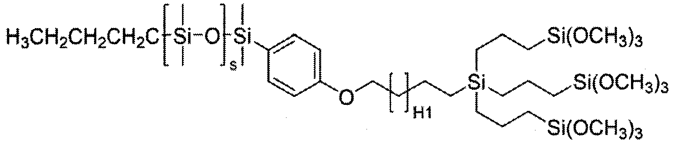 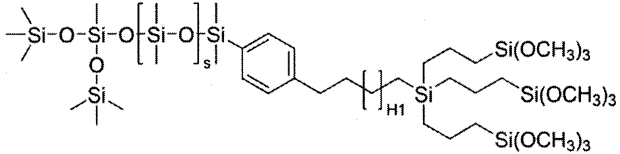 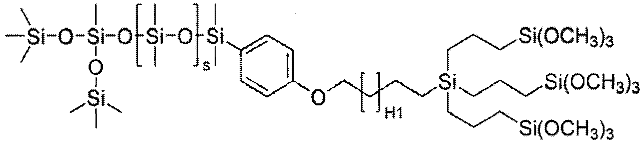 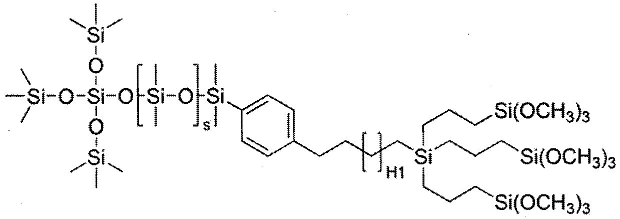 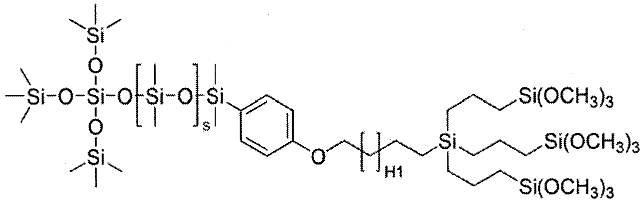
wherein TMS is a trimethylsilyl group, n1 and s are each independently an integer of 0 to 150, and H1 and H2 are each independently an integer of 1 to 50.

9. The composition according to claim 8,
wherein n1 and s are each independently 0 or 1,
p and H1 are each independently 8 to 40, and
H2 is each independently 1 to 10.

10. The composition according to claim 8,
wherein n1 and s are each independently 5 to 100,
p and H1 are each independently 8 to 40, and
H2 is each independently an integer of 1 to 10.

11. The composition according to any one of claims 1 to 10,
wherein the compound represented by the formula (1) includes one or more compounds selected from the following group (I):
(CH₃)₃Si-(OSi(CH₃)₂)_{nI}-(CH₂)₁₀-CON[CH₂CH₂CH₂Si(OCH₃)₃]₂
(CH₃)₃Si-(OSi(CH₃)₂)_{nI}-(CH₂)₂₂-CON[CH₂CH₂CH₂)₃Si(OCH₃)₃]₂
(CH₃)₃Si-(OSi(CH₃)₂)_{nI}-(CH₂)₁₀-CONH-CH₂C[CH₂CH₂CH₂Si(OCH₃)₃]₃
[(CH₃)₃SiO]₂CH₃SiO(Si(CH₃)₂O)ₙ₁Si-(CH₃)₂-(CH₂)₂₂- CONHCH₂CH[CH₂CH₂CH₂Si(OCH₃)₃]₂
CH₃(Si(CH₃)₂O)ₙ₁Si(CH₃)₂(CH₂)₃₄CON((CH₂)₃Si(OCH₃)₃)₂ 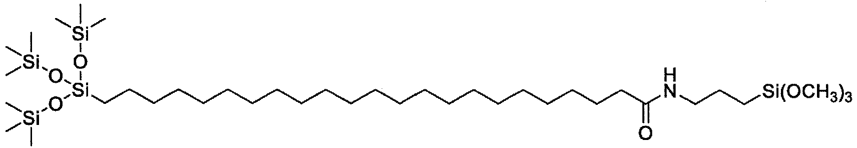 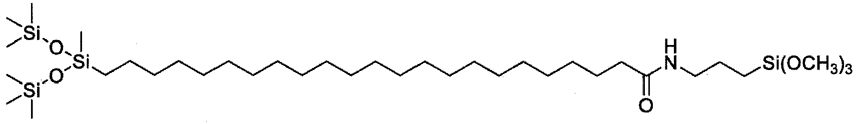
wherein nI each independently represents an integer of 10 to 80.

12. The composition according to any one of claims 1 to 11,
wherein the compound represented by the formula (2) includes one or more compounds selected from the following group (II):
[(CH₃)₃SiO]₂CH₃Si-(OSi(CH₃)₂)_{nII}-(CH₂)₂₂-CONH-CH₂CH(CH₂CH=CH₂)₂
(CH₃)₃Si-(OSi(CH₃)₂)_{nII}-(CH₂)₁₀-CON(CH₂CH=CH₃)₂
(CH₃)₃Si-(OSi(CH₃)₂)_{nII}-(CH₂)₁₀-CONH-CH₂C(CH₂CH=CH₂)₃
(CH₃)₃Si-(OSi(CH₃)₂)_{nII}-(CH₂)₂₂-CONH-CH₂CH(CH₂CH=CH₂)₂ 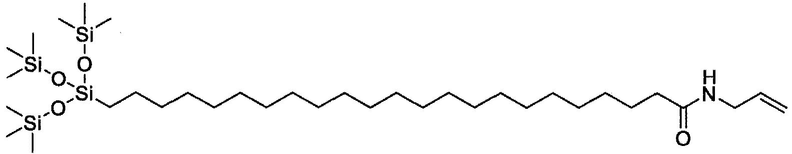 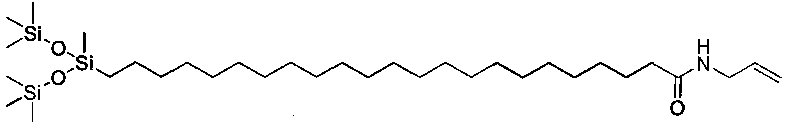 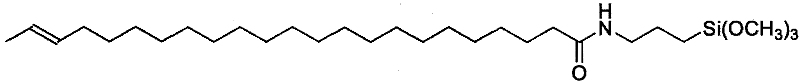 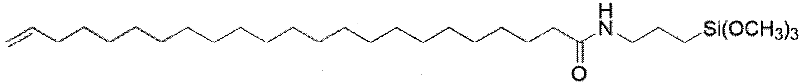 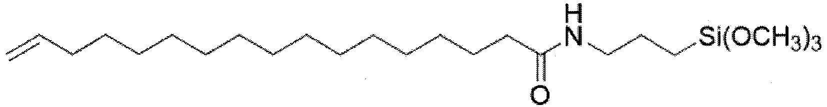 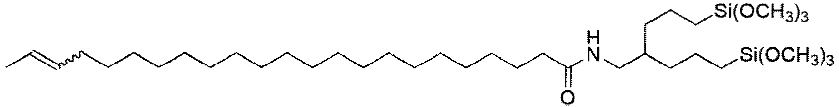 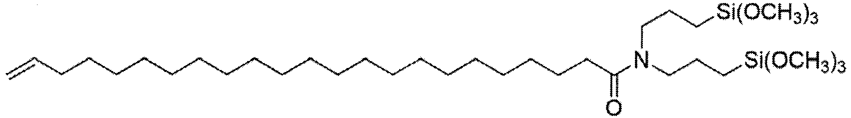 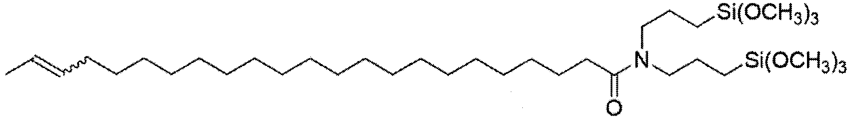 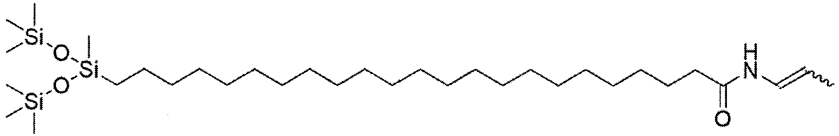
wherein nII each independently represents an integer of 10 to 80.

13. The composition according to any one of claims 1 to 12, wherein a content of the silane compound represented by the formula (2) is 0.01 mol or more and 99.9 mol or less per 100 mol of the silane compound represented by the formula (1).

14. The composition according to any one of claims 1 to 13, wherein a content of the silane compound represented by the formula (2) is 0.01 mol or more and 50.0 mol or less per 100 mol of the silane compound represented by the formula (1).

15. The composition according to any one of claims 1 to 14, wherein a content of the silane compound represented by the formula (2) is 0.01 mol or more and 10.0 mol or less per 100 mol of the silane compound represented by the formula (1).

16. The composition according to any one of claims 1 to 15, wherein a content of the compound represented by the formula (2) is 0.1 to 30% by mass based on a total content of the compound represented by the formula (1) and the compound represented by the formula (2).

17. A surface-treating agent comprising the composition according to any one of claims 1 to 16.

18. The surface-treating agent according to claim 17, comprising a condensed product of the composition according to any one of claims 1 to 16.

19. The surface-treating agent according to claim 17 or 18, which is for vacuum deposition.

20. The surface-treating agent according to claim 17 or 18, which is for wet coating.

21. A pellet comprising the surface-treating agent according to claim 17 or 18.

22. An article comprising a substrate, and a layer formed on the substrate from the surface-treating agent according to any one of claims 1 to 16.

23. The article according to claim 22 comprising, between the substrate and the layer, a silicon oxide-containing intermediate layer.

24. The article according to claim 23, wherein the intermediate layer further comprises an alkali metal atom.

25. The article according to claim 24, wherein the alkali metal atom is at least partially a sodium atom.

26. The article according to any one of claims 22 to 25, which is an optical member.

27. The article according to any one of claims 22 to 25, which is a display.
